(19)

Europäisches
Patentamt
European
Patent Office
Office européen
des brevets

(11) **EP 2 079 049 A1**

(12) **EUROPEAN PATENT APPLICATION**

published in accordance with Art. 153(4) EPC

(43) Date of publication:
**15.07.2009 Bulletin 2009/29**

(51) Int Cl.:
**G06Q 50/00** (2006.01)

(21) Application number: **07831166.9**

(86) International application number:
**PCT/JP2007/071432**

(22) Date of filing: **02.11.2007**

(87) International publication number:
**WO 2008/054001 (08.05.2008 Gazette 2008/19)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **02.11.2006 JP 2006298325**

(71) Applicant: **Intellectual Property Bank Corp.
Tokyo 108-0014 (JP)**

(72) Inventors:
• **MASUYAMA, Hiroaki
c/o International Property Bank Corp.
Tokyo 1080014 (JP)**

• **OHSAKI, Toshiro
Tokyo 1080014 (JP)**
• **HASUKO, Kazumi
Tokyo 1080014 (JP)**

(74) Representative: **Style, Kelda Camilla Karen
Page White & Farrer
Bedford House
John Street
London, WC1N 2BF (GB)**

(54) **PATENT EVALUATING DEVICE**

(57)    A patent evaluating device comprises a data acquiring section (105) for acquiring items of patent data and patent attribute information on each item of patent data in a predetermined technical field from a patent database, a data classifying section (115) for classifying the acquired items of patent data into groups within a predetermined period of time, and an evaluation value calculating section (120) for calculating the evaluation value of each item of the patent data by using the patent attribute information on each of the patent data belonging to each group and by using the value determined for each group. With this, the value of a patent application or a patent right is adequately evaluated according to numerical information objectively determined and according to the progress information of the patent application or the patent right or the content information.

FIG. 1

**Description**

TECHNICAL FIELD

The present invention relates to a technology of evaluating a worth of a patent application or a patent right, and particularly to a technology of evaluating a worth of a patent application or patent right based on historical information or contents information of a plurality of patent applications or patent rights.

BACKGROUND ART

A variety of methods for calculating an economical value of a patent or other intellectual properties is known but there are many difficulties in a practical application. For example, there is a method (DCF method) to calculate a present discounted value from an estimated cash flow generated by an evaluated intellectual property in the future. However, it is pointed out that there are deficiencies in that it requires subjective judgments in calculating the estimated cash flow in the future and in calculating a degree of contribution of the evaluated intellectual property to the cash flow and there is less objectivity.

An intellectual property evaluation device in Japanese Unexamined Patent Application Publication No. 2004-265305 (Patent Document 1) tries to improve objectivity of evaluation to partially solve the problem mentioned above. In Paragraphs 0007 and 0008 of the document, it is disclosed that an evaluation score of each of intellectual property is calculated based on

the number of cases of publicly known intellectual property (the number of cited documents) which are cited as a prior art to the intellectual property to be evaluated (evaluated intellectual property) and

the number of cases of publicly known intellectual property (the number of citing documents) to which the evaluated intellectual property is cited as a prior art.

Based on the calculated evaluation score of the evaluated intellectual property, a total value of the evaluation scores of intellectual properties corresponding to a market corresponding to the evaluated intellectual property, and an economic scale corresponding to the evaluated intellectual property, the economical value of the evaluated intellectual property is calculated. In Paragraphs 0013 and 0014 of the document, it is also disclosed that the number of oppositions against the evaluated intellectual property and the number of invalidation trials against the evaluated intellectual property are reflected to the evaluation score.

[Patent Document 1] Japanese Unexamined Patent Application Publication No. 2004-265305

DISCLOSURE OF THE INVENTION

Problem to be Solved by the Invention

The above-mentioned Japanese Unexamined Patent Application Publication No. 2004-265305 (Patent Document 1) calculates the evaluation score by using patent information such as the number of cited documents, the number of citing documents, the number of oppositions and the number of invalidation trials. However, the calculated evaluation score may not accurately reflect the worth of the intellectual property.

The inventors conducted a concrete verification as to the correlation of the above-mentioned patent information of a patent application and a patent right with the worth of the patent application and the patent right. As a result, patent information has a deviation between technical fields or applications ages. Therefore, the inventors concluded that it is not possible to accurately evaluate the intellectual property by using the patent information as it is.

The present invention is made in consideration of the above, and the object of the present invention is to appropriately evaluate the worth of a patent application or a patent right using patent information.

Means to Solve the Problems

(1) In order to solve the problem mentioned above, the patent evaluation device of an embodiment of the present invention comprises:

means for acquiring patent data of a plurality of patents belonging to a predetermined technical field and patent attribution information of each of the patent data from a patent database;
means for classifying the acquired patent data into groups for each specified period; and
evaluation value calculating means for calculating an evaluation value of each of the patent data by using a value obtained for each group and by using the patent attribution information of each of the patent data belonging to the group.

According to this embodiment of the present invention, an evaluation of a plurality of patents having different characteristics is performed in consideration to the characteristics of each technical field and each application age, and thus an appropriate evaluation of the patent data can be made.

(2) Further, the evaluation value calculating means may calculate the evaluation value of each of the patent data by using a product of

a value obtained by using the patent attribution information of each of the patent data belonging to the group and

a value of a decreasing function of a sum in the group of the values obtained by using the patent attribution information of each of the patent data belonging to the group.

In this configuration, a value reflecting a relative position of each patent data in each group can be obtained as the evaluation value. As a result, a higher weighting is made if the sum of the historical information in the group is lower, and conversely a lower weighting is made if the sum is higher, and thus an appropriate evaluation value of the patent data in the group can be obtained.

(3) Further, the patent attribution information may include historical information of the patent data; the historical information may include at least one of

information showing existence or nonexistence of a specified action for the patent data,

information showing the number of times that the patent data is cited, and

information relating to a period about the patent data; and

the evaluation value calculating means may calculate the evaluation value of each of the patent data by using at least one of the information showing existence or nonexistence of a specified action, the information showing the number of times being cited and the information relating to a period about the patent data and under a rule given for each kind of the historical information.

Since the historical information is not information on the mere number of cases but information reflecting a predetermined judgment by an applicant, the Patent Office, a competitor, etc., the historical information is useful in performing patent evaluation. According to this embodiment of the present invention having the above-mentioned configuration, the historical information is used for the patent evaluation. As a result, an appropriate evaluation of the patent data can be made.

(4) Further, the patent attribution information may include historical information of the patent data; the historical information may include at least one of

information showing existence or nonexistence of a specified action for the patent data,

information showing the number of times that the patent data is cited, and

information relating to a period about the patent data; and

the evaluation value calculating means may

calculate a first evaluation score by using the information showing existence or nonexistence of a specified action under a first rule, calculate a second evaluation score by using the information showing the number of times being cited under a second rule, calculate a third evaluation score by using the information relating to a period about the patent data under a third rule, and

calculate the evaluation value by using the first evaluation score, the second evaluation score and the third evaluation score.

In this configuration, a plurality of contents of the patent attribution information having different characteristics are reflected and thus it is possible to perform the patent evaluation reflecting all evaluation scores calculated according to the kinds of the patent attributions. Therefore, multilateral evaluation of the patent data can be made.

(5) Further, the information showing existence or nonexistence of a specified action may include at least one of

existence or nonexistence of a divisional application,

existence or nonexistence of an accelerated examination,

existence or nonexistence of a patent allowance in appeal,

existence or nonexistence of an opposition dismissed,

existence or nonexistence of an invalidation trial dismissed,

existence or nonexistence of a claim of priority,

existence or nonexistence of a PCT application, and

existence or nonexistence of an inspection of file wrapper;

the information showing the number of times that the patent data is cited may include the number of times being cited in rejections; and

the information relating to a period about the patent data may include a date of submission for the patent data.

In this configuration, the patent evaluation effectively utilizing one or all of the significant historical information among the patent attribution information can be made. As a result of reflecting the judgments by various entities such as the applicant, the Patent Office, the competitor, etc., objectivity is ensured in evaluating the patent data.

(6) Further, the patent attribution information may include historical information of the patent data and contents information of the patent data;

the historical information may include at least one of

information showing existence or nonexistence of a specified action for the patent data,

information showing the number of times that the patent data is cited, and

information relating to a period about the patent data; and

the evaluation value calculating means may calculate the evaluation value by using the contents information and at least one of the information showing existence or nonexistence of a specified action, the information showing the number of times being cited and the information relating to a period about the patent data.

According to this embodiment of the present invention, not only using the historical information but also the contents information is used for evaluation value of the patent data. The reason for this configuration is to enable the evaluation reflecting not only a subjective aspect of patents but also an objective aspect of patents. As a result, an accuracy of the evaluation of the patent data can be improved.

(7) Further, the patent attribution information may include historical information of the patent data and contents information of the patent data;

the historical information may include at least information relating to a period about the patent data and either one of information showing existence or nonexistence of a specified action for the patent data and information showing the number of times that the patent data is cited;

the contents information may include at least one of the number of claims, the total number of pages, and the average number of characters/words per claim; and

the evaluation value calculating means may

calculate a first or second evaluation score by using either one of the information showing existence or nonexistence of a specified action and the information showing the number of times being cited,

calculate a third evaluation score by using both of the information relating to a period about the patent data and the contents information, and

calculate the evaluation value by using the first or second evaluation score and the third evaluation score.

In this configuration, the contents information of each of the patent data is added to the information about a period which is tend to be uniformly given to every patent data regardless of whether the application is old or new. As a result, an appropriate evaluation can be made even for the patent data which is new and has less historical information.

(8) Further, the evaluation value calculating means may calculate a logarithm of the evaluation value for each of the patent data and standardize the calculated logarithm within all of the acquired patent data in the predetermined technical field to calculate a standardized evaluation value.

In this configuration, the standardized evaluation value of the patent data is calculated and relative comparison of the patent data between different technical fields, in which it is normally difficult to compare, is possible.

(9) Further, the patent attribution information may include historical information of the patent data;

the historical information may include at least

information showing the number of times that the patent data is cited in the examination of patent applications of other companies and

information showing the number of times that the patent data is cited in the examination of other patent applications of one's own company; and

the evaluation value calculating means may

calculate an evaluation score by using a value of an increasing function, of the information showing the number of times that the patent data is cited in the examination of patent applications of other companies and the information showing the number of times that the patent data is cited in the examination of other patent applications of one's own company, which is influenced larger from the former than the latter, and

calculate the evaluation value of each of the patent data by using the evaluation score.

The number of times being cited has a high correlation with the worth of a patent. However, this fact is not sufficient to reflect the number of times being cited to an appropriate evaluation. According to the inventors' verification, in the number of times being cited in the examination of the patent applications of the other companies (citation to the other company), and the number of times being cited in the examination of other patent applications of one's own company (citation to one's own company), it is concluded that the correlation between the latter and the worth of patent is significantly high. The invention cited in the examination of other patent applications of one's own company is conjectured to be a basic invention which constitutes a core in the operation art of one's own company in many cases. There is a high possibility of recognizing that one's own company has already applied for such a basic invention and having applied also for the improvement art and having aimed at construction of a strong patent portfolio.

According to this embodiment, by dividing the number of times being cited into the citation to the other company and the citation to one's own company and making the latter number of times reflect in the evaluation value more greatly, an appropriate evaluation of the patent application or the patent right can be made.

(10) Other embodiments of the present invention relate to an evaluation method comprising the same steps as the step executed by one of the above-mentioned devices, and an evaluation program causing a computer to execute the same processes as the processes executed by one of the above-mentioned devices. This program may be the one which is stored in a recording medium such as FD, CDROM or DVD, or which is transmitted and received via a network.

BRIEF DESCRIPTION OF THE DRAWINGS

FIG. 1 is a functional block diagram of a patent evaluation device according to one embodiment of the present invention.

FIG. 2 is a hardware configuration diagram of an information processing unit 1 according to the embodiment.

FIG. 3 is a flow chart showing an outline process of the patent evaluation device according to the embodiment.

FIG. 4 is a flow chart showing the details of historical information setting process of an initial-setting phase A1 among processes executed by the patent evaluation device of the embodiment.

FIG. 5 is a table showing the relation between various evaluation items and a maintenance ratio of a patent right for every elapsed year.

FIG. 6 is a graphic chart showing the relation between various evaluation items and a maintenance ratio of a patent right for every elapsed year.

FIG. 7 is a figure showing schematically an example of a data structure of historical information among the patent attribution information stored in a storage unit according to the embodiment.

FIG. 8 is a figure showing schematically an example of a data structure of contents information among the patent attribution information stored in the storage unit according to the embodiment.

FIG. 9 shows a table showing an evaluation value computed result when changing an analysis object population's extraction range in the embodiment.

FIG. 10 is a flow chart showing the details of a process in which the patent evaluation device calculates the evaluation value of each patent data in the embodiment.

FIG. 11 is a graphic chart showing the number of cases distribution of a deviation value calculated directly based on an evaluation raw score calculated and a deviation value calculated after making logarithm of the evaluation raw score in the embodiment.

FIG. 12 is a figure showing an example of an output result in the embodiment.

FIG. 13 is a figure showing schematically an example of a data configuration of the historical information of a first modified example of the embodiment of the present invention.

FIG. 14 is a flow chart showing a process of a second modified example of the embodiment of the present invention.

FIG. 15 is a flow chart showing a process of a third modified example of the embodiment of the present invention.

FIG. 16 is a flow chart showing a procedure of a process acquiring patent data of a fourth modified example of the embodiment of the present invention.

FIG. 17 is a flow chart showing the procedure of the process acquiring patent data of the fourth modified example of the embodiment of the present invention.

FIG. 18 is a graphic chart showing a result of analyzing the relation of the existence or nonexistence of the historical information and the maintenance ratio of a patent right in the United States patent.

FIG. 19 is a figure showing schematically an example of a data configuration of the historical information of a fifth modified example of the embodiment of the present invention.

FIG. 20 is a figure showing schematically an example of a data configuration of the contents information of the fifth modified example of the embodiment of the present invention.

FIG. 21 is a flow chart showing the details of a process for calculating the evaluation value of each patent data executed by the patent evaluation device of the fifth modified example of the embodiment of the present invention.

FIG. 22 is a flow chart showing the details of a process for calculating the evaluation value of each patent data executed by the patent evaluation device of the fifth modified example of the embodiment of the present invention.

FIG. 23 is a flow chart showing an example of a concrete procedure of a process for acquiring an analysis object population in analysis of the United States patent.

FIG. 24 is a figure showing an example of a hierarchical structure of a US Patent Classification.

FIG. 25 is a functional block diagram of a sixth modified example of the embodiment of the present invention.

FIG. 26 is a flow chart showing a procedure of a process for obtaining a weighted score of the patent score of the sixth modified example of the embodiment of the present invention.

FIG. 27 is a scatter diagram explaining the usability of the sum of the weighted score for each enterprise.

FIG. 28 is a flow chart showing a procedure of a process for calculating a weighted stock score of total effective patent of a seventh modified example of the embodiment of the present invention.

FIG. 29 is a flow chart showing a procedure of a process for calculating a weighted score average of effective patents of the seventh modified example of the embodiment of the present invention.

FIG. 30 is a graphic chart showing the relation between the evaluation value in the time of the past, and the patent right maintenance ratio which became clear after that.

FIG. 31 is a graphic chart showing the distribution of the evaluation value (deviation value) for patents awarded one of patent contests.

FIG. 32 is a graphic chart showing the distribution of the evaluation value (deviation value) for patents included in one of patent pools.

EXPLANATIONS OF LETTERS OR NUMERALS

1: Information processing unit
2: Storage unit
3: Input unit
4: Output unit
100: Control section
105: Data acquiring section
110: Initial setting section
115: Data classification section
120: Evaluation value calculation section
125: Deviation value calculation section
130: Output section

BEST MODE FOR CARRYING OUT THE INVENTION

< 1. Schematic Configuration of Patent Evaluation Device >

An embodiment(s) of the present invention will be described below with reference to accompanying drawings. First of all, a schematic configuration of a patent evaluation device to which an embodiment of the present invention is applied will be explained.

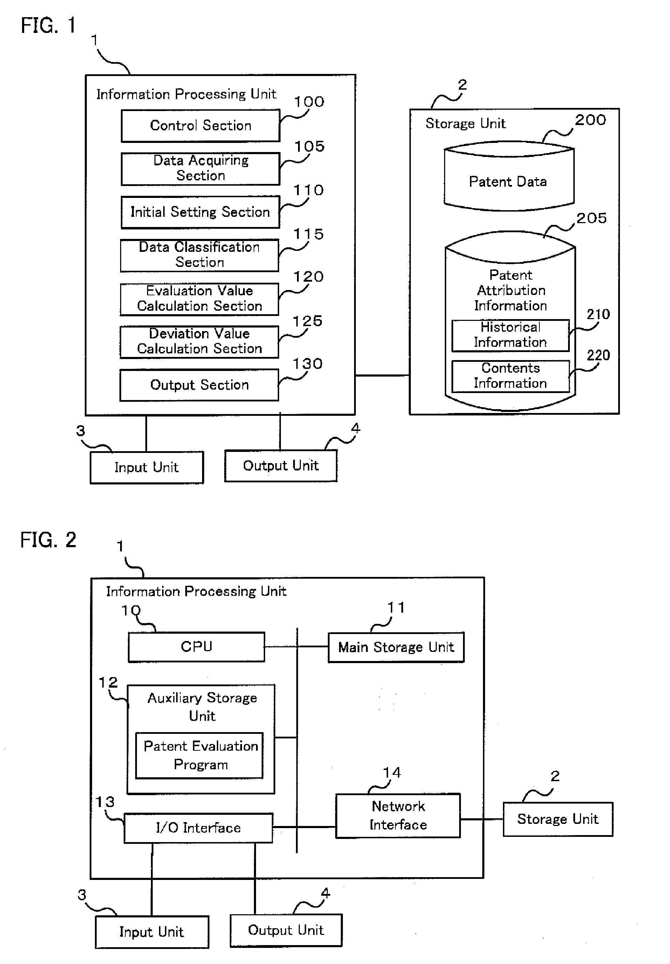

FIG. 1 is a functional block diagram of a patent evaluation device to which one embodiment of the present invention is applied.

As shown in FIG. 1, the patent evaluation device includes an information processing unit 1, a storage unit 2, an input unit 3, and an output unit 4. The information processing unit 1 evaluates patent data, such as a Patent Gazette. The storage unit 2 stores a variety of information of patent data 200 etc. of an evaluation target. The input unit 3 receives various requests from an analyst. The output unit 4 outputs a patent evaluation result executed by the information processing unit 1.

In the following, it is assumed that the information processing unit 1 and the storage unit 2 are connected to a network, such as a Local Area Network (LAN). Moreover, it is assumed that the information processing unit 1 and the input unit 3 are connected locally, and the information processing unit 1 and the output unit 4 are connected locally.

The information processing unit 1 includes a control section 100, a data acquiring section 105, an initial setting section 110, a data classification section 115, an evaluation value calculation section 120, a deviation value calculation section 125, and an output section 130.

The control section 100 controls an operation of the whole information processing unit 1. Moreover, the control section 100 receives various requests from an analyst through the input unit 3. For example, the control section 100 receives a request input by an analyst which specifies a technical field of patent data of an evaluation target.

The data acquiring section 105 accesses the storage unit 2 to store various kinds of data in the storage unit 2 and to read data stored in the storage unit 2. For example, a data acquiring section 105 receives the technical field required by the user (analyst) to which patent data for evaluation belongs, through the control section 100. The data acquiring section 105 accesses the storage unit 2 to read patent data, which belongs to the received technical field, from patent data 200 stored in the storage unit 2. Furthermore, the data acquiring section 105 reads patent attribution information 205 corresponding to the read patent data. Historical information 210 and contents information 220 are included in the patent attribution information, and the details are mentioned later.

The initial setting section 110 executes initial setting of the patent evaluation device as a process of the previous step of a patent evaluation process. More specifically, the initial setting section 110 chooses evaluation items used for patent evaluation, and generates patent attribution information used for patent evaluation.

The data classification section 115 classifies the patent data read by the data acquiring section 105 into a group for every prescribed period. For example, the data classification section 115 classifies the read patent data into groups for every application year.

The evaluation value calculation section 120 calculates an evaluation value of each patent data by using the historical information 210 included in the patent attribution information of each patent data belonging to the group for every group. In this way, the historical information is used for the evaluation of patent data because the historical information is considered to be effective when performing the patent evaluation. That is, it is because the historical information is not the information on the mere number of cases but information reflecting judgment by an applicant, the Patent Office, and a competitor, etc. As a result, according to this embodiment, the worth of patent data can be evaluated more appropriately.

Furthermore, in this embodiment, the evaluation value calculation section 120 uses the contents information 220 in addition to the historical information 210 for calculation of the evaluation value of patent data. This configuration is made to be able to perform evaluation which considers not only the subjective aspect of patent but also the objective aspect of patent. As a result, the evaluation accuracy of patent data can be improved.

The deviation value calculation section 125 calculates the deviation value in each applicable group or in the overall acquired patents in regard to the evaluation value of each patent data calculated by the evaluation value calculation section 120.

The output section 130 outputs the evaluation value and the deviation value of patent data of the evaluation target calculated above to the output unit 4. For example, if the output unit 4 is a display, the output section 130 generates image data showing the evaluation value and the deviation value of patent data, and outputs the generated image data on the output unit 4. On the other hand, when the output unit 4 is a printer, the output section 130 generates print data showing the evaluation value and the deviation value of patent data, and outputs the generated print data to the output unit 4.

The storage unit 2 is a unit for storing the patent data 200, such as a Patent Gazette, and the patent attribution information regarding the patent data. The storage unit 2 includes, for example, a DVD-ROM drive, and DVD-ROM, HDD, etc.

In addition, in this embodiment, the patent data 200 of subject of search is beforehand stored in the storage unit 2. The process for registering the patent attribution information 205 into the storage unit 2 will be mentioned later.

The input unit 3 is a unit for receiving various function selection of the patent evaluation device, and instructions of the patent data of evaluation target. The input unit 3 includes a hard switch, such as a scroll key and a scale change key, and a joystick, etc. The output unit 4 is a unit for receiving the data from the information processing unit 1 to output. For example, the output unit 4 includes a liquid crystal display, a printer, etc.

< 2. Hardware Configuration of Information Processing Unit >

Next, a hardware configuration of the information processing unit 1 according to this embodiment will be explained.

FIG. 2 is a hardware configuration chart of the information processing unit 1 according to this embodiment.

As shown in FIG. 2, the information processing unit 1 includes: a central processing unit (CPU) 10; a main storage unit 11, such as a random access memory (RAM); an auxiliary storage unit 12, such as HDD; an I/O interface 13; and a network interface 14. The I/O interface 13 controls the transmission and reception of data executed between the information processing unit and peripheral devices (here, the peripheral devices are the input unit 3 and the output unit 4). The network interface 14 controls the transmission and reception of data executed between the information processing unit and a device (here, the device is the storage unit 2) connected to the network.

Here, a program (patent evaluation program) for realizing a function of each part (the control section 100, the data acquiring section 105, the initial setting section 110, the data classification section 115, the evaluation value calculation section 120, the deviation value calculation section 125, and the output section 130) shown in FIG. 1 is stored in the auxiliary storage unit 12.

The function of each part (the control section 100, the data acquiring section 105, the initial setting section 110, the data classification section 115, the evaluation value calculation section 120, the deviation value calculation section 125, and the output section 130) shown in FIG. 1 is realized by loading the patent evaluation program stored in the auxiliary storage unit 12 to the main storage unit 11 and executing the loaded program by the CPU 10.

< 3. Outline of Process >

Next, the outline of the process executed by the patent evaluation device according to this embodiment will be explained.

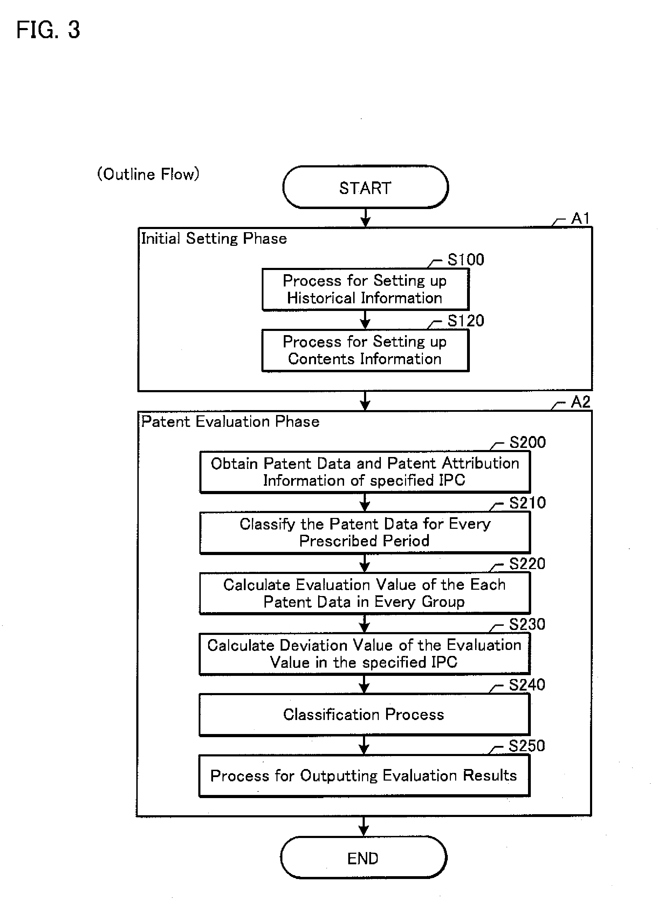

FIG. 3 is a flow chart showing an outline process of the patent evaluation device according to this embodiment.
As shown in FIG. 3, the schematic flow executed by the patent evaluation device is classified at an initial setting phase A1 for initial setting of the patent evaluation device, and a patent evaluation phase A2 which actually performs patent evaluation.

In the initial setting phase A1, a process (S100) for setting up the historical information used for patent evaluation, and a process (S120) for setting up the contents information used for patent evaluation are executed, by the initial setting section 110.

In the patent evaluation phase A2, a process (S200) for obtaining the patent data 200 and the patent attribution information 205 of specified IPC by the data acquiring section 105, a process (S210) for classifying the patent data for every prescribed period by the data classification section 115, a process (S220) for calculating the evaluation value of each patent data for every group by the evaluation value calculation section 120, a process (S230) for calculating the deviation value in the specified IPC of the evaluation value by the deviation value calculation section 125, a process (S240) for executing the classification of the patent data based on this deviation value, and a process (S250) for outputting the classified patent data by the output section 130, are performed.

< 4. Details of Process of Initial Setting Phase >

Next, the details of initial setting phase A1 will be explained among the processes executed by the patent evaluation device according to this embodiment.

< 4-1. Historical Information Setting Process >

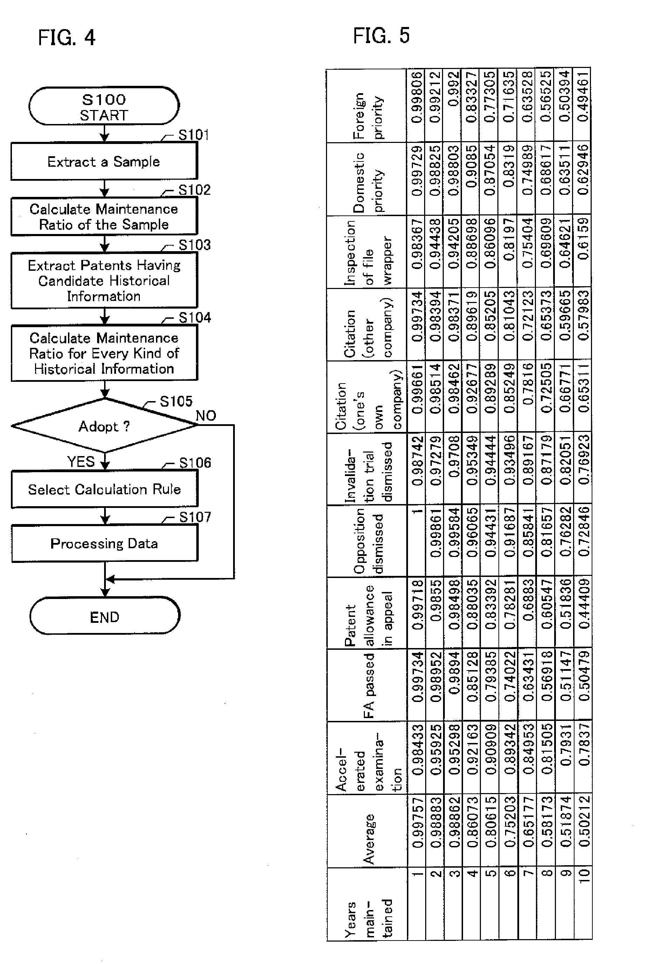

FIG. 4 is a flow chart showing the details of the historical information setting process of the initial setting phase A1 among the processes executed by the patent evaluation device according to this embodiment.

In historical information setting process, first of all, a plurality of patent data which have been registered for patent right establishment at the same period is extracted as a sample, in order to choose the evaluation items used for patent evaluation (S101).
If the sample is extracted, the maintenance ratio after registration for the patent right establishment is calculated with respect to the whole sample (S102).
Next, the patent having the historical information which constitutes an adoption candidate is extracted out of this sample (S103).
Next, the maintenance ratio for every elapsed year after registration for the patent right establishment is calculated for every kind of historical information with respect to the patent having the extracted historical information (S104).

It is determined whether or not the historical information is adopted as evaluation items based on the maintenance ratio of the whole sample and the maintenance ratio of the patent having the historical information (S105). In order to maintain a patent right, it is necessary to pay a maintenance fee for every fixed period after registration for the patent right establishment. As the years to maintain a patent right become longer, a maintenance cost increases more. Therefore, it is general that only the patent with the economic value corresponding to a maintenance cost should be maintained. Then, in order to know how the historical information is related to economic value of patent, the relation of the historical information and the maintenance ratio of patent should be observed.

As a specific example of a method of determining adoption or rejection of evaluation items, a plurality of patent data which have been registered for the patent right establishment at the same period is taken as a sample. In regard to this sample, there is the method of calculating the maintenance ratio after the registration for the patent right establishment to which the historical information corresponding to a certain evaluation items was given, and adopting the evaluation items showing the maintenance ratio significantly higher than the maintenance ratio of an average of the whole sample.
Determination as to whether or not the maintenance ratio is significantly high is performed for example as follows.
It is determined that the average maintenance ratio of the patent to which the historical information (i) was given is significantly higher than the average maintenance ratio of the whole sample, when satisfying the following equation:

$$R(i) \pm dR(i) > Ravg \pm dRavg,$$

where the average maintenance ratio of the patent group to which arbitrary historical information (i) is given is R(i), the standard deviation is dR(i), the average maintenance ratio of the whole sample is Ravg, and the standard deviation is dRavg. Practically, dRavg is vanishingly small and

$$R(i) - dR(i) \geq Ravg$$

may be used.

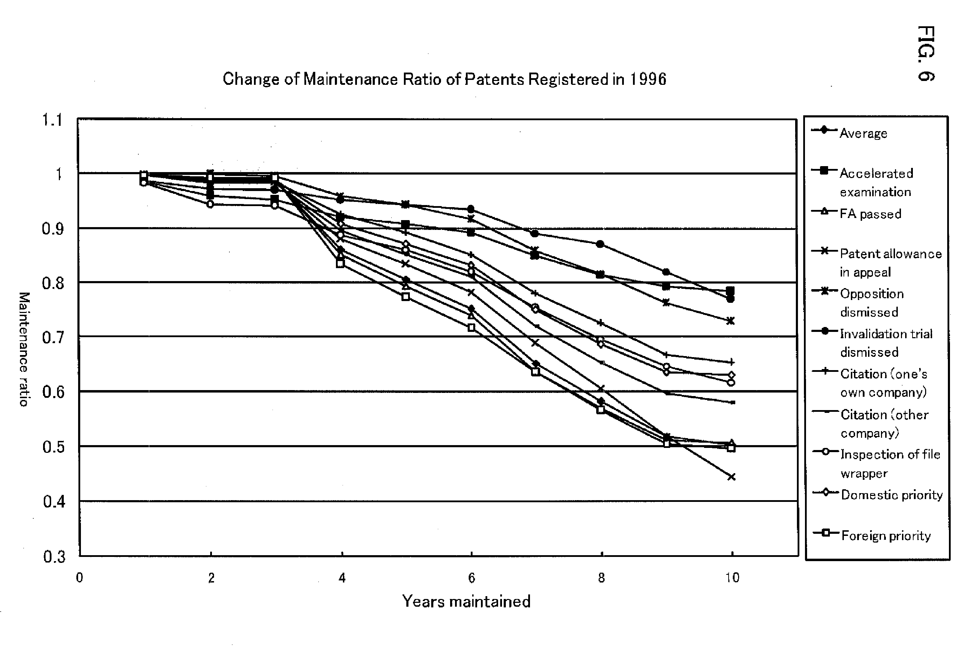

Here, a table shown in FIG. 5 shows the relation of the various evaluation items and the maintenance ratio of the patent right for every elapsed year obtained by the initial setting section 110, and FIG. 6 expresses this data in a graphic chart. The table shown in FIG. 5 makes each line maintenance years, and each row is composed as evaluation items, and the numerical value corresponding to them shows the average maintenance ratio for every evaluation items and every year. This table and this graphic chart show the maintenance ratios of about 100,000 patent rights which have been registered for the patent right establishment in Japan in 1996 for every elapsed years and every evaluation items after registration for the patent right establishment. The maintenance ratios are reduced generally as time passes immediately after registration for the patent right establishment. However, about the patent which has been subjected to a trial for invalidation, an accelerated examination request, an opposition to the grant of patent, etc., it is understood that its maintenance ratio is remarkably high. The patent cited and accessed also has a high maintenance ratio. On the other hand, as for the patent of first action (FA) passed (patent which resulted in the decision of a patent grant without receiving the notice of preliminary rejection), it is understood that the maintenance ratio is not high. In the example shown in the figure, the evaluation items are chosen as follows. That is, the initial setting section 110 chooses "request for accelerated examination," "patent allowance in appeal," "opposition dismissed," "invalidation trial dismissed," "domestic priority," "foreign priority," "inspection of file wrapper," "citation (one's own company)," and "citation (other company)," which are items having a high correlation with the maintenance ratio, as the evaluation items used for evaluation of patent data. Moreover, the initial setting section 110 does not choose "FA passed" whose correlation with the maintenance ratio is low as evaluation items.

As another method for determining adoption of evaluation items, it is possible to calculate a correlation of the data of each of historical information with the maintenance ratio of patents with respect to the above samples and selecting an evaluation item which has a significant correlation with the maintenance ratio of patents.

If it is determined not to adopt the historical information (S105: NO), the process is ended and if necessary the same process for another historical information is executed.

If it is determined to adopt the historical information (S105: YES), the process for processing the concrete data of each selected evaluation items is executed. In processing data, first of all, a calculation rule for obtaining for the evaluation score from each evaluation item is selected from a plurality of calculation rules stored beforehand, for each evaluation items adopted above (S106). Examples for a plurality of calculation rules are mentioned later.

In regard to the patent attribution information 205 of all the patent data 200 stored in the storage unit 2, the corresponding historical information is processed to be stored in the storage unit 2 so that it may become applicable to the selected calculation rule (S107).

< 4-2. Contents Information Setting Process >

Next, the contents information setting process of the initial setting phase A1 will be explained among the processes executed by the patent evaluation device. Moreover, in the following explanation, the kind of contents information used for the evaluation of patent data is determined in advance.

First, the initial setting section 110 accesses the storage unit 2, and reads patent data of evaluation target.

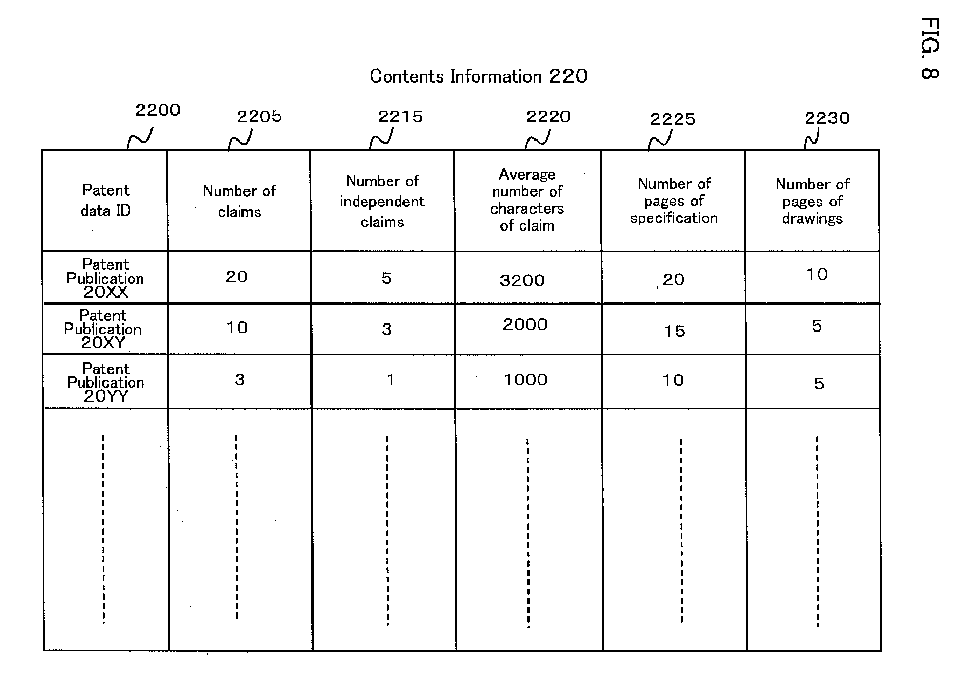

Next, the initial setting section 110 generates contents information used for patent evaluation by using the read patent data. More specifically, the initial setting section 110 generates contents information (refer to FIG. 8) by using bibliographic information included in each patent data and substance information of each patent data. The bibliographic information includes information, such as the number of claims, the number of pages, filing date. The substance information includes information on claims, a specification, a drawing, etc. The contents information is associated with the number of claims, the number of independent claims, the average number of characters per claim, the number of pages of specification, and the number of pages of drawings, for every patent data. The initial setting section 110 stores the generated above-mentioned contents information in the storage unit 2.

Moreover, in the above, the situation in which the kind of contents information used for the evaluation of patent data is determined in advance is shown. However, the present invention is not limited to this situation. For example, it is possible to select the contents information in the following procedure by the initial setting section 110.

Specifically, the initial setting section 110 reads a plurality of patent data and, by using the read patent data, generates contents information (the number of claims, the number of independent claims, the average number of characters per claim, the number of pages of specification, the number of pages of drawings, the number of applicants, the number of inventors, etc.) for each patent data.

Next, the initial setting section 110 executes the following process about each of contents information. First, the initial setting section 110 classifies a plurality of patent data for every amount of the contents information (for example, it classifies a plurality of patent data into patent data of the contents information not less than a predetermined value, and patent data of the contents information less than a predetermined value), and calculates the average maintenance ratio of the patent data classified for every amount of contents information. Next, the initial setting section 110 obtains for the difference of the average maintenance ratio obtained for every amount of contents information, and chooses the contents information as using for patent evaluation if the difference is larger than a threshold. That is, the initial setting section 110 chooses information that the difference of the maintenance ratio by the difference of contents information is larger, from plural kinds of contents information (the number of claims, the number of independent claims, the average number of characters per claim, the number of pages of specification, the number of pages of drawings, the number of applicants, the number of inventors, etc.).

For example, when contents information is "the number of claims," the initial setting section 110 classifies a plurality of patent data into patent data with "the numbers of claims" more than the predetermined number of claims, and patent data with "the numbers of claims" less than the predetermined number of claims, and obtains for the maintenance ratio respectively. If the difference of the maintenance ratio obtained is larger than a threshold, "the number of claims" is chosen as the contents information used for patent evaluation.

< 4-3. Example of Patent Attribution Information >

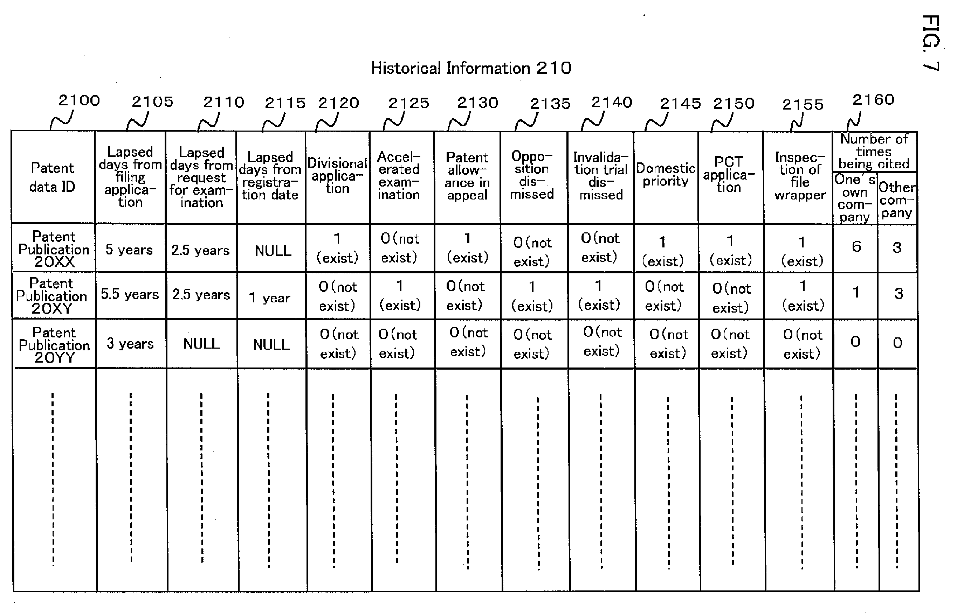

FIGS. 7 and 8 show an example of patent attribution information stored in the storage unit of this embodiment. Patent data ID 2100 and 2200 (publication number etc.) and the patent attribution information about each patent application are stored about plenty of patent applications or patent rights (for example, all the about 4 million patent applications in Japan for the past ten years), respectively.

FIG. 7 is a figure showing schematically an example of the data structure of the historical information 210 among the patent attribution information.

"Lapsed days from application" 2105, "lapsed days from request for examination" 2110, and "lapsed days from registration date" 2115 are information about the period of the patent data, among the historical information shown in FIG. 7. The "lapsed days from application" is based at a filing date, the "lapsed days from request for examination" is based on a date of request for examination, the "lapsed days from registration date" is based on a date of registration for the patent right establishment, and information calculated the lapsed days to an evaluation date or the predetermined date near an evaluation date, is respectively stored in the storage unit 2. The "lapsed days from request for examination" about the patent application of which a request for examination is not yet submitted is set as NULL, and the "lapsed days from registration date" about the patent application which is not yet registered for patent right establishment is set as NULL. Moreover, the numerical value is not limited to the number of days, the number of months or the number of years is also possible.

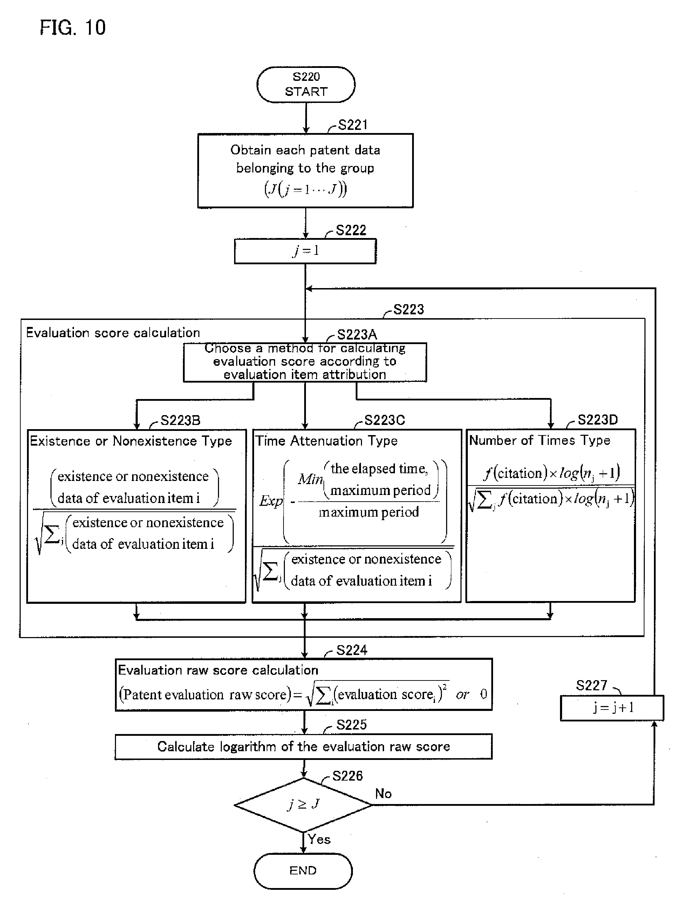

Among the historical information shown in FIG. 7, "divisional application" 2120, "accelerated examination" 2125, "patent allowance in appeal" 2130, "opposition dismissed" 2135 "invalidation trial dismissed" 2140, "domestic priority" 2145, "PCT application" 2150, and "inspection of file wrapper" 2155 are information showing the existence or nonexistence of a specified action for the patent data. The "divisional application" is based on whether the divisional application is done as application of a basis in the concerned patent application; the "accelerated examination" is based on whether the accelerated examination of the concerned patent application is done; the "patent allowance in appeal" is based on whether the appeal against decision of rejection is claimed about the concerned patent application, and is based on whether the patent allowance decision is done in the concerned appeal; the "opposition dismissed" is based on whether the patent opposition is done about the concerned patent, and is based on whether the maintenance decision is done; the "invalidation trial dismissed" is based on whether the trial for invalidation of patent is claimed about the concerned patent, and is based on whether the maintenance decision is done in the concerned trial; the "domestic priority" is based on whether the concerned patent application is accompanied by the claim of priority based on previous patent application etc.; the "PCT application" is based on whether the concerned patent application enters national phase of the international application based on Patent Cooperation Treaty; and the "inspection of file wrapper" is based on whether the request for inspection is done about the concerned patent application; "1" is given for example when the specified action is done respectively, and "0" is given for example when the specified action is not done. Each of this information is extracted from the historical information of each patent application. This historical information 210 is used for the valuation of patent data (the procedure of evaluation process of patent data using the historical information 210 will be explained in detail in FIG. 10 mentioned later).

Thus, this embodiment evaluates the patent data by using the historical information 210 in which judgment by various subjects, such as an applicant, the Patent Office, and a competitor, is reflected. As a result, objectivity can be ensured when evaluating patent data.

Moreover, in this embodiment, the situation in which the patent data is evaluated by using the historical information shown in FIG. 7 is explained. However, the present invention is not limited to this situation. For example, it is possible to evaluate the patent data by using at least one of patent data shown in FIG. 7.

As the data used for calculation of the evaluation value, it does not limit to above "1" or "0." Since the "inspection of file wrapper" 2155 or the "patent allowance in appeal" 2130 for example are in the tendency for a relation with the maintenance ratio to be thin compared with other evaluation items, the value of 0.5 times may be used for the above-mentioned value, or the value of 0.25 times may be used for the above-mentioned value about latter case, for example. Moreover, about the "patent allowance in appeal" 2130, the "opposition dismissed" 2135, and the "invalidation trial dismissed" 2140, the value of 0.5 times the case after termination of appeal or decision may be used, before termination of appeal or decision, or when it is under trial examination. Moreover, in place of the above-mentioned "domestic priority," it is possible to quantify whether a domestic or foreign priority is claimed or not into 1 or 0.

Moreover, "existence or nonexistence of submission of evidence for exceptions to lack of novelty," "existence or nonexistence of submission of publication (submission of information)," and "existence or nonexistence of reconsideration by examiner before appeal" may be used in addition to the above as information showing the existence or nonexistence of a specified action for the concerned patent data.

"The number of times being cited" 2160 are information showing the number of times of a citation of the concerned patent data among the historical information shown in FIG. 7. The number of times that the publication of patent applications or Gazette containing the Patent of the concerned patent application is cited in the notice of preliminary rejection for the patent application of the other company is given as the number of times of citation in the "other company." Furthermore, the number of times that the publication of patent applications or Gazette containing the Patent of the concerned patent application is cited in the notice of preliminary rejection for other patent applications of one's own company is given as the number of times of citation in "one's own company." These items of information are calculated by extracting a cited document number (publication number, such as a publication of patent application) from the historical information of the patent data which became a decision of rejection among all the patent data stored in the storage unit 2, specifying the patent data which should give the number of times being cited from this cited document number, and counting the number of times being cited about the each specified patent data, for example.

FIG. 8 is a figure showing schematically an example of a data structure of the contents information 220 among the patent attribution information.

Among the contents information shown in FIG. 8, the "number of claims" 2205 is information showing the number of claims of the concerned patent application, and the "number of independent claims" 2215 is information showing the number of independent claims of the concerned patent application. The "average number of characters of claim" 2220 is information showing the average number of characters (or the number of words) per one claim of the concerned patent application. The "number of pages of specification" 2225 is information showing the number of specification pages or the number of gazette pages of the concerned patent application. The "number of pages of drawings" 2230 is information showing the number of sheets of drawings or the number of drawings of the concerned patent application. These items of information are extracted from the publication of patent applications of each patent application, and other patent data. Other examples for the contents information include the number of applicants (the more the number of co-applicants, the higher the maintenance ratio), the number of inventors (the more the number of co-inventors, the higher the maintenance ratio), the number of kinds of assigned IPC codes (the closer to the average, the higher the maintenance ratio), etc.

According to this embodiment, the relative evaluation in the analysis object population can be performed objective by calculating the evaluation value based on the numerical information which anyone can obtain and becomes settled uniquely about patent application or patent right.

Thus, based on the numerical information which becomes settled objective based on the historical information or the contents information of patent application or patent right, the present invention which can evaluate worth of patent application or patent right appropriately is suitable for evaluating promptly a huge number of patent applications or patent rights. Therefore, for example, it can perform simply finding out "a precious" from a huge number of patent applications or patent rights, and understanding rough positioning within the analysis object population as a previous step which performs detailed evaluation about a certain patent application or patent right.

< 5. Details of Process of Patent Evaluation Phase >

Next, the details of the patent evaluation phase A2 will be explained among the processes executed by the patent evaluation device according to this embodiment.

< 5-1. Obtaining Patent Data>

Returning to FIG. 3, in the patent evaluation phase A2, the data acquiring section 105 obtains the IPC code input by the analyst through the input unit and, based on the specified IPC code, acquires patent data 200 and patent attribution information 205 as the analysis object population from the storage unit 2 (S200).

The IPC code is preferably specified down to the subgroup level and the data acquiring section 105 accesses the storage unit 2. If the number of patent data within the subgroup is less than a predetermined number (1000 for example), it is preferable to acquire patent data of higher IPC hierarchy one by one to acquire the predetermined number. Experience shows that the evaluation value is stable (low variation of the evaluation value depending on the number of the analysis object population) if the number of the analysis object population is 1000 or more. However, even if the analysis object population is enlarged to higher hierarchy, it is preferable not to enlarge over IPC subclass to prevent different field of technology.

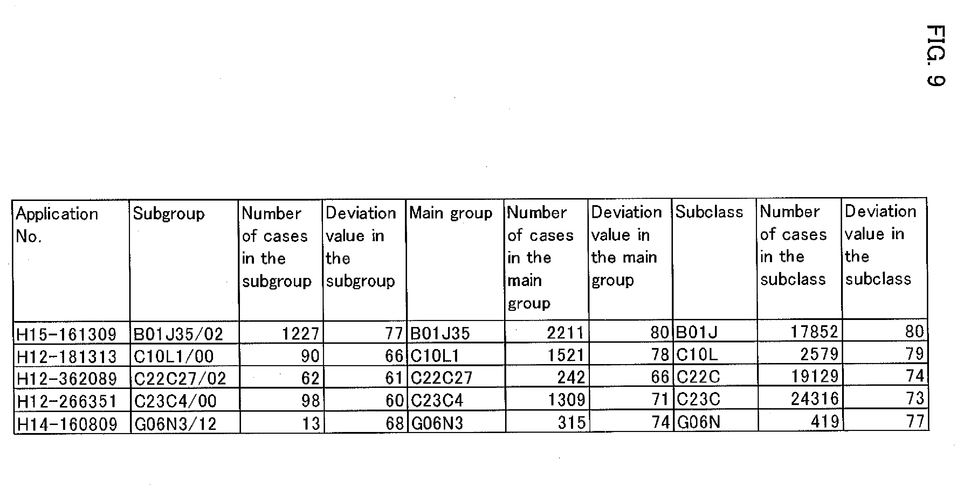

The table shown in FIG. 9 is a table showing the evaluation value computed result when changing an analysis object population's extraction range in the embodiment. When an IPC subgroup, a main group, and a subclass are chosen as an analysis object population, it is shown about five technical fields how the evaluation value of a certain patent is changed.

In the field of IPC "B01J35/02," 1227 patent data exists in the subgroup. The evaluation value (deviation value) of a certain patent application in this subgroup does not have a great difference with the evaluation value of the main group or the subclass, and is stable.

On the other hand, in the field of IPC "C10L1/00," only 90 patent data exists in this subgroup. The evaluation value of a certain patent application in this subgroup had a great difference with the evaluation value in the main group. When the analysis object population is extended to the main group, it became 1521 cases at last, the evaluation value of a certain patent application in this main group does not have a great difference with the evaluation value in the subgroup, and it is stabilized.

This drawing shows only five examples in order to simplify explanation, but also in other fields, there is a tendency in which the evaluation value is not stable with the analysis object population less than 1000 and is stable with 1000 or more.

< 5-2. Classification of Patent Data >

Next, data classification section 115 classifies patent data into group t for every prescribed period (for example, every application year, every year to which a priority date belongs, etc.) based on information on a filing date of application or information on a priority date among the patent attribution information about the obtained patent data (S210).

< 5-3. Calculation of Evaluation Value >

Next, the evaluation value calculation section 120 calculates an evaluation value of each patent data (S220). The details of this process will be explained based on FIG. 10.

FIG. 10 is a flow chart showing the details of a process in which the patent evaluation device according to this embodiment calculates the evaluation value of each patent data.

The evaluation value calculation section 120 obtains the patent attribution information 205 about the patent data 200 belonging to the group generated by the classification of S210 (S221). Here, the each obtained individual group consists of J patent data (patent data of J. In order to distinguish J each, suffix j (where j= 1, 2, ..., J) is used.

When J patent data is obtained, it is preferable that "the total value for J of the existence data of evaluation items," etc. used by below-mentioned S223B to S223D be beforehand calculated, by using the patent attribution information 205 of these J patent data.

Next, variable j is set to 1 (S222), and the evaluation raw score of patent data j is calculated as follows.

First of all, the evaluation score calculating method beforehand set up for every evaluation items is chosen about I evaluation items i (where i= 1, 2, ..., I) chosen in initial-setting phase A1 (S223A).

There are the following three kinds in the evaluation score calculating method in this embodiment. That is, for example, S223B [Existence or Nonexistence Type] is chosen for information showing the existence or nonexistence of a specified action for the concerned patent data, such as "divisional application" 2120, "accelerated examination" 2125, "patent allowance in appeal" 2130, "opposition dismissed" 2135, "invalidation trial dismissed" 2140, "domestic priority" 2145, "PCT application" 2150, "inspection of file wrapper" 2155 etc. Furthermore, for example, S223C [Time Attenuation Type] is chosen for information about the period of the concerned patent data, such as "lapsed days from application" 2105, "lapsed days from request for examination" 2110, "lapsed days from registration date" 2115, etc. Moreover, for example, S223D [Number of Times Type] is chosen for information showing the number of times of a citation of the concerned patent data such as "the number of times being cited" 2160 etc.

After the evaluation score calculating method is chosen, the evaluation score of patent data j is calculated about each of I evaluation items i (S223B, S223C, and S223D).

< 5-3-1. Existence or Nonexistence Type >

About evaluation items i in which S223B [Existence or Nonexistence Type] is chosen, an evaluation score is calculated with the following [Equation 1], for example.

[Equation 1]

$$\frac{\left(\text{existence or nonexistence data of evaluation item i}\right)}{\sqrt{\sum_{j}\left(\text{existence or nonexistence data of evaluation item i}\right)}}$$

About "divisional application," for example, the "existence or nonexistence data of evaluation item i" arranged here at the numerator is set to "1" if divisional application is filed as mentioned above, and is set to "0" if divisional application is not filed.

The positive square root of the total value within the group involved of the above "existence or nonexistence data of evaluation item i" is placed at the denominator. Therefore, the denominator is large when a large number of patent data of evaluation-items relevance exists in group involved, and the denominator is small when a small number of patent data of evaluation-items relevance exists in group involved. The tendency for the patent right maintenance ratio to be high has the patent having the evaluation items with a small number of cases exist ("invalidation trial dismissed" etc.) rather than the patent having the evaluation items with a large number of cases exist ("inspection of file wrapper" etc.). Thereby, weighting of each evaluation items is performed automatically. Moreover, totaling is performed for each the group for every prescribed period. Therefore, even in many cases, for example, much historical information is added to an old patent, and historical information is not yet added to the just published new patent, the tendency for giving low evaluation to a new patent for only the above reason can be reduced.

Although the attribution information of patent data is useful to relative evaluation within an analysis object population, suitable evaluation cannot be performed if the patent application or the patent right in this analysis object population is treated equally. According to this embodiment, an analysis object population is classified into the group for every period, and the value obtained for every this group classified is used as the denominator. Thereby, suitable relative evaluation is achieved in the analysis object population including the patent application or the patent right of a different period.

Moreover, when the worth of one patent in the same period group with few patent applications is compared with the worth of one patent in another same period group with increased patent applications, for example in a certain technical field, in many cases the former worth is higher. On the other hand, for example, when the patent application which is in an early period from laying-open of application is compared with the patent application which has elapsed several years, a possibility that the historical information of having received the request for inspection or the like will be given to the patent application which has elapsed several years is inevitably higher. Even so, it is a mistake to evaluate low the patent application which is in an early period from laying-open of application directly. When there are few patent applications which received the request for inspection, for example, in the patent application in the same period group, the patent application which received the request for inspection is a patent application with an exceptionally high attention degree, and should be evaluated highly. On the contrary, when there are many patent applications which received the request for inspection for example, in the patent application in another same period group, the patent application which received the request for inspection should not be highly evaluated by only the reason for having received the request for inspection. According to this embodiment, the evaluation score is calculated by the product of the value obtained using the patent attribution information of each patent data belonging to this group, and the value of the decreasing function of a value which totaled the values obtained using the patent attribution information of each patent data belonging to this group for this group. According to this configuration, the value in consideration of relative positioning of each patent data in each group can be calculated as the evaluation value. As a result, suitable evaluation of the patent application or a patent right in the analysis object document group is achieved by performing higher weighting when the total value in said the same time group of the numerical information based on historical information is lower, and conversely performing lower weighting when the total value concerned is higher.

< 5-3-2. Time Attenuation Type>

About evaluation items i in which S223C [Time Attenuation Type] is chosen, an evaluation score is calculated with the next [Equation 2], for example.

[Equation 2]

$$\frac{Exp\left(-\dfrac{Min(\text{the elapsed time, maximum period})}{\text{maximum period}}\right)}{\sqrt{\sum_j(\text{existence or nonexistence data of evaluation item i})}}$$

"Exp (- (Min (the elapsed time, maximum period)) / maximum period)" placed here at the numerator is a value divided the value of the smaller one between the concerned "lapsed days (years conversion value) from request for examination" and "maximum periods" by the "maximum period," and performed the multiplication of -1, and is the value performed the exponentiation of the number e of Napier, about the "lapsed days from request for examination," for example. The "maximum period" is assumed to the maximum years from a filing date of an application to expiration of a patent right duration (in the current law of Japan, it is 20 years), for example. In the case of the "lapsed days from registration date," the same formula is also used, and the "maximum period" is assumed to the maximum years from a filing date of an application to expiration of a patent right duration (in the current law of Japan, it is 20 years), for example. Although in the case of the "lapsed days from filing date of application," the same formula is also used, the "maximum period" is assumed to the years from a filing date of an application to the time limit of a request for examination (in the current law of Japan, it is 3 years), for example. According to this, although the value of a numerator is a value near Exp (0)=1 while elapsed time is short, it decreases with the passage of time, and if it becomes the elapsed time ≥ maximum period, it will reduce even to Exp(-1)=1/e. The advantages made into an exponential function are introducing the depreciation effect over value, and abolishing dispersion of evaluation value distribution and made to smooth distribution. The "lapsed days from request for examination," the "lapsed days from filing date of application," and the "lapsed days from registration date" are the basic evaluation items corresponding to many patents, and it can avoid tying of the patent group to which only these 3 evaluation items correspond.

Although the same formula as above S223B [Existence or Nonexistence Type] is placed at the denominator, as for the "lapsed days from request for examination," for example, if the request for examination is done about the concerned patent application, a value is set to 1 for example, and if the request for examination is not yet done, a value is set to 0 for example, and then the values are totaled within group involved and a positive square root is taken. As for the "lapsed days from registration date," if registration for the patent right establishment is done about the concerned patent application, a value is set to 1 for example, and if registration for the patent right establishment is not yet done, a value is set to 0 for example, the values totaled within group involved and taken the positive square root is constitute the denominator. Since all the patent data corresponds about the "lapsed days from application," if the existence or nonexistence data of the concerned evaluation items is set to 1, the value of the denominator becomes equal to the positive square root of the number of the patent data in the group. In any case, the denominator is large when much patent data of evaluation-items relevance exists in group involved, and the denominator is small when the patent data of evaluation-items relevance in group involved exists only in a small number. As mentioned above, since the "lapsed days from request for examination," the "lapsed days from filing date of application," and the "lapsed days from registration date" are the basic evaluation items corresponding to many patents, allocation of marks of these evaluation items becomes small easily.

Moreover, in this embodiment, it is also possible to use average lapsed years for each evaluation item as the denominator. An appropriate evaluation of patent data is possible by using the number of relevant cases as the denominator as mentioned above but it is possible to further improve evaluation accuracy by using the average lapsed years as the denominator.

It is preferable that the evaluation score calculated by this S223C [Time Attenuation Type] be further corrected by contents information.

In the following example, the average number of characters per claim of patent data (refer to 2220 of FIG. 8), the number of pages (refer to 2225 of FIG. 8) of patent data, and the number of claims of patent data (refer to 2205 of FIG. 8) are used from among the contents information 220 shown in FIG. 8.

When evaluating by only historical information, since there is no historical information expected to be given from now on in the patent application or the patent right soon after laying-open of application or registration for the patent right establishment, it may be unable to evaluate correctly. Therefore, in order to correct this, it is preferable that the evaluation by the historical information be added with the contents information. However, the contents information has correlation with the maintenance ratio in the tendency which is not high like the historical information. Therefore, if the contents information is added carelessly, the accuracy of evaluation may become low on the contrary.

Then, in order for the historical information to limit the influence of the contents information to evaluation of the fully given patent on a small scale and to make the contents information reflect in evaluation of the patent with insufficient historical information effectively, the multiplication of the correction coefficient based on the contents information is performed only to the evaluation score calculated by this S223C [Time Attenuation Type].

Thus, according to this embodiment, the contents information of each patent data is added to the information about the period which is tend to be uniformly given for every patent data regardless of whether the application is old or new. As a result, suitable evaluation can be performed also with the patent data in which the historical information consists of new application not much given.

Specifically, the multiplication of $a_1 \times a_2 \times a_3$ (where: $a_1 = 2^{1/3}$ (in the case of the average number of characters per claim is not more than an average) or $a_1 = 2^{-1/3}$ (in the case of the average number of characters per claim is not less than an average); $a_2 = 2^{1/3}$ (in the case of the total number of pages is not less than an average) or $a_2 = 2^{-1/3}$ (in the case of the total number of pages is not more than an average); and $a_3 = 2^{1/3}$ (in the case of the number of claims is within $\pm 1$ standard deviation of averages) or $a_3 = 2^{-1/3}$ (in the case of the number of claims is outside a mentioned range)) is preferably performed to each of evaluation scores of the above [Equation 2]. $a_1 \times a_2 \times a_3$ is limited to the correction made into the maximum by assuming the maximum of $a_1$, $a_2$, and $a_3$ into $2^{1/3}$, respectively. However, values of $a_1$, $a_2$, and $a_3$ are not limited to the above and different values with each other may be used based on the correlation of the contents information with the maintenance ratio.

In addition, in the embodiment, the value of $a_1 \times a_2 \times a_3$ becomes 2 at the maximum but it is just an example.

< 5-3-3. Number of Times Type >

About evaluation items i in which S223D [Number of Times Type] is chosen, the evaluation score is calculated with the next [Equation 3], for example.

[Equation 3]

$$\frac{f(\text{citation}) \times log(n_j + 1)}{\sqrt{\sum_j f(\text{citation}) \times log(n_j + 1)}}$$

"f(citation) $\times$ log($n_j$+1)" placed here at the numerator represents the multiplication of the weight f(citation) to the logarithm (natural logarithm, for example) of the value which added 1 to the concerned "the number of times $n_j$ being cited," about "the number of times being cited," for example. The present inventors' verification shows that do not stay in citing existence or nonexistence, but the maintenance ratio of patent right changes also with the number of times. However, since the both do not have proportionality, and the increase in the maintenance ratio by the increase in the number of times being cited showed the tendency of leveling off gradually, it is presupposed that logarithm is taken.

The positive square root of the total value within the group involved of the above "f(citation) $\times$ log($n_j$+1)" is placed at the denominator. Therefore, the denominator becomes large when much patent data cited by other applications exists in group involved, and the denominator becomes small when the patent data cited by other applications in group involved exists only in a small number.

Although weight f (citation) can use arbitrary positive numbers in the numerator and denominator of the above [Equation 3], it is preferable to distinguish by the number of times $n_{jother}$ cited by the patent application of the other company (the number of times of the citation to the other company), and the number of times $n_{jself}$ cited by other patent applications of one's own company (the number of times of the citation to one's own company), and to give different weights to each logarithm. In this case, the next [Equation 4] is used instead of the above [Equation 3].

[Equation 4]

$$\frac{f(\text{citation}_{other}) \times log(n_{jother} + 1) + f(\text{citation}_{self}) \times log(n_{jself} + 1)}{\sqrt{\sum_j [f(\text{citation}_{other}) \times log(n_{jother} + 1) + f(\text{citation}_{self}) \times log(n_{jself} + 1)]}}$$

About the concrete value of weight, for example, it may be assumed to weight $f(citation_{other})=1$ in the case of the citation to the other company, and it may be assumed to a weight $f(citation_{self})=2$ larger than that in the case of the citation to one's own company.

The number of times being cited has high correlation with the worth of patent. Furthermore, according to the present inventors' verification, in the number of times cited in the examination of the patent applications of the other company (citation to the other company), and the number of times cited in the examination of other patent applications of one's own company (citation to one's own company), it is concluded that correlation between the latter and the worth of patent is significantly high. The invention cited in the examination of other patent applications of one's own company is conjectured to be a basic invention which constitutes a core in the operation art of one's own company in many cases. There is a strong possibility of recognizing that one's own company has already applied for such a basic invention and having applied also for the improvement art and having aimed at construction of a strong patent portfolio.

According to this embodiment, by dividing the number of times being cited into the citation to the other company and the citation to one's own company, and making the latter number of times reflect in the evaluation value more greatly, a suitable evaluation of the patent application or the patent right is achieved.

< 5-3-4. Calculation of Evaluation Raw Score >

About all the evaluation items i (where i= 1, 2, ..., I) chosen in the initial setting phase, after the evaluation score of patent data j is calculated, based on this, an evaluation raw score of the concerned patent data j is calculated with the next [Equation 5], for example (S224).

[Equation 5]

$$\left(\text{Patent evaluation raw score}\right)=\sqrt{\sum_{i}\left(\text{evaluation score}_{i}\right)^{2}} \quad or \quad 0$$

As shown in this equation, the evaluation raw score is set to the positive square root of the sum of squares of I evaluation scores, or 0. The cases where the evaluation raw score is set to 0 are the case where a request for examination is not submitted by the time limit of the request for examination, the case where application is withdrawn or abandoned, the case where the decision of rejection becomes final and conclusive, and the case where patent application lapses besides this. Furthermore, the cases where the evaluation raw score is set to 0 are the case where the cancellation decision by request for reinvestigation or the invalidation trial decision by the trial for invalidation becomes final and conclusive, the case where the patent right is abandoned, the case where the duration of the patent right expires, and the case where other patent rights are lapsed. These items of information are also read in the historical information of each patent data, and the evaluation raw score is set to 0 when it corresponds.

Moreover, if the correction by the contents information is performed for the evaluation score calculated by S223C [Time Attenuation Type] as mentioned above, after performing the multiplication of the above-mentioned $a_1 \times a_2 \times a_3$ to the evaluation score calculated with the above-mentioned [Equation 2] based on the "lapsed days from request for examination," the "lapsed days from filing date of application," and the "lapsed days from registration date," respectively, a root sum square value is taken according to [Equation 5].

As a method of calculating an evaluation raw score from evaluation score i by a plurality of evaluation items, there is also a method of obtaining for the sum total of each evaluation score i (simple summation method). In this method, evaluation of the patent to which much historical information having correlation with the patent maintenance ratio (economic value) is given is calculated highly. Therefore, it is rational apparently to make the sum total of evaluation score i into the evaluation raw score. However, in this method, since the patent evaluation (many low evaluation scores are added) raw score where correlation with the maintenance ratio is given much historical information which is not so high can exceed the patent evaluation raw score where the small number of giving of the correlation with the maintenance ratio is performed in very high historical information, cautions are required.

As one method of solving this problem, a method of making the maximum an evaluation raw score among each evaluation score i is also possible (maximum method). In this method, in particular, when investigating correlation with a certain historical information and maintenance ratio of a patent group, and what kind of historical information is given to others or correlation is investigated independently, it is expected that the maintenance ratio of a certain patent can be best expressed at the maintenance ratio of the historical information with the highest maintenance ratio. Therefore, it is rational apparently to make the maximum of evaluation score i into the evaluation raw score. However, in this method, when the maximum of evaluation score i of two patents is the same, it does not pick one over the other. Furthermore, when the maximum method is used, evaluation which added the viewpoint of three different subjects of an applicant, the Patent Office, and a competitor cannot be performed. Therefore, only anyone viewpoint in those subjects will be reflected, and the viewpoint of the remaining subject cannot be made to reflect in evaluation of patent data.

The above-mentioned method of taking a root sum square value can be called a method of having the advantage of the simple summation method and the maximum method. That is, when high evaluation score i is in I evaluation items i about a certain patent data j by taking a root sum square value, the high evaluation score i influences an evaluation raw score greatly. It becomes the evaluation raw score partly taken into consideration also about evaluation scores other than the high evaluation items of evaluation score i. Therefore, the conspicuous high evaluation raw score can be given for patent data j which corresponds to the "accelerated examination," the "opposition dismissed," the "invalidation trial dismissed," etc. which become high evaluation score i easily.

Thus, according to this embodiment, patent evaluation adding all the evaluation scores calculated according to the kind of patent attribution information is performed (S223, S224). As a result, it is possible to evaluate worth of patent data from many sides.

< 5-3-5. Calculation of Evaluation Value >

After the evaluation raw score is calculated, it is assumed as the evaluation value of the concerned patent data j by calculating the logarithm (natural logarithm, for example) (S225).

Although a high value is given to the evaluation value calculated based on the historical information or the contents information for a few patent applications or patent rights which can read unique progress or the contents, a low value is given in many cases for the other patent applications or patent rights of large number. Therefore, if the number of cases distribution according to evaluation value is observed, the patent application or the patent right with a high evaluation value constitutes a few sparse distribution, and many patent applications or patent rights with a low evaluation value constitute distribution which is concentrated.

In such a case, since an average (arithmetical average value) is greatly influenced by a small number of the patent application or the patent right with a high evaluation value, cautions are needed when the comparison with such an average estimates. Moreover, for example, when comparing two patent applications or patent rights from which the high evaluation value is acquired, even if it seems that the evaluation value has a great difference on a numerical value, it may not be a significant difference actually.

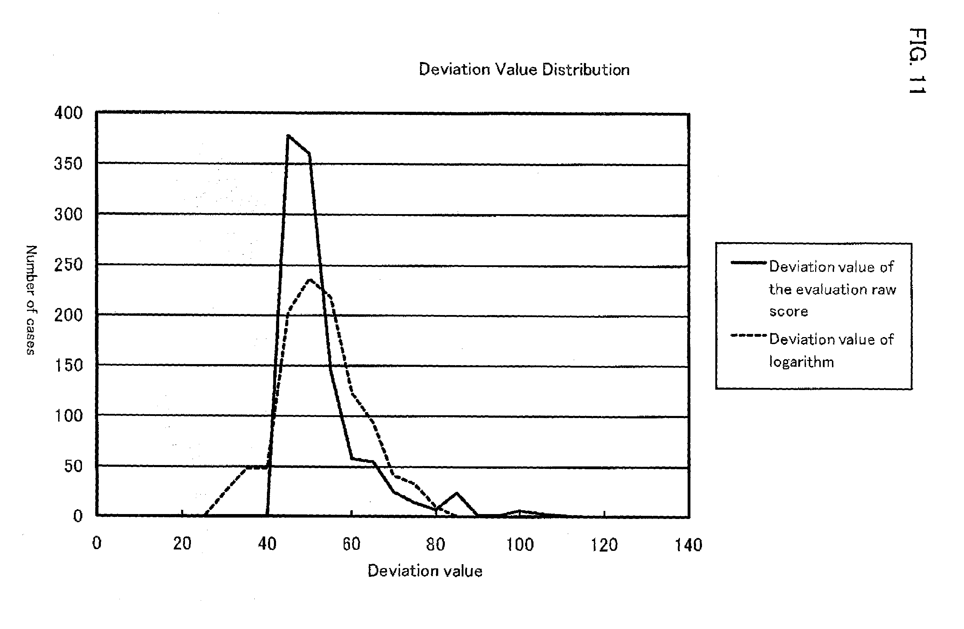

FIG. 11 shows a graphic chart showing number of cases distribution of the deviation value directly calculated based on the evaluation raw score after calculating the evaluation raw score about a certain analysis object population's patent data, and the deviation value calculated after making logarithm.

According to this embodiment, the evaluation value can be appropriately compared now by converting the evaluation value into logarithm (natural logarithm or other logarithm).

In particular, since the number of cases distribution for every evaluation value becomes near log normal distribution in many cases, the number of cases distribution can be brought close to the normal distribution by converting the evaluation value into logarithm. Therefore, more suitable evaluation is achieved, if the deviation value, for example, is calculated after converting the evaluation value into logarithm.

Next, it determines whether the evaluation value is calculated about all the patent data j, when not calculating (when it is "NO" in S226), variable j is set to j+1 (S227), and it returns to S223, and the evaluation value is calculated about the following patent data.

When the evaluation value is calculated about all the patent data j (when it is "YES" in S226), the calculation process of the evaluation value about the patent data belonging to the group involved is completed.

Thus, according to this embodiment, a plurality of patent data in which characteristics differ is evaluated in consideration to the characteristics of every technical field and every application period. As a result, worth of patent data can be evaluated more appropriately.

< 5-4. Calculation of Deviation Value>

The evaluation value calculation process from S221 to S227 is executed about all the groups t obtained by classifying (S210) the patent data obtained in S200.

If an evaluation value is calculated about all the groups t, it returns to FIG. 3, and the deviation value in the analysis object population obtained in S200 is calculated as a standardized evaluation value based on this evaluation value (S230). This deviation value also makes possible the relative comparison (comparison with the analysis object population separately chosen by different IPC in S200) of the patent data between different technical fields in which it is normally difficult to compare. It is possible to use another standardized value in place of the deviation value. Further, it is possible to use the deviation value within each group made by the classification for each prescribed period in place of the deviation value within the analysis object population.

< 5-5. Rating >

After the deviation value is calculated, the rating of the patent data is performed based on the calculated deviation value (S240). The rating is performed for example as follows.

[Table 1]

| Deviation value | Rating |
| --- | --- |
| 110±5 | A+++ |
| 100±5 | A++ |
| 90±5 | A+ |
| 80±5 | A |
| 70±5 | A- |
| 60±5 | B+ |
| 50±5 | B |
| 40±5 | B- |
| 30±5 | C+ |
| 20±5 | C |
| 10±5 | C- |

< 5-6. Output >

When rating is completed, a result is outputted by the output section 130, and a series of processes is completed (S250).

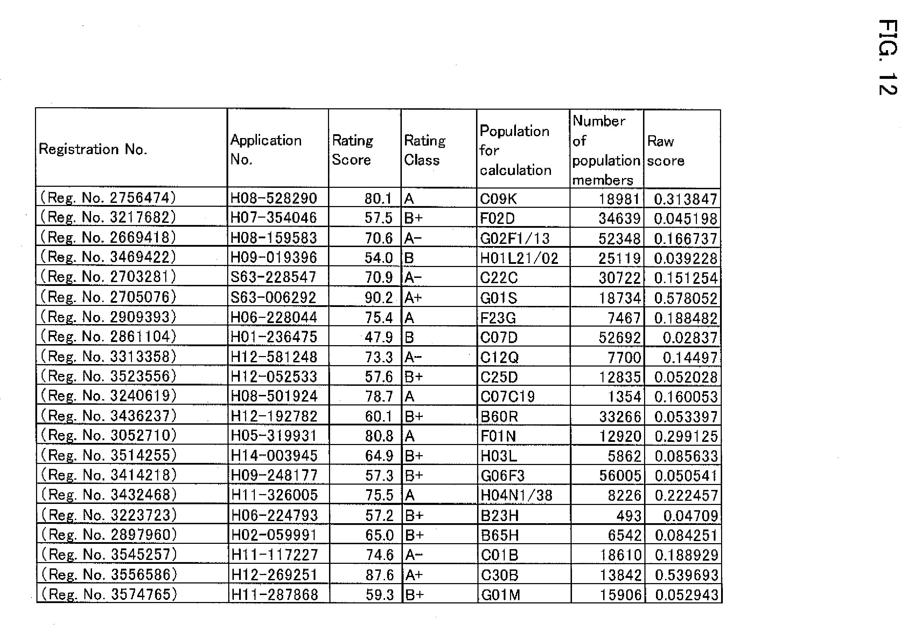

FIG. 12 is a figure showing the output results of a tabular format as an example. The patent group cited to this figure is a patent group which some corporations extract as a leading patent, respectively, and the technical fields are various. The analysis object population is extracted based on the IPC subclass to which each of this patent group belongs, respectively, and after calculating the evaluation value of the patent data belonging to each, it is outputted how the evaluation value of the above-mentioned leading patent which became the origin of population extraction would be calculated. Although the computed result is a calculation result by the historical information and the contents information with available anyone, all became the evaluation not less than B and it brought a result near evaluation by the corporation. Since the evaluation value (deviation value) is calculated for every technical field in this embodiment, a relative comparison becomes possible even if the tendency of the historical information or the contents information has a difference between different technical fields. Of course, when only a simple numeric comparison is performed between different technical fields, there is also a possibility of inducing misunderstanding, but possibility of misunderstanding is avoidable by specifying the analysis object population.

< 6. Modified Examples >

Next, modified examples of the embodiment are explained. In the explanation of the modified examples, the same numerals are used for the same components as the above-mentioned embodiment.

« First Modified Example »

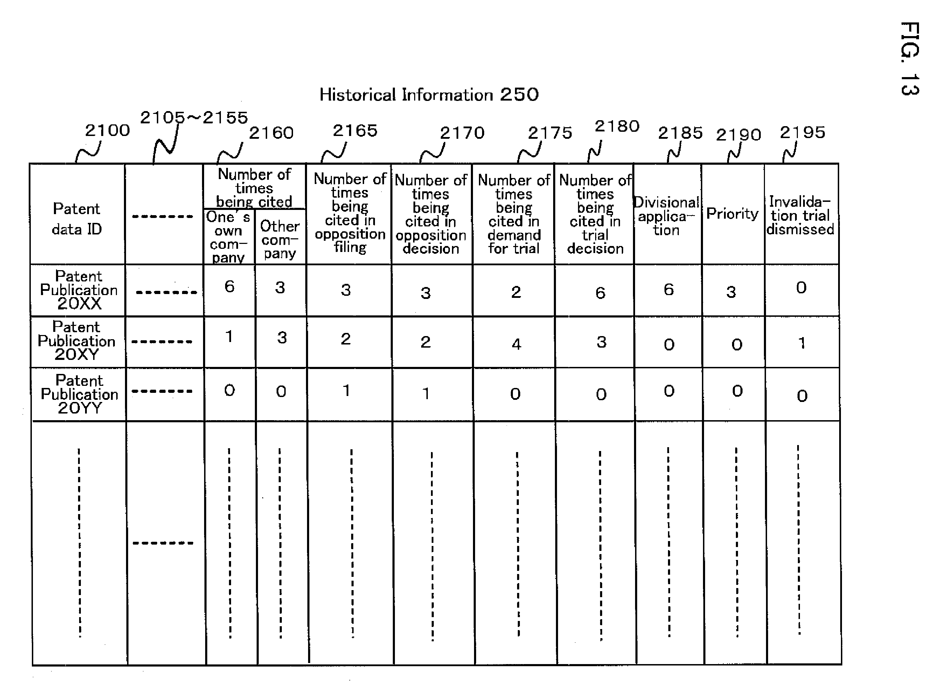

Firstly, a first modified example of the embodiment is explained.
In the first modified example, the evaluation items for calculation of the evaluation score of the number of times type is further added to the historical information 210 of the embodiment.
More specifically, in the first modified example, it is the same as the embodiment mentioned above except having been made to evaluate patent data by using the historical information shown in FIG. 13. Hereafter, the contents of the historical information different from the above-mentioned embodiment will be explained.
FIG. 13 is a figure showing schematically an example of the data configuration of the historical information of the first modified example of the embodiment.
The historical information to illustrate further has added the "number of times being cited in opposition filing," the "number of times being cited in opposition decision," the "number of times being cited in demand for trial," the "number of times being cited in trial decision," the "number of times of divisional application," the "number of times of priority," and the "number of times of invalidation trial dismissed" to the historical information 210 of FIG. 7 mentioned above. In addition, in FIG. 13, the data of 2105 to 2155 of FIG. 7 is omitted for convenience.

More specifically, the historical information 250 includes field 2100 for registering "patent data ID (gazette number etc.)," field 2105 for registering the "lapsed days from filing date of application," field 2110 for registering "lapsed days from request for examination day," field 2115 for registering "lapsed days from registration date," field 2120 for registering the information showing the existence or nonexistence of "divisional application," field 2125 for registering the information showing the existence or nonexistence of "accelerated examination," field 2130 for registering the information showing the existence or nonexistence of "patent allowance in appeal," field 2135 for registering the information showing the existence or nonexistence of "opposition dismissed," field 2140 for registering the information showing the existence or nonexistence of "invalidation trial dismissed," field 2145 for registering the information showing the existence or nonexistence of "claim of priority," field 2150 for registering the information showing the existence or nonexistence of "PCT application," field 2155 for registering the information showing the existence or nonexistence of "inspection of the file wrapper" and field 2160 for registering the information showing "the number of times being cited," and further includes field 2165 for registering "the number of times being cited in opposition filing," field 2170 for registering "the number of times being cited in opposition decision," field 2175 for registering "the number of times being cited in demand for trial," field 2180 for registering "the number of times being cited in trial decision," field 2185 for registering the number of times of "divisional application," field 2190 for registering the number of times of "priority" and field 2195 for registering the number of times of "invalidation trial dismissed," and one record is composed. In addition, the historical information 250 consists of a plurality of records.

Here, the "number of times being cited in opposition filing" means the number of times used as "evidence which composes reasons for opposition" of the patent data. The "number of times being cited in opposition decision" means the number of times used as the "evidence used as the basis of cancellation decision" of the patent data. The "number of times being cited in demand for trial" means the number of times used as "evidence which composes a reason for refusal (reason for invalidation)" of the patent data. The "number of times being cited in trial decision" means the number of times adopted as the "evidence of trial decision" of the patent data. The number of times of "divisional application" means the number of times (for example, a generation number is counted such that grandchild application is 2 times and great-grandchild application is 3 times) into which the patent data is divided. The number of times of "priority" means the number of times shown by the number of the application bases of the claim of priority. The number of times of "invalidation trial dismissed" means the number of times of the "invalidation trial dismissed" of the patent data.

And, the historical information 250 to illustrate is used for the process of FIG. 10. Thus, the evaluation items are further added to the historical information 230 of FIG. 7 because it is found out that the "number of times being cited in opposition filing," the "number of times being cited in opposition decision," the "number of times being cited in demand for trial," the "number of times being cited in trial decision," the number of times of "divisional application," the number of times of "priority," and the number of times of the "invalidation trial dismissed" are closely related with the maintenance ratio of the patent right, as a result of analysis of the relation between the historical information and the maintenance ratio of patent right with a statistical method by the present inventor.

As mentioned above, it is possible to analyze the patent data in higher accuracy by the patent evaluation device of the first modified example than that of the above-mentioned embodiment.

Moreover, the "number of times being cited in opposition filing," the "number of times being cited in opposition decision," the "number of times being cited in demand for trial" and the "number of times being cited in trial decision" are not divided to citations to one's own company and citations to other company. However, these may be divided to citations to one's own company and citations to other company as in the "number of times being cited (in rejections)" recorded in the field 2160. In this situation, to calculate the evaluation scores, weightings are preferably performed according to whether it is the citation to one's own company or the citation to other company in a similar procedure to the above-mentioned embodiment.

« Second Modified Example »

Next, a second modified example of the embodiment will be explained.

In the above-mentioned embodiment, the number of times being cited in the rejection to patent applications of other companies and the number of times being cited in the rejection to other patent applications of one's own company is used for the information showing the number of times that the patent data is cited. In addition to the above, in the second modified example, the fact that the "patent applications of the other company" or the "other patent applications of one's own company," in which the evaluated patent data is cited, is further cited in other patent application (i.e. the evaluated patent data is re-cited) is added to the evaluation.

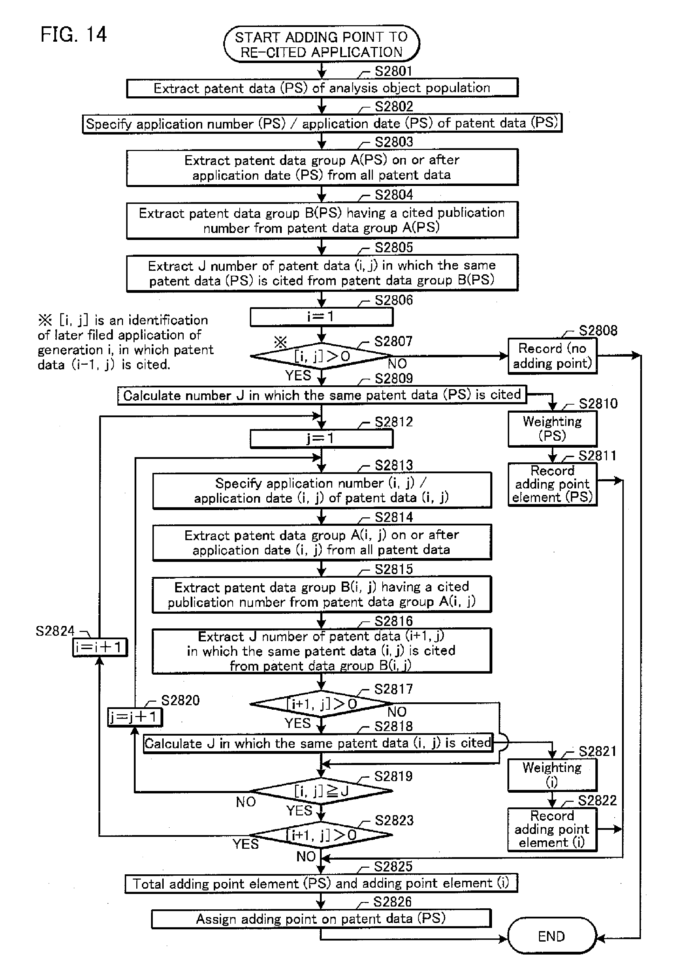

FIG. 14 is a flow chart showing a process for adding points to the re-cited patent data by the evaluation value calculation section in the second modified example. Here, re-cited patent data among the cited patent data is extracted and the number of times of re-citation and the generation number are counted to create an adding point element.

First, the patent data of the analysis object population for calculating the evaluation value is extracted from the storage unit (S2801). The patent data belonging to the analysis object population extracted here is named patent data (PS). The following processing is performed for each of the extracted patent data individually.

Next, for one of the patent data (PS) among the extracted analysis object population, an application number and an application date (a priority date if it claims priority) is specified by using the historical information stored in the storage unit (S2802). Here, the application number and the application date of the patent data (PS) are named an application number (PS) and an application date (PS), respectively.

Further, by using the specified application date (PS), patent data having an application date (a priority date if it claims priority) on or after the application date (PS) is extracted from all the patent data stored in the storage unit (S2803). Here, a group of the extracted later-filed patent data is named patent data group A(PS).

Next, among the patent data group A(PS), patent data having a cited publication number within the historical information is extracted (S2804). A group of the extracted patent data is named patent data group B(PS).

Next, by using the application number (PS) of the above-mentioned patent data (PS), all (J number of) patent data (i, j) in which the patent data (PS) is cited is extracted from the patent data group B(PS). Here, the character i represents the generation number (positive integer) and i=1 in this step. The character j represents an identification number of the later-filed patent data and, if there is J number of later-filed patent data in which the same patent data (PS) is cited, j is an integer within a range of 1 through J (S2805).

Next, by using the patent data (i, j) in which the patent data (PS) is cited, the adding point element is calculated in the following processing. First, counter i representing the generation number is set to 1 (S2806).

If the number J of the patent data within the generation i is not a positive integer (S2807: NO), there is no later-filed patent data in which the patent data (PS) is cited at all and thus the processing to add points is ended without adding points (S2808).

If the number J of the patent data within the generation i is a positive integer (S2807: YES), the number J of the patent data is obtained as the number of patent data in which the patent data (PS) is cited (S2809). A predetermined weighting is assigned (S2810) and the adding point element (PS) according to the number J of the patent data is calculated (S2811). Since the number J of the patent data shows the number of times being cited, the adding point element (PS) is for example a value calculated by the above-mentioned [Equation 3] using a positive square root of a sum of the values J calculated for all patent data (PS) within the group.

Next, by using the patent data (i, j), existence or nonexistence and the number of times of re-citation is determined for each generation. First, the counter j identifying the later-filed patent data (i, j) in which the same patent data is cited is set to 1 (S2812) and the following processing is performed for each later-filed patent data (i, j).

First, for a later-filed patent data (i, j), the application number and the application date is specified by using the historical information stored in the storage unit (S2813). Here, the application number and the application date of the patent data (i, j) are named an application number (i, j) and an application date (i, j), respectively.

Further, by using the specified application date (i, j), patent data having an application date on or after the application date (i, j) is extracted from all the patent data stored in the storage unit (S2814). Here, a group of the extracted later-filed patent data is named patent data group A(i, j).

Next, among the patent data group A(i, j), patent data having a cited publication number within the historical information is extracted (S2815). A group of the extracted patent data is named patent data group B(i, j).

Next, by using the application number (i, j) of the above-mentioned patent data (i, j), all (J number of) patent data (i+1, j) in which the patent data (i, j) is cited is extracted from the patent data group B(i, j) (S2815). The patent data (i+1, j) belongs to a generation of re-citation or a later generation from the patent data (PS) belonging to the analysis object population.

Next, by using the patent data (i+1, j) in which the patent data (i, j) is cited, a new adding point element because of re-citation is calculated in the following processing.

If the number J of the patent data within the next generation i+1 in which the patent data (i, j) is cited is not a positive integer (S2817: NO), there is no later-filed patent data in which the patent data (i, j) is cited at all and thus the new adding point element is not made. In this situation, until the patent data (i+1, j) of the next generation is extracted for all the patent data (i, j) belonging to the same generation i (S2819), 1 is added to the counter j (S2820) and repeat the processing to extract the patent data (i+1, j) of the next generation.

If the number J of the patent data within the next generation i+1 in which the patent data (i, j) is cited is a positive integer (S2817: YES), the number J of the patent data is obtained as the number of patent data in which the patent data (i, j) is cited (S2818). This number J is used for calculating the new adding point element because of re-citation. It is preferable that, as mentioned above, until the patent data (i+1, j) of the next generation is extracted for all the patent data (i, j) belonging to the same generation i (S2819), 1 is added to the counter j (S2820) and repeat the processing to extract the patent data (i+1, j) of the next generation, and a predetermined weighting (a weighting that has a smaller influence to adding points in a later generation is preferable) is assigned (S2821) to a sum ΣJ of the number of patent data of the next generation i+1 extracted for the generation i, and the adding point element (i) for each generation i is calculated (S2822). For example, the sum ΣJ of the number of patent data (the number of times of re-citation or the number of times being cited in each generation after that) of the next generation i+1 is calculated for all patent data (PS) within the group and a value is calculated by the above-mentioned [Equation 3] using the sum ΣJ to be the adding point element (i).

If the extraction of the patent data (i+1, j) in the next generation is completed for all patent data (i, j) in the same generation i (S2819: YES), as long as the number J of the patent data in the next generation i+1 is a positive value (S2823: YES), 1 is added to the counter i (S2824) to determine the existence or nonexistence and the number of times of re-citation in the still next generation.

If the extraction of the patent data (i+1, j) in the next generation is completed for all patent data (i, j) in the same generation i (S2819: YES) and the number J of the patent data in the next generation i+1 is not a positive value (S2823: NO), a total sum (adding point element (PS) + Σ[adding point element (i)]) of the adding point element (PS) calculated in the above-mentioned processing and the adding point element (i) calculated in the processing for each generation is calculated (S2835) and this total sum is made to be the adding point value on the above-mentioned patent data (PS) (S2826). Then, by dividing the adding point value of each patent data (PS) by a positive square root of a sum Σ(adding point value) of the adding point values in the group, an evaluation score as to the number of times being cited (including the re-citation)

$$\texttt{(adding point value) / } \sqrt{\Sigma} \texttt{(adding point value)}$$

is calculated.

As another method for adding the re-citation to the evaluation, it is possible to store information on the number of times of re-citation in the storage unit as the historical information of FIG. 7 in advance, and to add points based on this information.

The method for adding points are not limited to the above. For example, a value is calculated by adding the number of times of citation used in the above-mentioned [Equation 3] and the number of times (a discount rate is preferably applied) of re-citation and the calculated value is applied to the above-mentioned [Equation 3] by the evaluation value calculation section to calculate an evaluation score as to the evaluation item of the number of times being cited. Moreover, for example, if the "patent application of other company" in which the patent data is cited is further cited (re-citation on citation to other company) in another patent applications (regardless of one's own company or other company), the number of re-citation (a discount rate is preferably applied) is added to the number of times of citation to other company used in the [Equation 4]. On the other hand, if the "other patent application of one's own company" in which the patent data is cited is further cited (re-citation on citation to one's own company) in another patent applications (regardless of one's own company or other company), the number of re-citation (a discount rate is preferably applied) is added to the number of times of citation to one's own company used in the [Equation 4]. The number of times of citation obtained here may be applied to the [Equation 4] to calculate an evaluation score as to the evaluation item of the number of times being cited.

<< Third Modified Example >>

Next, a third modified example of the embodiment will be explained.

In the above-mentioned embodiment, the "divisional application" is used for the information showing existence or nonexistence of a specified action, and as a result, a divisional application is assigned an evaluation value higher than other application (if the other historical information is equivalent). However, the present invention is not limited to this situation. In the third modified example, the evaluation is made in consideration to whether it is a "parent application" of a divisional application. The parent application of a divisional application can be said to be a core application on which the divisional application is based. In some cases a divisional application may extinguish an importance of the parent application and the parent application may be abandoned or terminated. However, as long as the parent application is maintained without being abandoned or terminated, it may be evaluated to be equivalent or similar to the divisional application. Incidentally, if the parent application of the divisional application is abandoned or terminated, the evaluation raw score will be 0 according to the [Equation 5] .

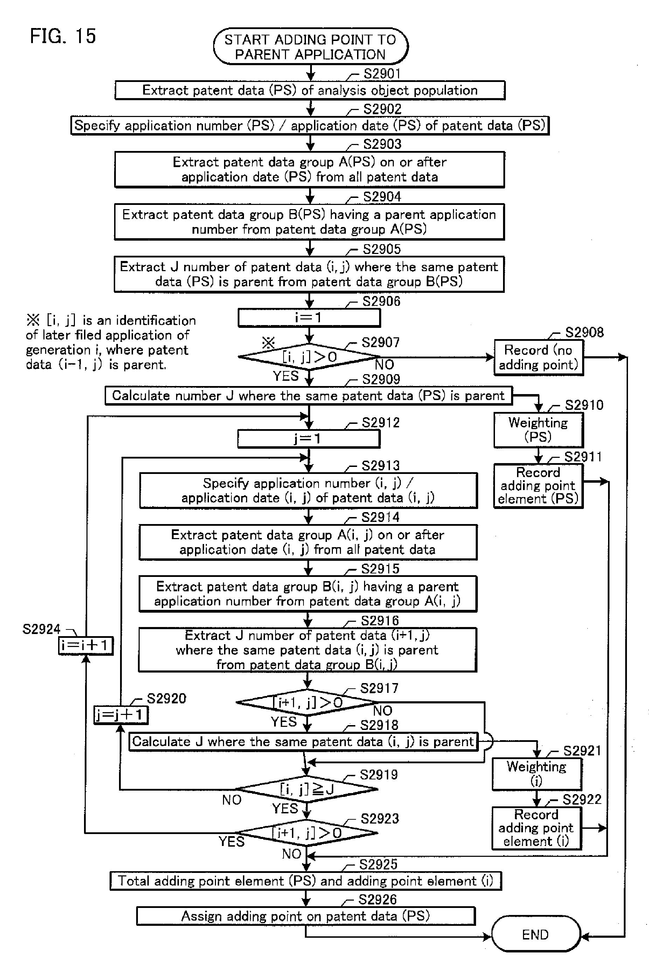

FIG. 15 is a flow chart showing a process for adding points to the patent data of a parent application of a divisional application by the evaluation value calculation section in the third modified example. Here, the parent application of a divisional application is extracted and the number of times of divisional applications and the generation number are counted to create an adding point element.

First, the patent data of the analysis object population for calculating the evaluation value is extracted from the storage unit (S2901). The patent data belonging to the analysis object population extracted here is named patent data (PS). The following processing is performed for each of the extracted patent data individually.

Next, for one of the patent data (PS) among the extracted analysis object population, an application number and an application date are specified by using the historical information stored in the storage unit (S2902). Here, the application number and the application date of the patent data (PS) are named an application number (PS) and an application date (PS), respectively.

Further, by using the specified application date (PS), patent data having an application date on or after the application date (PS) is extracted from all the patent data stored in the storage unit (S2903). Here, a group of the extracted later-filed patent data is named a patent data group A(PS).

Next, among the patent data group A(PS), patent data having a parent application number of division within the historical information is extracted (S2904). A group of the extracted patent data is named a patent data group B(PS).

Next, by using the application number (PS) of the above-mentioned patent data (PS), all (J number of) patent data (i, j) of which the patent data (PS) is parent is extracted from the patent data group B(PS). Here, the character i represents the generation number (positive integer) and i=1 in this step. The character j represents an identification number of the later-filed patent data and, if there is J number of later-filed patent data of which the same patent data (PS) is parent, j is an integer within a range of 1 through J (S2905).

Next, by using the patent data (i, j) of which the patent data (PS) is parent, the adding point element is calculated in the following processing. First, counter i representing the number of generations of divisional application is set to 1 (S2906).

If the number J of the patent data within the generation i is not a positive integer (S2907: NO), there is no later-filed patent data of which the patent data (PS) is parent at all and thus the processing to add points is ended without adding points (S2908).

If the number J of the patent data within the generation i is a positive integer (S2907: YES), the number J of the patent data is obtained as the number of the patent data of which the patent data (PS) is parent (S2909). A predetermined weighting is assigned (S2910) and the adding point element (PS) according to the number J of the patent data is calculated (S2911). Since the number J of the patent data shows the number of divisional applications based on the patent data (PS), the adding point element (PS) is for example a value calculated by the above-mentioned [Equation 3] using a positive square root of a sum of the values J calculated for all patent data (PS) within the group.

Next, by using the patent data (i, j), existence or nonexistence and the number of divisional applications on and after the next generation is determined for each generation. First, the counter j identifying the later-filed patent data (i, j) of which the same patent data is parent is set to 1 (S2912) and the following processing is performed for each later-filed patent data (i, j).

First, for the later-filed patent data (i, j), the application number and the application date is specified by using the historical information stored in the storage unit (S2913). Here, the application number and the application date of the patent data (i, j) are named an application number (i, j) and an application date (i, j), respectively.

Further, by using the specified application date (i, j), patent data having an application date on or after the application date (i, j) is extracted from all the patent data stored in the storage unit (S2914). Here, a group of the extracted later-filed patent data is named a patent data group A(i, j).

Next, among the patent data group A(i, j), patent data having a parent application number of division within the historical information is extracted (S2915). A group of the extracted patent data is named a patent data group B(i, j).

Next, by using the application number (i, j) of the above-mentioned patent data (i, j), all (J number of) patent data (i+1, j) of which the patent data (i, j) is parent application of division is extracted from the patent data group B(i, j) (S2915). The patent data (i+1, j) belongs to a generation of a grand-child application or a later generation from the patent data (PS) belonging to the analysis object population.

Next, by using the patent data (i+1, j) of which the patent data (i, j) is parent application of division, a new adding point element because of having a grand-child application is calculated in the following processing.

If the number J of the patent data within the next generation i+1 of which the patent data (i, j) is parent application of division is not a positive integer (S2917: NO), there is no later-filed patent data of which the patent data (i, j) is parent at all and thus the new adding point element is not made. In this situation, until the patent data (i+1, j) of the next generation is extracted for all the patent data (i, j) belonging to the same generation i (S2919), 1 is added to the counter j (S2920) and the processing to extract the patent data (i+1, j) of the next generation is repeated.

If the number J of the patent data within the next generation i+1 of which the patent data (i, j) is parent application of division is a positive integer (S2917: YES), the number J of the patent data is obtained as the number of patent data of which the patent data (i, j) is parent (S2918). This number J is used for calculating the new adding point element because of having a grand-child application. It is preferable that, as mentioned above, until the patent data (i+1, j) of the next generation is extracted for all the patent data (i, j) belonging to the same generation i (S2919), 1 be added to the counter j (S2920) and the processing to extract the patent data (i+1, j) of the next generation be repeated, a predetermined weighting (a weighting that has a smaller influence to adding points in a later generation is preferable) be assigned (S2921) to a total sum ΣJ of the number of patent data of the next generation i+1 extracted for the generation i, and the adding point element (i) for each generation i be calculated (S2922). For example, the sum ΣJ of the number of patent data (the number of grand-child applications or the number of divisional applications in each generation after that) of the next generation i+1 is calculated for all patent data (PS) within the group and a value is calculated by the above-mentioned [Equation 3] using the sum ΣJ to be the adding point element (i).

If the extraction of the patent data (i+1, j) in the next generation is completed for all patent data (i, j) in the same generation i (S2919: YES), as long as the number J of the patent data in the next generation i+1 is a positive value (S2923: YES), 1 is added to the counter i (S2924) to determine the existence or nonexistence and the number of divisional applications in the still next generation.

If the extraction of the patent data (i+1, j) in the next generation is completed for all patent data (i, j) in the same generation i (S2919: YES) and the number J of the patent data in the next generation i+1 is not a positive value (S2923: NO), a total sum (adding point element (PS) + Σ[adding point element (i)]) of the adding point element (PS) calculated in the above-mentioned processing and the adding point element (i) calculated in the processing for each generation is calculated (S2935) and this total sum is made to be the adding point value on the above-mentioned patent data (PS) (S2926). Then, by dividing the adding point value of each patent data (PS) by a positive square root of a sum Σ(adding point value) of the adding point values in the group, an evaluation score as to a parent application of a divisional application

$$\text{(adding point value)} \ / \ \sqrt{\Sigma} \text{(adding point value)}$$

is calculated.

As another method for considering whether or not it is a parent application of a divisional application to the evaluation, it is possible to store information as to whether or not it is a parent application of a divisional application in the storage unit as the historical information of FIG. 7 in advance, and to add points to the parent application based on this information.

The method for adding points is not limited to the above. For example, a parent application of a divisional application may be treated to fall under the evaluation item of the above-mentioned "divisional application" and it is possible to calculate the evaluation score for the "divisional application" by the evaluation value calculation section using the above-mentioned [Equation 1]. In the [Equation 1], an example of the existence or nonexistence data of the evaluation item i where 1 is assigned to the divisional application and 0 is assigned to a non-divisional application is explained. If 1 is also assigned to the parent application of a divisional application, an evaluation is made for the parent application equivalent to that for the divisional application. On the other hand, if the existence or nonexistence data for the parent application of a divisional application is set to an arbitrary positive constant value A, an evaluation lower than that for the divisional application is made if A<1 and an evaluation higher than that for the divisional application is made if 1<A.

« Fourth Modified Example »

Next, a fourth modified example of the embodiment is explained.

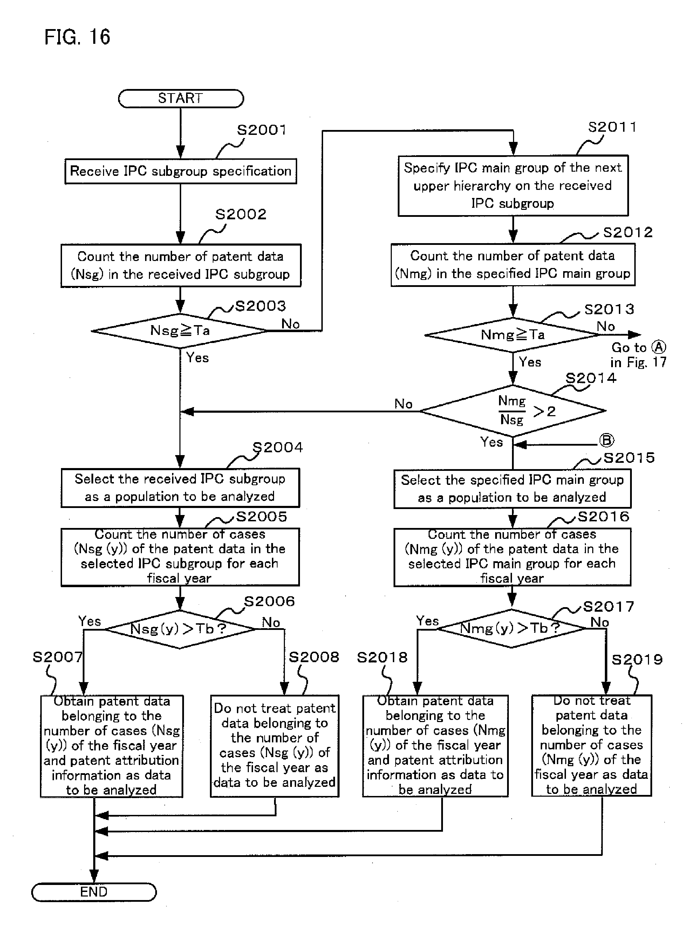

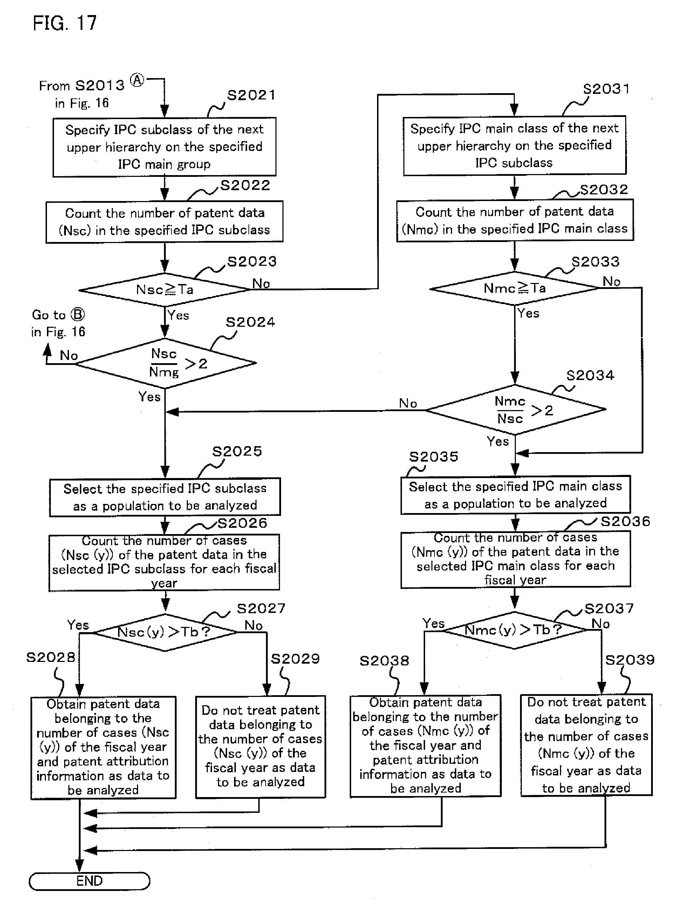

In the fourth modified example, the function of the data acquiring section 105 of the processing unit 1 is added, and the process of S200 shown in FIG. 3 is executed according to the procedure shown in FIGS. 16 and 17. It composes in this way because the population of a certain amount of size as data of an analysis object is needed in order to calculate a reliable evaluation value, in the patent evaluation phase A2.

Specifically, the fourth modified example is the same as the configuration shown in FIG. 1 except adding the function to the data acquiring section 105. Therefore, in the following, it will explain focusing on a different part. In addition, although the data acquiring section 105 differs in a part of functions compared with the section of the embodiment, the same reference numeral is used, for convenience of explanation. Moreover, the function of the data acquiring section 105 of the fourth modified example can be realized by software like the embodiment, by the hardware shown in FIG. 2.

Here, the details of the process of S200 executed by the data acquiring section 105 of the fourth modified example are explained using FIGS. 16 and 17.

FIGS. 16 and 17 are flow charts showing an example of the concrete procedure of the process of S200 shown in FIG. 3. Hereafter, the procedure of the process shown in FIGS. 16 and 17 is explained, referring to FIGS. 1 and 3.

As shown in FIG. 16, first of all, the data acquiring section 105 receives specification of an IPC subgroup (S2001). For example, the data acquiring section 105 obtains the IPC subgroup data (data for specifying the IPC subgroup) in which the patent data for scoring belongs, via the input unit 3.

Next, the data acquiring section 105 determines whether or not the number of the patent data of the specified IPC subgroup is larger than a threshold value Ta (S2002, S2003). In addition, although the threshold value Ta is not particularly limited, if the threshold value Ta is set as 5000, it is in the tendency in which value is stabilized. In the following example, the threshold value Ta will be explained as 5000.

More specifically, in S2002, the data acquiring section 105 accesses the storage unit 2, and counts the number of the patent data (Nsg) belonging to the IPC subgroup specified in S2001.

Next, in S2003, the data acquiring section 105 determines whether or not the number of the counted patent data (Nsg) is not less than 5000 (Ta). As a result, if the number of patent data (Nsg) is not less than 5000 (Ta), the data acquiring section 105 goes to S2004. On the other hand, if the number of patent data (Nsg) is less than 5000 (Ta), the data acquiring section 105 goes to S2011.

Here, it will explain briefly that it is in the tendency in which an evaluation value is stabilized if there are 5000 or more populations of the data of the analysis object, by using FIG. 9 used in the embodiment.

The table shown in FIG. 9 is a table showing the evaluation value computed result when changing an analysis object population's extraction range in the embodiment. When an IPC subgroup, a main group, and a subclass are chosen as an analysis object population, it is shown about five technical fields how the evaluation value of a certain patent is changed.

In the field of IPC "B01J35/02," 2,211 patent data exists in the main group, and 17,852 patent data exists in the subclass. The evaluation value (deviation value) of a certain patent application in this subclass is the same as the evaluation value of the main group, and is stable.

On the other hand, in the field of IPC "C22C27/02," only 62 patent data exists in this subgroup. The evaluation value of a certain patent application in this subgroup had a great difference with the evaluation value in the main group. When the analysis object population is extended to the main group, it became 242 cases at last. However, the evaluation value of a certain patent application in this main group has still a great difference with the evaluation value in the subclass. When the analysis object population is further extended to the subclass, it became 19,129 cases, and it is stabilized at last. This drawing shows only five examples in order to simplify explanation, but also in other fields, there is a tendency in which the evaluation value is stable with the analysis object population having 5000 or more.

Returning to FIG. 16, the process of S2004 executed when the number of patent data (Nsg) is determined to be not less than 5000 (Ta) in S2003 will be explained. Specifically, in S2004, the data acquiring section 105 selects the IPC subgroup received by S2001 as the population that is the analysis object.

Next, the data acquiring section 105 accesses the storage unit 2, classifies the patent data belonging to the selected IPC subgroup according to a fiscal year (according to an application fiscal year) by using the IPC subgroup data obtained in S2001, and counts the number of cases (Nsg (y)) according to the fiscal year of the classified patent data (S2005).

Next, the data acquiring section 105 determines whether or not the number of cases (Nsg (y)) according to the fiscal year is larger than a threshold value Tb in every number of cases (Nsg (y)) according to the fiscal year of the counted patent data. In addition, although the threshold value Tb is not particularly limited, the threshold value Tb is preferably 20. In the following example, the threshold value Tb is assumed to be 20.

The data acquiring section 105 accesses the storage unit 2, and obtains the patent data classified into the fiscal year larger than 20 (Tb) and the patent attribution information of the patent data, as data of the analysis object, using the determination result (S2006 to S2008). That is, the data acquiring section 105 processes S2006 to S2008 in every number of cases (Nsg (y)) according to the fiscal year of the counted patent data.

More specifically, in S2006, the data acquiring section 105 determines whether or not the number of cases (Nsg (y)) is larger than 20 (Tb) according to the fiscal year of the patent data. As a result of the determination, if the number of cases (Nsg (y)) according to the fiscal year of the patent data is larger than 20 (Tb), the process goes to S2007, and then the data acquiring section 105 obtains the patent data belonging to the number of cases (Nsg (y)) according to the fiscal year and the patent attribution information of the patent data. As a result of the determination, if the number of cases (Nsg (y)) according to the fiscal year of the patent data is not larger than 20 (Tb), the process goes to S2008, and then the data acquiring section 105 does not handle the patent data belonging to the number of cases (Nsg (y)) according to the fiscal year as data of the analysis object.

That is, in S2006 to S2008, if the number of cases (Nsg (y)) according to the fiscal year is smaller than 20 (Tb), the data acquiring section 105 removes the patent data belonging to the fiscal year from the data of the analysis object. For example, suppose that the number (Nsg) of the patent data counted in S2002 is 6,000. When the number of cases according to the fiscal year is counted in S2005, suppose that both the number of cases (Nsg (1991) and Nsg (1992)) according to the fiscal year of the patent data in 1991 and 1992 is not more than 20 (Tb), among the number of cases (Nsg (y)) according to the fiscal year of the patent data. In this case, the data acquiring section 105 uses as the data of the analysis object patent data excluding the patent data according to the fiscal year in 1992 and 1991 out of the patent data (6,000 patent data) belonging to the IPC subgroup selected in S2004.

After ending the process of S2006 to S2008, the process of S200 is completed, and then the process shifts to the process S210 shown in FIG. 3.

Next, the process of S2011 executed when the number (Nsg) of the patent data belonging to the specified IPC subgroup is determined to be less than 5000 (Ta) in S2003 will be explained.

In S2011, the data acquiring section 105 specifies the IPC main group of the hierarchy on one of the IPC subgroups specified in S2001. That is, in this step, the technical field which constitutes a candidate of the population to be the analysis object is extended to the IPC main group. For example, if the IPC subgroups specified in S2001 are "A01B1/02," the data acquiring section 105 specifies "A01B1/00" which is the IPC main group of the hierarchy on one of the "A01B1/02" of the IPC subgroup.

Next, the data acquiring section 105 determines whether the number of the patent data of the specified IPC main group is larger than 5000 (Ta) (S2012, S2013).

More specifically, in S2012, the data acquiring section 105 accesses the storage unit 2, and then counts the number (Nmg) of the patent data belonging to the IPC main group specified in S2011.

Moreover, in S2013, the data acquiring section 105 determines whether or not the number (Nmg) of the counted patent data is not less than 5000 (Ta). As a result of the determination, if the number (Nmg) of the patent data is not less than 5000 (Ta), the data acquiring section 105 goes to S2014. On the other hand, if the number (Nmg) of the patent data is less than 5000 (Ta), the data acquiring section 105 goes to S2021 shown in FIG. 17.

In S2014, the data acquiring section 105 determines whether or not the value which divided "the number (Nmg) of the patent data belonging to the IPC main group counted in S2012" by "the number (Nsg) of the patent data belonging to the IPC subgroup counted in S2002" is larger than "2." More specifically, the data acquiring section 105 determines whether or not "Nmg" counted in S2012 and "Nsg" counted in S2002 satisfy the relation shown in the following [Equation 6]:

$$[\text{Equation 6}]$$

$$Nmg \ / \ Nsg \ > \ 2$$

If "Nmg" counted in S2012 and "Nsg" counted in S2002 satisfy the relation of [Equation 6], the data acquiring section 105 goes to S2015, and then selects the IPC main group specified in S2011 as the population that is the analysis object. On the other hand, if "Nmg" counted in S2012 and "Nsg" counted in S2002 do not satisfy the relation of [Equation 6], the data acquiring section 105 goes to S2004 and then processes S2004 to S2008 mentioned above.

That is, by this step, when "the number (Nmg) of the patent data belonging to the IPC main group of the hierarchy on one of the IPC subgroups specified by the analyst is not less than 5000 (Ta)" and "the number (Nmg) of the patent data is larger than the twice of the number (Nsg) of the patent data belonging to the IPC subgroup specified by the analyst," the IPC main group of the hierarchy on one of the IPC subgroups specified by the analyst is selected as the population that is the analysis object.

On the other hand, even if "the number (Nmg) of the patent data belonging to the IPC main group of the hierarchy on one of the IPC subgroups specified by the analyst is not less than 5000 (Ta)," when "the number (Nmg) of the patent data is not larger than the twice of the number (Nsg) of the patent data belonging to the IPC subgroup specified by the analyst," the IPC subgroup specified by the analyst is selected as the population that is the analysis object.

Thus, S2014 is processed in order to take the following points into consideration.

The technique of calculating the evaluation value according to this embodiment can improve the accuracy of an evaluation value by taking the patent data constellation of the same technical field to the population, and calculating respectively the evaluation value of each patent data belonging to the population. Therefore, in order to improve the accuracy of each evaluation value, it is desired to collect the patent data of the narrower range of technical field as the population. Moreover, in the technique of calculating the evaluation value of this embodiment, 5000 or more populations of the patent data of the analysis object are desirable from a viewpoint of the stability of the evaluation value, as mentioned above. That is, in the technique of calculating the evaluation value of this embodiment, (i) the population is desired to be the patent data of a technical field classified into the narrower range, and (ii) 5000 or more populations are desirable. However, the requirement (ii) is not satisfied by the patent data of a technical field with a small number of applications. On the other hand, if a technical field is extended too much, the requirement (i) is not satisfied.

Then, when the patent data of a technical field with a small number of applications is the evaluation target, harmony with the accuracy of the evaluation value brought about by the requirement (i) and the stability of the evaluation value brought about by the requirement (ii) is aimed at by processing this step.

Next, the process of S2016 to S2019 executed after the process of S2015 (process for selecting the IPC main group) will be explained.

In S2016, the data acquiring section 105 accesses the storage unit 2, and then classifies the patent data belonging to the specified IPC main group according to the fiscal year, and counts the number (Nmg (y)) of the patent data according to the classified fiscal year, according to the same procedure as S2005 mentioned above.

In S2017 to S2019, the data acquiring section 105 determines whether or not the number of cases (Nmg (y)) according to the fiscal year is larger than 20 (Tb) in every number of cases (Nmg (y)) according to the fiscal year of the patent data counted in S2016, following the same procedure as S2006 to S2008 mentioned above. The data acquiring section 105 accesses the storage unit 2 using the determination result, and obtains the patent data classified into the fiscal year larger than 20 (Tb) and the patent attribution information of the patent data, as data of the analysis object.

After ending the process of S2017 to S2019, the process of S200 is completed, and then the process shifts to the process S210 shown in FIG. 3.

Below, the process after S2021 of FIG. 17 executed when the number (Nmg) of the patent data belonging to the specified IPC main group is determined to be less than 5000 (Ta) in S2013 will be explained.

As shown in FIG. 17, in S2021, the data acquiring section 105 specifies the IPC subclass of the hierarchy on one of the IPC main groups specified in S2011. That is, in this step, the technical field which constitutes a candidate of the population that is the analysis object is extended to the IPC subclass.

Next, the data acquiring section 105 determines whether or not the number of the patent data of the IPC subclass specified is larger than 5000 (Ta) (S2022, S2023), according to the same procedure as S2002 to S2003 mentioned above. Doing in this way is based on the same reason as S2002 to S2003 mentioned above.

More specifically, in S2022, the data acquiring section 105 accesses the storage unit 2, and then counts the number (Nsc) of the patent data belonging to the IPC subclass specified in S2021.

Moreover, in S2023, the data acquiring section 105 determines whether or not the number (Nsc) of the counted patent data is not less than 5000 (Ta). As a result, if the number of patent data (Nsc) is not less than 5000 (Ta), the data acquiring section 105 goes to S2024. On the other hand, if the number of patent data (Nsc) is less than 5000 (Ta), the data acquiring section 105 goes to S2031.

In S2024, the data acquiring section 105 determines whether or not the value which is obtained by dividing "the number (Nsc) of the patent data belonging to the IPC subclass counted in S2022" by "the number (Nmg) of the patent data belonging to the IPC main group counted in S2012" is larger than "2." More specifically, the data acquiring section 105 determines whether or not "Nsc" counted in S2022 and "Nmg" counted in S2012 satisfy the relation shown in the following [Equation 7]:

$$[\text{Equation 7}]$$

$$\text{Nsc} / \text{Nmg} > 2$$

If "Nsc" counted in S2022 and "Nmg" counted in S2012 satisfy the relation of [Equation 7], the data acquiring section 105 goes to S2025, and then selects the IPC subclass specified in S2021 as the population that is the analysis object. On the other hand, if "Nsc" counted in S2022 and "Nmg" counted in S2012 do not satisfy the relation of [Equation 7], the data acquiring section 105 goes to S2015 shown in FIG.16, and then processes S2015 to S2019 mentioned above.

Next, the process of S2026 to S2029 executed after the process (process for selecting the IPC subclass) of S2025 will be explained.

In S2026, the data acquiring section 105 accesses the storage unit 2, classifies the patent data belonging to the specified IPC subclass according to the fiscal year, and counts the number (Nsc (y)) of the classified patent data according to the fiscal year, according to the same procedure as S2005 mentioned above.

In S2027 to S2029, the data acquiring section 105 executes the same process as S2006 to S2008 mentioned above. That is, the data acquiring section 105 determines whether or not the number of cases (Nsc (y)) according to the fiscal year is larger than 20 (Tb) in every number of cases (Nsc (y)) according to the fiscal year of the patent data counted in S2026. In addition, the same value as S2006 is used for 20 of the threshold value (Tb). The data acquiring section 105 accesses the storage unit 2, and obtains the patent data classified into the fiscal year larger than 20 (Tb) and the patent attribution information of the patent data, as data of the analysis object, using the determination result.

After ending the process of S2027 to S2029, the process of S200 is completed, and the process shifts to the process S210 shown in FIG. 3.

Next, the process after S2031 which is executed when the number (Nsc) of the patent data belonging to the specified IPC subclass is determined to be less than 5000 (Ta) in S2023 will be explained.

First of all, in S2031, the data acquiring section 105 specifies the IPC main class of the hierarchy on one of the IPC subclasses specified in S2021. That is, in this step, the technical field which constitutes a candidate of the population that is the analysis object is extended to the IPC main class.

Next, the data acquiring section 105 determines whether or not the number of the patent data of the specified IPC main class is larger than 5000 (Ta), according to the same procedure as S2002 to S2003 mentioned above (S2032, S2033).

More specifically, in S2032, the data acquiring section 105 accesses the storage unit 2, and counts the number (Nmc) of the patent data belonging to the IPC main class specified in S2031.

In S2033, the data acquiring section 105 determines whether or not the number (Nmc) of the counted patent data is not less than 5000 (Ta). If the number (Nmc) of the patent data is not less than 5000 (Ta), the data acquiring section 105 goes to S2034.

On the other hand, if the number (Nmc) of the patent data is less than 5000 (Ta), the data acquiring section 105 goes to S2035, and then selects the IPC main class specified in S2031 as the population that is the analysis object. In this step, even if the number of patent data is less than 5000 (Ta), the technical field which constitutes a candidate of the population that is the analysis object is not extended unlike the process of S2003, S2013 and S2023 mentioned above. It composes in this way because there is a possibility that the data of a different technical field in the data of the analysis object may mix if the technical field of the population that is the analysis object is extended too much.

In S2034, the data acquiring section 105 determines whether or not the value which divided "the number (Nmc) of the patent data belonging to the IPC main class counted by S2032" by "the number (Nsc) of the patent data belonging to the IPC subclass counted by S2022" is larger than "2," according to the same procedure as S2014 mentioned above. More specifically, the data acquiring section 105 determines whether or not "Nmc" counted in S2032 and "Nsc" counted in S2022 satisfy the relation shown in the following [Equation 8]:

$$[\text{Equation 8}]$$

$$Nmc\ /\ Nsc\ >\ 2$$

If "Nmc" counted in S2032 and "Nsc" counted in S2022 satisfy the relation of [Equation 8], the data acquiring section 105 goes to S2035, and then selects the IPC main group specified in S2031 as the population that is the analysis object. On the other hand, if "Nmc" counted in S2032 and "Nsc" counted in S2022 do not satisfy the relation of [Equation 8], the data acquiring section 105 goes to S2025 and then processes S2025 to S2029 mentioned above.

Next, the process of S2036 to S2039 executed after the process of S2035 (process for selecting the IPC main class) will be explained.

In S2036, the data acquiring section 105 accesses the storage unit 2, and then classifies the patent data belonging to the specified IPC main class according to the fiscal year, and counts the number (Nmc (y)) of the patent data according to the classified fiscal year, following the same procedure as S2005 mentioned above.

In S2037 to S2039, the data acquiring section 105 executes the same process as S2006 to S2008 mentioned above. That is, the data acquiring section 105 determines whether or not the number of cases (Nmc (y)) according to the fiscal year is larger than 20 (Tb) in every number of cases (Nmc (y)) according to the fiscal year of the patent data counted in S2036. Here, the same value as S2006 is used for 20 of the threshold value (Tb). The data acquiring section 105 accesses the storage unit 2, and obtains the patent data classified into the fiscal year larger than 20 (Tb) and the patent attribution information of the patent data, as data of the analysis object, using the determination result.

After ending the process of S2037 to S2039, the process of S200 is completed, and the process shifts to the process S210 shown in FIG. 3.

As explained above, the fourth modified example searches for the patent data of the technical field near the specified IPC subgroup until it approaches the number considered to be required, even when the populations of the patent data belonging to the IPC subgroup specified by the analyst are smaller than the number considered to be required for calculating the evaluation value with high reliability. Therefore, a possibility that patent data required for calculating a reliable evaluation value gather can be improved only by specifying the technical field of the patent data in which an analyst wants to analyze using an IPC subgroup. As a result, in the evaluation value calculation process executed following the process shown in FIGS. 16 and 17 (process of S200), a possibility that a reliable evaluation value is calculated becomes high.

« Fifth Modified Example »

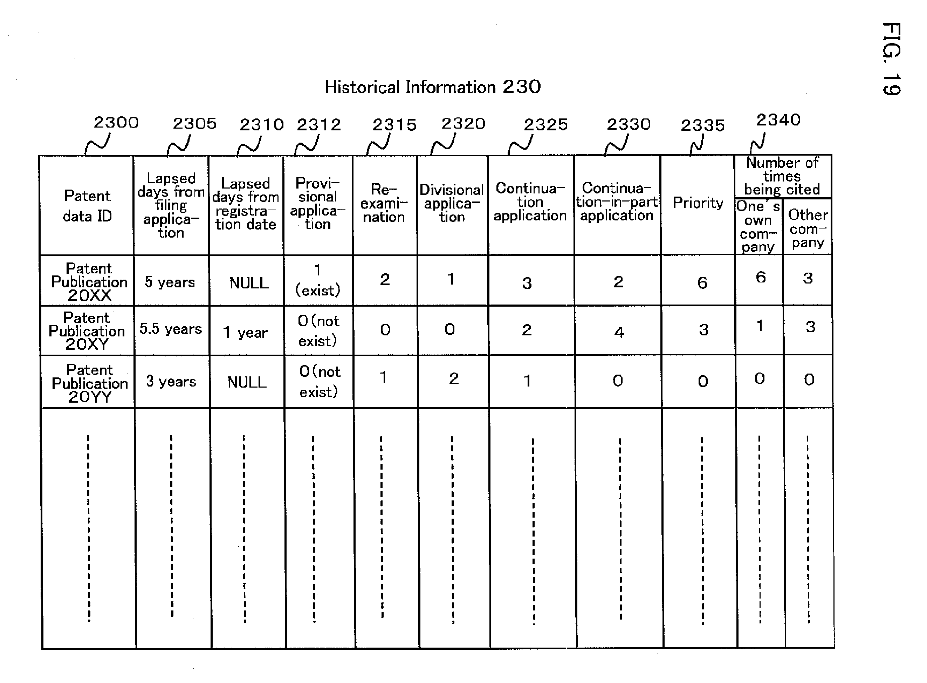

Next, a fifth modified example of the embodiment will be explained using FIGS. 19 to 24. The fifth modified example partially changes the function of the evaluation value calculation section 120 which the information processing unit 1 of the embodiment mentioned above has. In the process executed by the fifth modified example, the data of patent applications which have been filed to the United States Patent and Trademark Office is used as patent data of an evaluation target. In order to raise the accuracy of the valuation of the patent data of patent applications have been filed in the United States (United States patent gazette), the following points are changed from the above-mentioned embodiment.

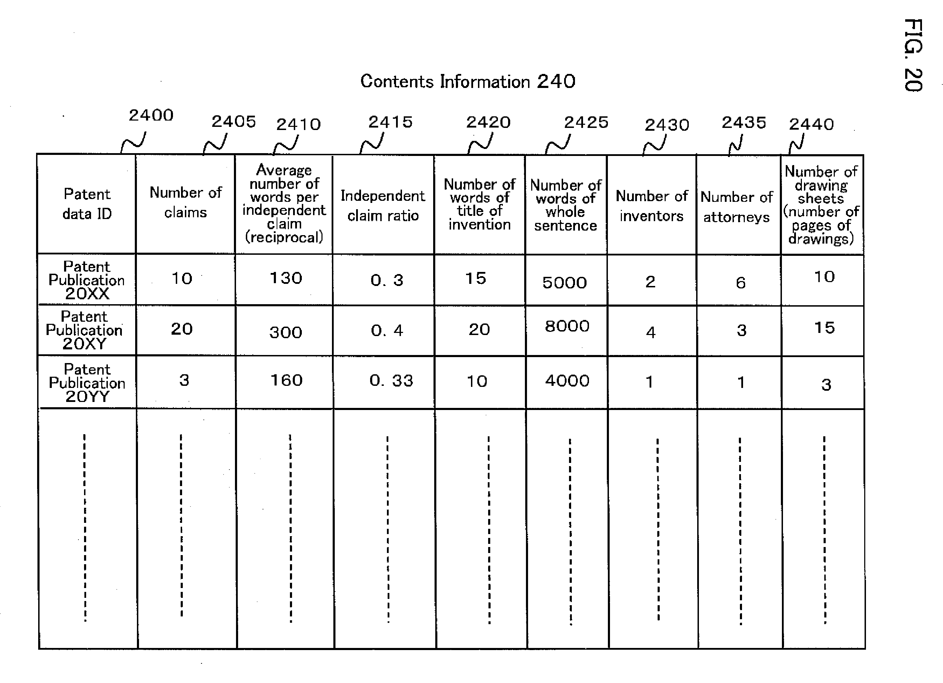

Specifically, in the fifth modified example, the historical information 210 and the contents information 220 used for evaluation value calculation by the embodiment are changed into the information shown in FIGS. 19 and 20.

It changed in this way because it was found out that the maintenance ratio of patent right is closely related with the information shown in FIGS. 19 and 20, as a result of the present inventor conducting analysis the relation between the historical information and the contents information of the US patent application and the maintenance ratio of patent right with a statistical method. Since it can estimate that the patent with the high maintenance ratio of patent right is a worthy patent important for patentees, such as an enterprise, the fifth modified example estimates patent worth by using information shown in FIGS. 19 and 20. That is, in the fifth modified example, the historical information and the contents information used for valuation are changed from those of the process of the above-mentioned embodiment, in consideration of the trend of the US application.

In the fifth modified example, the data of the contents information 240 as well as the historical information 230 are treated as basic data of the evaluation calculation of patent data (According to the embodiment, contents information 220 was treated as auxiliary data used for the correction of the evaluation value obtained from the historical information 210.).

It is done in this way because it was found out that the relation between the contents information and the maintenance ratio of patent right is of the same grade as the relation between the historical information and the maintenance ratio of patent right, as a result of the present inventor conducting analysis mentioned above.

Next, a configuration of the fifth modified example will be explained. The functional constitution of the fifth modified example is the same as the functional constitution shown in FIG. 1, except some details which differ in a part of the function of the evaluation value calculation section 120 and some details which differ in a part of the information stored in the storage unit 2. In addition, although the evaluation value calculation section 120 differs in a part of the functions from the section of the embodiment, the same reference numeral as the embodiment explanation is used for convenience.

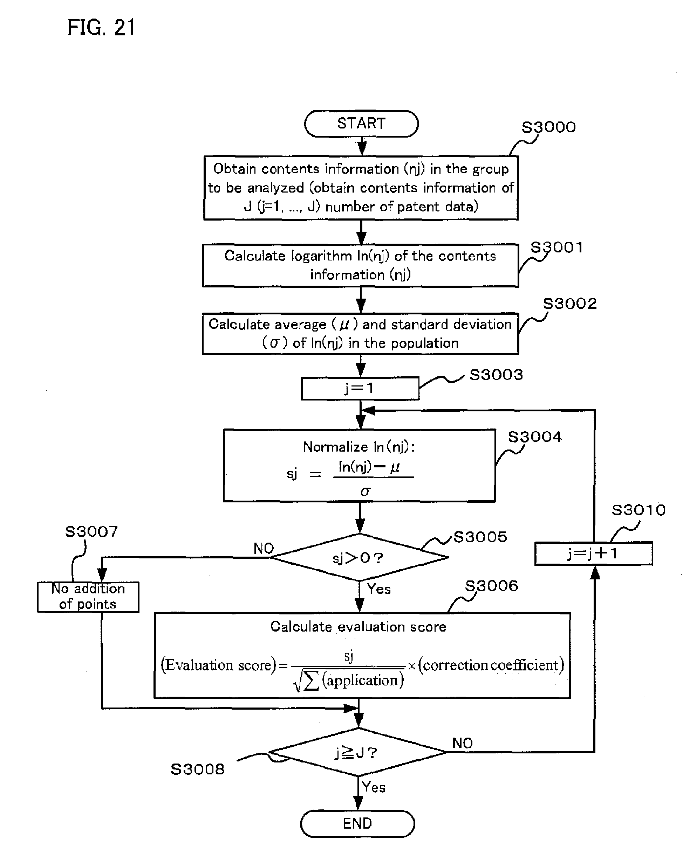

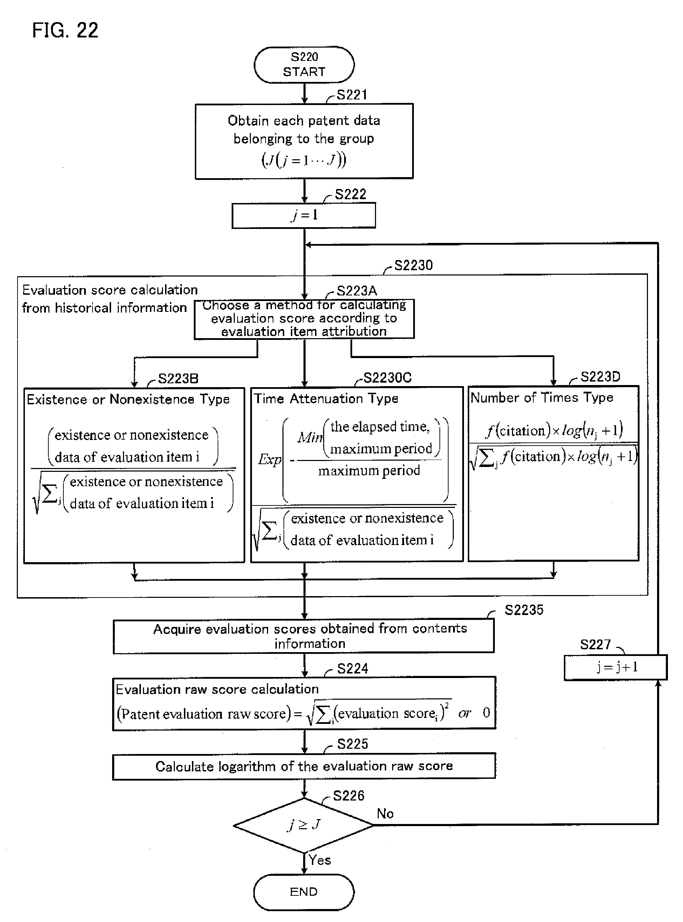

More specifically, the historical information 230 shown in FIG. 19 and the contents information 240 shown in FIG. 20 are stored in the storage unit 2. The evaluation value calculation section 120 executes the process step shown in FIGS. 21 and 22 mentioned later by using the historical information 230 and the contents information 240, and evaluates the patent data. In addition, the function of the fifth modified example is realized like the embodiment by the hardware shown in FIG. 2.

Next, the historical information 230 of the fifth modified example will be explained. FIG. 19 is a figure showing schematically an example of a data configuration of the historical information of the fifth modified example of the embodiment.

As shown in FIG. 19, the historical information 230 includes field 2300 for registering "patent data ID (gazette number etc.)," field 2305 for registering "lapsed days from filing date of application," field 2310 for registering "lapsed days from registration date," field 2312 for registering the information showing the existence or nonexistence of "provisional application," field 2315 for registering the information showing the number of times to which "reexamination request" is performed, field 2320 for registering the information showing the number of times of "divisional application," field 2325 for registering the information showing the number of times of "continuation application," field 2330 for registering the information showing the number of times of "continuation-in-part application," field 2335 for registering the information showing the number of times of "priority" and field 2340 for registering the information showing "the number of times being cited," of which one record is composed. In addition, the historical information 230 consists of a plurality of records.

Here, the "lapsed days from application" and the "lapsed days from registration date" are the information about the period of corresponding patent data, and are the same as the information on the above-mentioned embodiment.

To the field 2312 for registering the information showing the existence or nonexistence of "provisional application," 1 for example is given when the specified action is done, and 0 for example is given when the specified action is not done. That is, "1" is given if the patent application is applied after the patent data performed "provisional application," and "0" is given if application is not performing "provisional application."

The number of times to which corresponding contents were performed, respectively is given to fields 2315 to 2340 for the patent data. For example, the number of times of the "reexamination request" performed for the patent data with the patent ID registered into the field 2300 is given to the field 2315. Furthermore, for example, the number of times of the "divisional application" performed for the patent data with the patent ID registered into the field 2300 is given to the field 2320. The number of times of the "continuation application" performed for the patent data with the patent ID registered into the field 2300 is given to the field 2325.

The number of times of the "continuation-in-part application" performed for the patent data with the patent ID registered into the field 2300 is given to the field 2330. The number of times of the "priority" performed for the patent data with the patent ID registered into the field 2300 is given to the field 2335 by using the number of the basic applications of "priority." The information registered into the field 2340 is the same as the information on the above-mentioned embodiment.

In addition, in the fifth modified example, the historical information 230 is beforehand stored in the storage unit 2.

As a result of the present inventor conducting analysis for the relation between the historical information and the patent maintenance ratio of the US patent application with a statistical method, the historical information 230 of such a configuration is used because the historical information 230 shown in FIG. 19 and the patent maintenance ratio are closely related was found out, as mentioned above.

For example, the patent application based on provisional application has a tendency for the patent maintenance ratio to be higher than the patent application which is not based on provisional application. Moreover, for example, the patent with more reexamination requests has a tendency for the patent maintenance ratio to be higher than the patent with less reexamination requests. Similarly, patent application with more divisional applications (or applications with more priorities) has a tendency for the patent maintenance ratio to be higher than application with less divisional applications.

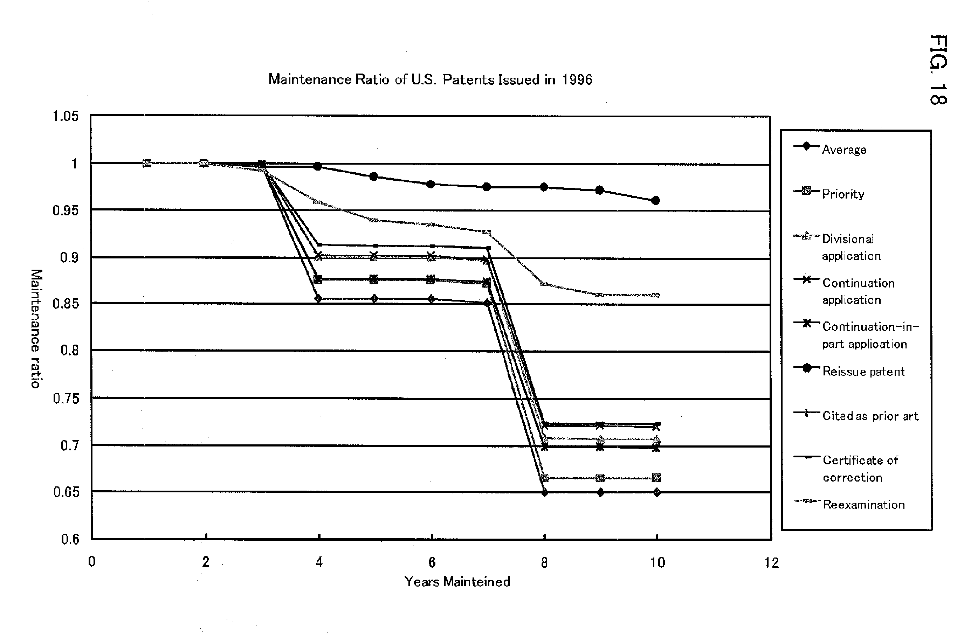

FIG. 18 shows a graphic chart showing the result of having actually analyzed the relation of the existence or nonexistence of historical information and the maintenance ratio of patent right in an US patent. According to this, it turns out that the maintenance ratio of the patent right, in which such historical information exists is higher than the average maintenance ratio regarding the reexamination request, the divisional application, the continuation application, the continuation in part application the priority and the citation. In addition, although not illustrated about provisional application, it turns out that the same tendency is shown.

Furthermore, when the relation between the number of times of the priority, the provisional application, the divisional application, the continuation application, the continuation-in-part application and the foreign priority, and the maintenance ratio of patent right is analyzed, it turned out that the maintenance ratio of patent right is high as the number of times increases. In particular, many divisional applications, continuation applications, and continuation-in-part applications may be performed in order to obtain a stronger patent, it can be understood that the more the number of times is, the stronger volition of establishing rights applicant has.

Therefore, regarding the divisional application, the continuation application, and the continuation-in-part application, it is preferable that the number of times be used for calculation of the evaluation score by the above-mentioned [Equation 3]. Moreover, regarding the provisional application (and the foreign priority if needed), it is preferable that the existence or nonexistence be used for calculation of the evaluation score by the above-mentioned [Equation 1]. Furthermore, the evaluation score may be calculated by multiplying the result of [Equation 1] with a predetermined correction coefficient.

Next, a data configuration of contents information 240 is shown in FIG. 20.

FIG. 20 is a figure showing schematically an example of the data configuration of the contents information used by the fifth modified example of the embodiment.

As shown in FIG. 20, the contents information 240 includes field 2400 for registering "patent data ID (gazette number etc.)," field 2405 for registering "the number of claims" of the patent data, field 2410 for registering "the average number of words per independent claim," field 2415 for registering "the independent claim ratio" of the patent data, field 2420 for registering "the number of words of the title of invention," field 2425 for registering "the number of words of whole sentence" of the patent data, field 2430 for registering "the number of inventors" of the patent data, field 2435 for registering "the number of attorneys" of the patent data and field 2440 for registering "the number of pages of drawings," compose one record. In addition, the contents information 240 consists of a plurality of records.

Here, "the number of claims" is information showing the number of claims of the patent data (patent application). The "average number of words per independent claim" is information counting and totaling the number of words of the independent claim of the patent data, and dividing by the number of independent claims. The "independent claim ratio" is information showing the ratio of the independent claim occupied in all the claims of the patent data. The "number of words of the title of invention" is information counting and obtaining the number of words of the title of the invention of the patent data. The "number of words of whole sentence" is information counting the number of words in the whole sentence document written in the specification of the patent data. The "number of inventors" and the "number of attorneys" are information counting the number of the inventors and attorneys written in the application form of the patent data. The "number of pages of drawings" is information counting the number of sheets on which the drawings of the patent data are illustrated. In addition, in the fifth modified embodiment, if FIGS. 1, 2, and 3 are described to 1 page in a specification, "the number of pages of drawings" is counted that it is one sheet. That is, it counts not with the number of drawings but with the number of pages of drawings.

Moreover, in the fifth modified example, the contents information 240 is beforehand stored in the storage unit 2. However, the contents information 240 may be generated by the information processing unit 1 in a text mining technique or the like using the patent data. In this situation, the "number of claims," the "average number of words per independent claim," the "independent claim ratio," the "number of words of title of invention," the "number of words of whole sentence," and the "number of pages of drawings" may be generated by using the substance information of each patent data. Further, the "number of inventors" and the "number of agents" may be generated by using the bibliographic information.

The contents information 240 of such a configuration is used because it is found out that the contents information 240 shown in FIG. 20 and the patent maintenance ratio are closely related, as a result to which the present inventor performed analysis for the relation between the contents information of US patent application and the patent maintenance ratio with a statistical method as mentioned above.

For example, in the US patent application, the patent application with many claims has a tendency for the patent maintenance ratio to be higher than the patent application with fewer claims. In addition, when patent applications have low values in the "average number of words of independent claim" and the "independent claim ratio", they have a tendency for the patent maintenance ratio to be high.

Next, a process executed by the patent evaluation device of the fifth modified example will be explained. In the fifth modified example, since the historical information 230 and the contents information 240 are beforehand stored in the storage unit 2, it is not necessary to execute the initial setting phase A1. Moreover, in the fifth modified example, the same process as the device of the above-mentioned embodiment is executed except the process step S220 in the patent evaluation phase A2 (refer to FIG. 3). In addition, since the fifth modified example uses the US patent gazette as patent data of an evaluation target, it preferably receives specification of the group of S200 by the "USPC class" and the "USPC subclass."

Hereafter, the explanation will focus on a process of the fifth modified example which is different from the above-mentioned embodiment.

In S220, The evaluation value calculation section 120 executes the process shown in FIGS. 21 and 22. FIGS. 21 and 22 are flow charts showing the details of the process which calculates the evaluation value of each patent data executed by the patent evaluation device of the fifth modified example of the embodiment. In addition, FIG. 21 shows the flow of the process which is executed before the process shown in FIG. 22 and which calculates an evaluation score from the contents information. FIG. 22 is a figure which changes a part of FIG. 10 mentioned above.

More specifically, after the evaluation value calculation section 120 starts a process of S220 in FIG. 3, the evaluation value calculation section 120 executes the process which calculates the evaluation score from the contents information 240, shown in FIG. 21.

First of all, the evaluation value calculation section 120 obtains the contents information 240 of the patent data 200 belonging to the group generated by the classification of S210 (S3000). Here, one group obtained is assumed as the contents information 240 of J patent data. Moreover, in order to distinguish each of J, suffix j (where j= 1, 2, ..., J) is used. Moreover, in order to explain simply, an example of the case where the evaluation score of contents information 240 of one group (group of J patent data) is calculated is shown.

Next, the evaluation value calculation section 120 makes logarithm the obtained contents information 240. More specifically, the evaluation value calculation section 120 calculates the value made by logarithm for every contents information for all the contents information 240. In addition, in the following, the contents information 240 is expressed with "n," suffix j which distinguishes each of J is attached, and the contents information of each patent data is set to "nj." The contents information of each patent data made by logarithm shows by using "ln(nj)." Moreover, in order to explain simply, in the following, the flow which calculates the evaluation score about one kind of contents information "n" is shown.

Next, the evaluation value calculation section 120 calculates the average ($\mu$) and the standard deviation ($\sigma$) of the contents information made by logarithm in a population (S3002). That is, the evaluation value calculation section 120 calculates the average ($\mu$) and the standard deviation ($\sigma$) in the group by using J contents information (nj) made by logarithm.

Next, the evaluation value calculation section 120 sets variable j to 1 (S3003), and goes to the process of S3004.

In S3004, the evaluation value calculation section 120 normalizes the contents information made by logarithm (ln(nj)) by using [Equation 9] showing in the following. In addition, the normalized contents information is expressed with "sj."

[Equation 9]

$$ sj = \frac{\ln(nj) - \mu}{\sigma} $$

Next, the evaluation value calculation section 120 determines whether or not the contents information (sj) normalized by S3004 is larger than "0" (S3005), goes to S3006 if the contents information (sj) is larger than "0," and goes to S3007 if the contents information (sj) is less than "0." That is, if "sj>0" is satisfied, it goes to S3006, and if it does not satisfy, it goes to S3007. Since (sj) is a normalized value, "0" shows the average in a group.

In addition, the case where the contents information is the "average number of words of independent claim" and the "independent claim ratio" is mentioned later.

In S3006, the evaluation value calculation section 120 substitutes the contents information (sj) normalized by S3004 for showing in the following [Equation 10A], calculates an evaluation score, and goes to S3008.

[Equation 10A]

$$\text{(Evaluation score)} = \frac{sj}{\sqrt{\sum (\text{application})}} \times (\text{correction coefficient})$$

In addition, "Σ(application)" in the denominator of [Equation 10A] is the sum total of the number of applications in this group (here, it is J). Moreover, the "correction coefficient" is a coefficient beforehand given for every contents information. For example:

in the case of the "number of claims," the "correction coefficient" is assumed to 5;

in the case of the "number of words of the title of invention," the "correction coefficient" is assumed to 3; in the case of the "number of words of whole sentence," the "correction coefficient" is assumed to 2;

in the case of the "number of inventors," the "correction coefficient" is assumed to 2;

in the case of the "number of attorneys," the "correction coefficient" is assumed to 2; and

in the case of the "number of sheets of drawings," the "correction coefficient" is assumed to 2.

Here, it uses "Σ(application)" because the influence of a population is taken into consideration, and because the historical information and the contents information are standardized by taking to the denominator through an element common to the Patent Gazette named the number of applications.

Moreover, dividing by the positive square root of "Σ(application)" has the aim of decreasing the gap between populations, and balancing the evaluation items of the historical information. That is, the evaluation score about the evaluation items of historical information is divided like above-mentioned [Equation 1] and [Equation 2] by the positive square root of the total value of the existence or nonexistence data (if applicable 1, if not applicable 0, for example). Therefore, the evaluation score about the evaluation items of the historical information easily becomes small, so that there are many numbers of applications in group involved. There is a possibility that the specific gravity of the evaluation score about the evaluation items of contents information for the evaluation raw score calculated may become too high, so that there are many numbers of applications in group involved, if adjustment with the same or similar contents information is not performed. Therefore, about the contents information, the division is performed by the positive square root of "Σ(application)."

The multiplication of the correction coefficient is performed because the significance of correlation with the maintenance ratio differs for every contents information.

The evaluation value calculation section 120 associates and holds the calculated evaluation score for every patent data. That is, the evaluation value calculation section 120 generates the data which associated the evaluation score which corresponds for every patent data ID, and stores it in the predetermined region of a memory (in addition, the stored data is used by the flow of FIG. 22).

When going to S3007, the evaluation value calculation section 120 goes to S3008 without making the normalized contents information (sj) applicable to addition of points. Only when the normalized contents information (sj) exceeds the average "0," the addition of points is performed because there is a tendency for evaluation accuracy to deteriorate if reduction of points is to be performed when the contents information is under the average "0."

Thus, only contents information nj not less than the average in a group is made applicable to the addition of points by S3005, S3006 and S3007 (for the "average number of words of independent claim" and the "independent claim ratio," the information not more than an average is made applicable to the addition of points as below-mentioned). It composed in this way because the present inventor found out that the accuracy of the evaluation value worsened when using the contents information of a value smaller than the average (except for the "average number of words of independent claim" and the "independent claim ratio").

In S3008, the evaluation value calculation section 120 determines whether or not the process for the contents information of all the patent data j is performed (S3008).

More specifically, the evaluation value calculation section 120 determines whether or not the variable j satisfies "j≥J." If "j≥J" is satisfied, the evaluation value calculation section 120 determines with performing the process about the contents information of all the patent data j, and shifts from it to the process of FIG. 22.

On the other hand, if "j≥J" is not satisfied, the evaluation value calculation section 120 sets the variable j to j+1 (S3010), returns to S3004, and performs the process about the contents information of the following patent data.

Next, the process flow shown in FIG. 22 will be explained.

More specifically, after the process of FIG. 21 is completed, the evaluation value calculation section 120 performs the process step of FIG. 22 using the historical information 230, obtains for the evaluation raw score of each patent data, and makes the evaluation raw score logarithm. In addition, the process shown in FIG. 22 is the same as the process of FIG. 10 except the point shown in FIG. 10 of having changed a part of the process of S230, and the point which added a process of S2235 before S224. Therefore, in the following, the process of S2230 and the process of S2235 which changed S230 of FIG. 10 will be explained, and the explanation of the same process as FIG. 10 is omitted.

S2230 is the same except having changed S223 of FIG. 10 and the procedure of calculation of the time attenuation type evaluation score.

More specifically, in S2230C, the correction by the contents information is not performed. That is, the evaluation value calculation section 120 obtains for the evaluation score using the information registered into fields 2305 and 2310, and the time attenuation type evaluation calculating method [Equation 2] mentioned above. The correction by the contents information is not performed for the evaluation score. After completing the process of S2230, the evaluation value calculation section 120 goes to S2235.

In addition, the information registered into field 2312 among the historical information 230 is used by S223B which is the existence-or-nonexistence type evaluation calculating method. Moreover, the information registered into fields 2315, 2320, 2325, 2330, 2335, and 2340 is used by S223D which is the number of times type evaluation calculating method.

In S2235, with reference to the data associated with the evaluation score which is obtained in FIG. 21, stored on the memory, and which corresponds to each patent data ID, the evaluation value calculation section 120 obtains the evaluation score, if any, calculated from the contents information for patent data j and goes to S224.

In S224, the evaluation value calculation section 120 calculates the patent evaluation raw score with the same procedure as FIG. 10. In addition, in this step, the evaluation raw score is calculated by using above-mentioned [Equation 5] from the evaluation score obtained from the historical information, and the evaluation score obtained from the contents information, if the evaluation score was obtained from the contents information in S2235.

More specifically, it is preferable that the contents information is incorporated in evaluation on a par with the historical information as follows.

[Equation 11]

$$(\text{Patent evaluation raw score}) = \sqrt{\begin{array}{l}\sum_i \left(\text{evaluation score of historical information}_i\right)^2 \\ + \sum_j \left(\text{evaluation score of contents information}_j\right)^2\end{array}} \quad or \quad 0$$

Thus, according to the fifth modified example of the embodiment, after the tendency of the US patent is understood, the evaluation items of the historical information 230 and the evaluation items of the contents information are selected, and the patent data is evaluated. Therefore, according to the fifth modified example, valuation of the US patent can be performed now with high precision.

Moreover, in the fifth modified example, although the patent evaluation is shown in consideration of the tendency of the US patents, it is just an example. For example, it is possible to execute a patent evaluation in consideration to the tendency of each of other countries by selecting the historical information and the contents information to be used in the evaluation according to the tendency of patent publications of each country.

In the fifth modified example, when the contents information is the "average number of words of independent claim" and the "independent claim ratio," the multiplication of "-1" is performed to (sj) of the normalized contents information obtained in S3004 [Equation 9], and the following value Sj is obtained.

$$Sj = -sj$$

That is, when the value sj performed logarithm normalization is less than the average (0), the value Sj exceeds zero. In S3005, it is determined whether or not the value Sj=-sj is larger than "0." It does in this way because the "average number of words of independent claim" and the "independent claim ratio" have a tendency for the maintenance ratio of the patent right of the patent data to become high so that the value is small. That is, in the following steps, items less than the average are added by reversing the sign of "sj." When the value Sj exceeds zero, the value obtained with a following equation in S3006 is assumed to the evaluation score.

[Equation 10B]

$$(\text{Evaluation score}) = \frac{Sj}{\sqrt{\sum(\text{application})}} \times (\text{correction coefficient})$$

Here, for example:

in the case of the "average number of words of independent claim," the "correction coefficient" is assumed to 5; and in the case of the "independent claim ratio," the "correction coefficient" is assumed to 2.

In the fifth modified example, a correction may be made to the contents data 240 of the evaluation target about the patent data of the applicant of the country of languages other than English-speaking countries. This is because the number of words may increase too much or decrease too much by translation from a native language and it is not possible to simply compare the patent data from the applicants in English-speaking countries. In an application claiming a priority on the basis of Japanese application, for example, the "average number of words of independent claim" and the "number of words of title of invention" the maintenance ratio has a high tendency near an average. Then, about the application claiming a priority on the basis of Japanese application, although the point using above-mentioned value sj [Equation 9] performed logarithm normalization is the same as the above, the following values Sj are calculated using value sj.

$$Sj = \exp(-(sj^2/2)) - \exp(-0.5)$$

That is, in the case of $|sj|=1$ (standard deviation), it is set to $Sj=0$. In the case of $sj=0$ (average) vicinity, Sj becomes a positive number. In the case of $|sj|<l$, Sj becomes a negative value. When the value Sj exceeds "0" in S3005, the value obtained above [Equation 10B] in S3006 is assumed to the evaluation score.
As above-mentioned, for example:

in the case of the "average number of words of independent claim," the "correction coefficient" is assumed to 5; and in the case of the "number of words of title of invention," the "correction coefficient" is assumed to 3.

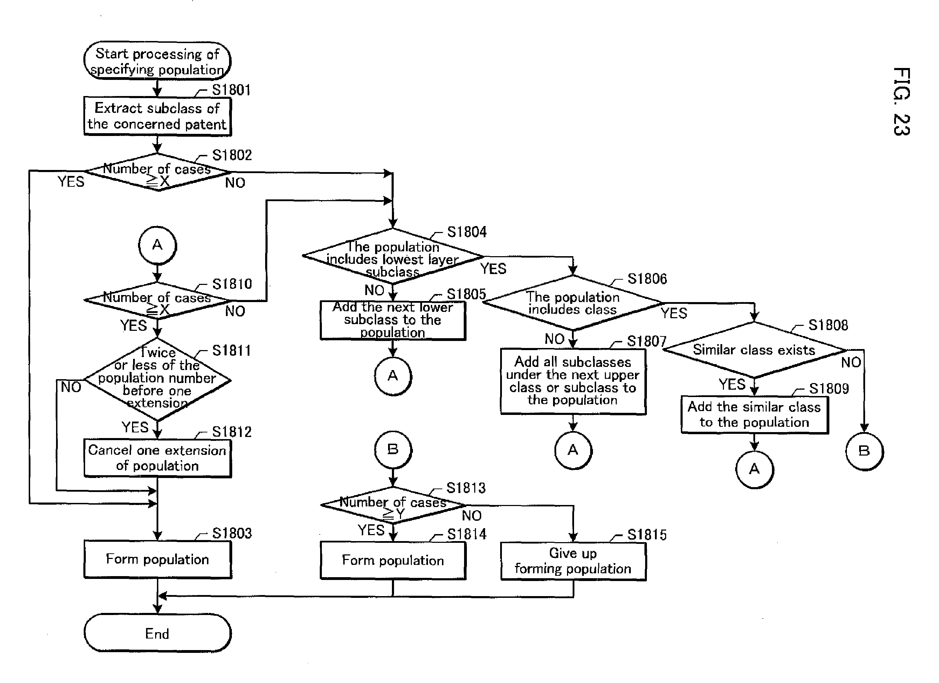

FIG. 23 is a flow chart showing the details of the process which specifies an analysis object population in analysis of the US patent. Also in analysis of the US patent, in order to obtain a reliable evaluation value, the population of a certain amount of size is needed as data of an analysis object. Then, in order to obtain the population of an optimum size, the data acquiring section 105 executes the following processes.

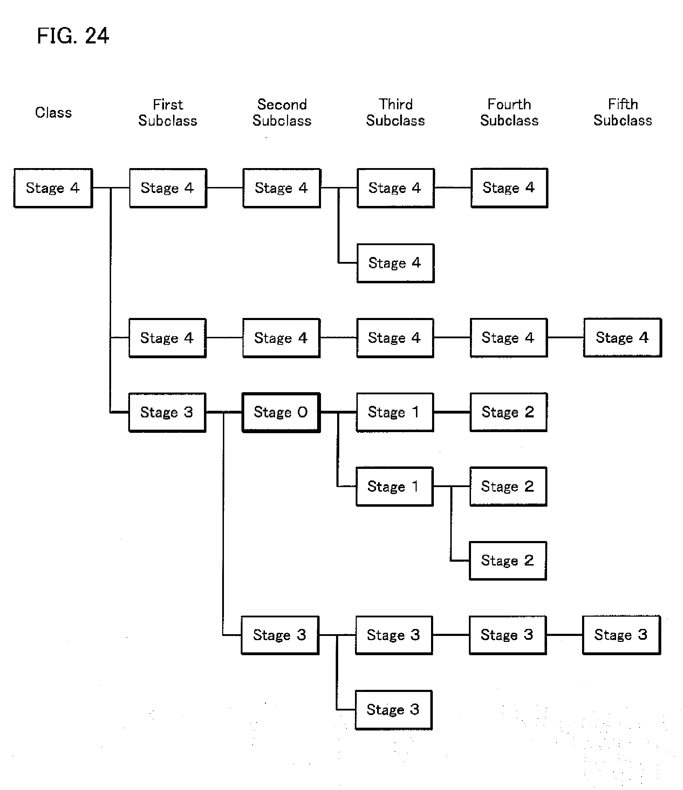

Here, in order that the analysis object population is specified, a US Patent Classification (hereinafter, refer to as "USPC") code is used for the reasons of the reliability of a classification, a user's facilities, etc.
An example of the hierarchical structure of USPC is shown in FIG. 24. The USPC is a hierarchical classification system composed of hundreds of classes and the lower layer subclass for each class. The subclass also has a hierarchical structure from the upper layer to the first subclass, the second subclass, the third subclass, and so on. Generally, a large technical region is specified as the upper classification, and it is limited to as narrow a technical region as a lower layer classification. Although a certain patent is included in the technical region specified according to the upper classification, when it belongs to neither of the subordinate's lower layer classification, only the class number of the upper layer concerned is given. In the following example, in order to obtain a reliable evaluation value, it is assumed to X=5000 as a desirable size, and Y=1000 as a minimum size.

First of all, the USPC code of the patent which it is going to evaluate is read from the storage unit (S1801). For example, when the USPC code to the second subclass is given to the concerned patent, even this second subclass is read. This USPC code constitutes a standard which extracts an analysis object population including the concerned patent. Next, the storage unit is searched for the USPC code specified to the second subclass of the above, and the number of cases is counted by making the hit patent into a population. In the example of FIG. 24, for example, the part shown in "stage 0" constitutes the population. This population number is compared with the threshold value X (=5000), when the population number is not less than X (when it is "YES" in S1802), the concerned population become final and conclusive as the analysis object population (S1803), and the population formation process is completed. When the population number is less than X (when it is "NO" in S1802), it shifts to an extension processing to lower layer explained in next.

In executing the extension processing to the lower layer, it is determined whether or not the lowest layer subclass is included in the population. When the lowest layer subclass is not included in the population (when it is "NO" in S1804), the population is extended under one hierarchy since the extension to the lower layer is more possible (S1805). In an example of FIG. 24, for example, when the part shown in "stage 0" is the population, the population is extended even to the part shown in "stage 1." Moreover, when the part shown in "stage 0" and "stage 1" is the population, the population is extended even to the part shown in "stage 2." The classification of a lower layer (for example, the third subclass) is notionally included by the classification which specifies the population of a basis (for example, the second subclass). Since it is only the classification that added the lower layer classification separately on the convenience of the classification, it is considered that it does not become extending a population's technical region greatly even if it performs the extension to the lower layer.

On the other hand, when the lowest layer subclass is included in a population (when it is "YES" in S1804), it shifts to the extension processing to an upper layer.

In executing the extension processing to the upper layer, it is determined or not whether a class is included in the population. When a class is not included in the population (when it is "NO" in S1806), the class on one hierarchy or all the subclasses below the subclass are added to the population since the extension to the upper layer is more possible (S1807). In the example of FIG. 24, for example, when the part shown by "stage 0" to "stage 2" is the population, the population is extended even to the part shown in "stage 3." Moreover, when the part shown by "stage 0" to "stage 3" is the population, the population is extended even to the part shown in "stage 4." Since the upper (for example, the first subclass) classification includes the classification (for example, the second subclass) which specifies the population of a basis, it is not changing a population's technical region even if it performs the extension to the upper layer.

On the other hand, when a class is included in a population (when it is "YES" in S1806), it shifts to the bonding process between classes since it cannot extend to the upper layer any more.

In executing the bonding process between classes, it is determined whether or not a class similar for the class to which the population belongs exists. When a similar class exists (when it is "YES" in S1808), the concerned similar class is added to the population (S1809). In order to determine the existence or nonexistence of a similar class, for example, the concordance information on the USPC and the IPC is used. The information to which the concordance information on the USPC and the IPC enables search of the IPC code corresponding from the USPC code, and the information which enables search of the USPC code corresponding from the IPC code is included, and this information is stored in the storage unit. However, there are non-shared portions of the technical range of the USPC and the IPC in the existing concordance information. Then, it is preferable that the concordance information is filled up after referring to "References to Other Classes" (reference of other classes) and "Lines With Other Classes and Within This Class" (relation between other classes and this class) specified per each class in the USPC.

In order to add a similar class to the population, first of all, the concordance information is searched using the information on the class of the USPC that the population belongs, and then the corresponding IPC code is obtained. The concordance information is searched using the obtained IPC code, and the corresponding USPC code is obtained. If the class which is not included in the population is in the obtained USPC code, it can be newly added to the population as a class similar to the class in which the population is included. In this way, although the obtained similar class differs from the class to which the population of a basis belongs, even if it is similar at the point corresponding to the same IPC code and extends the population, it is not changing a technical region substantially.

When the population is extended under one hierarchy by the above-mentioned extension processing to a lower layer (S1805), the population is extended on one hierarchy by the extension processing to an upper layer (S1807) and the similar class is added to the population by the bonding process of the similar class (S1809), in any case, the number of the new population concerned is counted.

This new population number is compared with the threshold value X (=5000). When the new population number is not less than X (when it is "YES" in S1810), it is determined whether or not the concerned new population number is not more than the twice of the population number before an extension only a single step.

When the concerned new population number is more than the twice of the population number before an extension only a single step (when it is "NO" in S1811), this new population becomes final and conclusive as an analysis object population (S1803), and the population formation process is completed.

On the other hand, when the concerned new population number is not more than the twice of the population number before an extension only a single step (when it is "YES" in S1811), the population number is not fulfilling for a risk of different field mixed by population extension. Therefore, it returns the population before an extension only a single step (S1812), and becomes final and conclusive as an analysis object population (S1803), and completes the population formation process.

When the new population number is less than X (when it is "NO" in S1810), it further shifts to above-mentioned population extension processing in order to try an extension of the population (S1804 to S1809).

In spite of having tried the population's extension, when even a similar class is not exist in S1808 (when it is "NO" in S1808), its population number are compared with the minimum threshold value Y (=1000). When the population number is not less than Y (when it is "YES" in S1813), this population becomes final and conclusive as an analysis object population (S1814), and the population formation process is completed. When the population number is less than Y (when it is "NO" in S1813), it gives up a population's formation, and notifies a user (S1815).

The USPC may have very many hierarchies depending on a technical field from the historical development details, and tends to occur great variation in the number of hit patents if all the subclasses below a fixed hierarchy are specified. Since a technical region is not necessarily near even if the code number is near, and conversely the code number is not necessarily near even if a technical region is near, the extraction of an analogous art is not easy. However, according to the above population formation process, the population of a suitable size can be extracted by executing the population's extension processing. Moreover, automatic extracting of the similar class of the USPC can be executed by using the concordance with IPC.

« Sixth Modified Example »

Next, a sixth modified example of the embodiment will be explained.
First, hardware realizing the sixth modified example will be explained. The sixth modified example, as well as the embodiment, is realized by the hardware shown in FIG. 2.
Specifically, a program (score calculation program) for realizing a function of a score calculation section 140 is stored in the auxiliary storage unit 12. The function of the score calculation section 140 is realized by executing the score calculation program stored in the auxiliary storage unit 12 by the CPU 10.

As mentioned above, in the sixth modified example, the score calculation section 140 is added to the information processing unit 1 of the above embodiment. The score calculation section 140 calculate an anti-logarithm of the deviation value ("patent score") obtained by the logarithm of the evaluation value. The reason for adding the score calculation section 140 is to analyze the patent data from different perspectives.
In the above embodiment, the evaluation value calculation section 120 calculates a logarithm of the evaluation value obtained from the historical information 210 and the contents information 220 for visualization. However, if an analyst of the patent data wants to grasp a difference between patents, the difference is compressed in the logarithm data and may not be easy to grasp. Therefore, in the sixth modified embodiment, the score calculation section 140 is added to calculate anti-logarithm of the patent score in order to easily analyze a superiority or inferiority of the patent data.

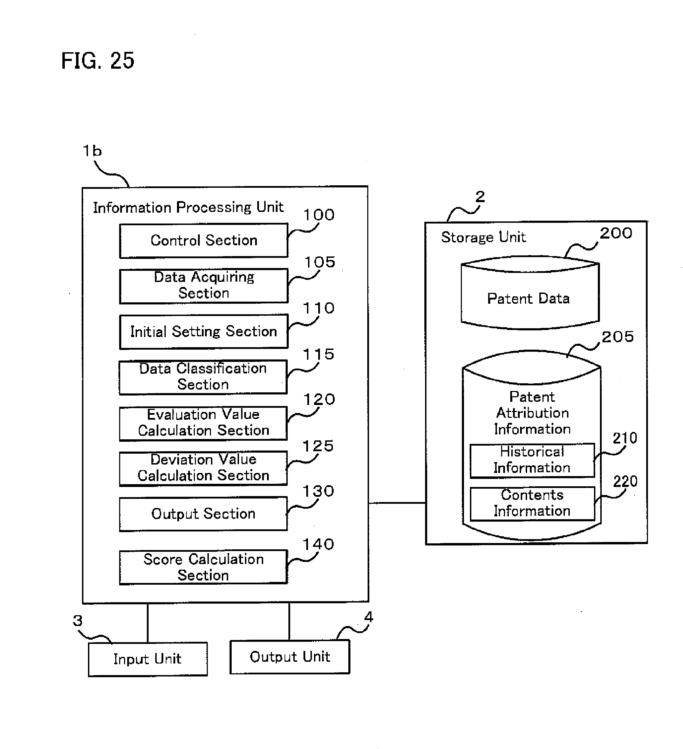

FIG. 25 is a functional block diagram of the sixth modified example of the embodiment.
As shown in the figure, in an information processing unit 1b, the score calculation section 140 is added to the function of the information processing unit 1 of FIG. 1. The score calculation section 140 calculates, according to a request from the analyst, a weighted score of the patent score calculated by the deviation value calculation means 125.

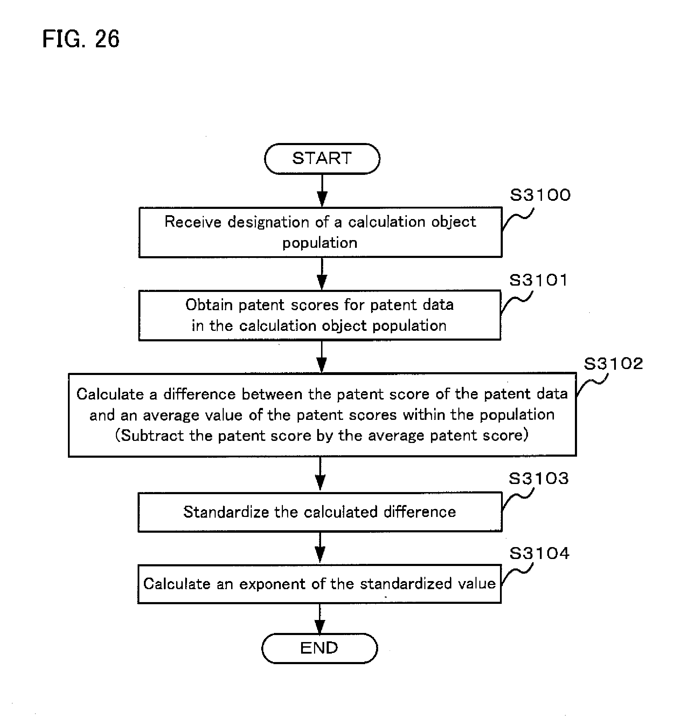

Specifically, the score calculation section 140 performs processing steps of FIG. 26 to calculate the weighted score of the patent score of the evaluation object requested by the user. The processing of the score calculation section 140 is explained below with reference to FIG. 26. Incidentally, the patent score of the patent data for calculating the weighted score is already calculated before processing of FIG. 26 and stored in memory or the like of the information processing unit 1b.

First, the score calculation section 140 receives designation of a population (group) for calculation of the weighted score (S3100).

Next, the score calculation section 140 obtains the patent scores for the patent data belonging to the calculation object population (S3101). Specifically, the score calculation section 140 accesses the memory or the like storing the patent scores and reads the patent scores of the patent data belonging to the calculation object population.

Next, the score calculation section 140 calculates, for each patent score of the patent data belonging to the read population, a difference between the patent score and an average value of the patent scores (an average is 50 in this example) (S3102).
Next, the score calculation section 140 standardizes the calculated difference (S3103) and calculates an exponent of the standardized value as the weighted score (S3104).
Incidentally, in this modified example, methods for calculating the difference or standardizing in S3102-S3104 are not particularly limited. However, for example, the weighted score of the patent score may be obtained by using the following [Equation 12].

[Equation 12]

$$\text{(Weighted score)} = Exp\left(\frac{\text{(Patent score)} - 50}{10}\right)$$

According to this, the weighted score will be a positive value without exception and will be a value 1 or less if the deviation value (patent score) calculated by the above embodiment is the same with or less than the average and 1 or more if the deviation value is the same with or less than the average according to an exponent function. Therefore, for example, if the weighted score is totaled in each enterprise, a large number of patents with patent scores lower than the average have little influence to the total value, but a patent with a patent score higher than the average (especially a patent score far from the average) has large influence to the total value.

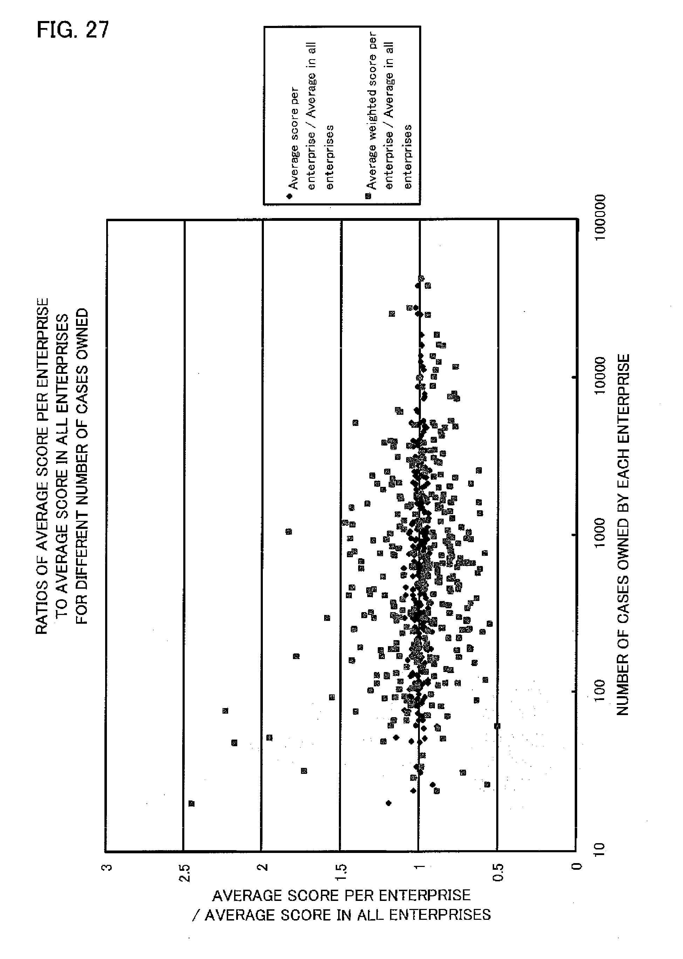

FIG. 27 is a scatter diagram for explaining the usability of the total value of the weighted scores for each enterprise, in which ratios of an average of the weighted score in each enterprise to an average thereof in all enterprises and ratios of an average of the deviation value in each enterprise calculated by the above embodiment to an average thereof in all enterprises are plotted for each enterprise. As shown in the figure, the average values of the deviation value in each enterprise calculated by the above embodiment are not largely different from the average value in all enterprises. Therefore, a total value of the deviation values in each enterprise calculated by the above embodiment shows no more than a magnitude of the number of cases. On the other hand, the average values of the weighted score in each enterprise range from approximately 0.5 to 2 times the average value in all enterprises. Therefore, the total value of the weighted scores in each enterprise shows a comprehensive power including qualitative difference of the patents of the enterprises which is not known from a mere comparison of the number of cases.

As mentioned above, by calculating the weighted score, for example, an analyst in an enterprise may easily determine a superiority or inferiority of a patent of one's own company in a certain technical field. Further, it is easy to determine a superiority or inferiority of a power of patents between enterprises by totaling the weighted score of patents of each enterprise.

<< Seventh Modified Example >>

Next, a seventh modified example of the embodiment will be explained.
The seventh modified example is made by changing the function of the score calculation section 140 of the information processing unit 1b of the sixth modified example. Specifically, in the seventh modified example, a function to obtain two kinds of indexes is added to the function of the score calculation section 140 of the sixth modified example.
The two kinds of indexes obtained in the seventh modified example are a weighted stock score of total effective patent ("WSS") and a weighted score average of effective patents ("WSA"). These indexes (WSS and WSA) are supposed to be used for analyzing a comprehensive technical power of each enterprise. Incidentally, an explanation for the same configuration to the sixth modified embodiment is omitted below.

The WSS is the total in each enterprise of a value obtained by multiplying the weighted score by the number of remaining years for each patent to measure a patent stock (a magnitude considering the number of remaining years) of each enterprise and is calculated by the following formula:

$$\text{Weighted stock score of total effective patent (WSS)}$$
$$= [\{\log (\Sigma_{\text{Effective patents of a specified enterprise}} (\text{Weighted score} \times \text{The number of remaining years})) - \text{Average in the industry}\} / \text{Standard deviation in the industry}] \times 100 + 500$$

Namely, the weighted stock score of total effective patent (WSS) is calculated by multiplying the weighted score by the number of remaining years for each patent, obtaining a total value of the multiplying result for all effective patents owned by a specified enterprise, calculating a logarithm (preferably a natural logarithm) of the obtained total value, and normalizing the logarithm in the industry. Since it is normalized in each industry, a comparison with a different industry is possible.

Incidentally, the formula "$\Sigma_{\text{Condition A}} B$" means a processing to calculate a total of the value B for patents which satisfy the condition A. For the number of remaining years, in case of a Japanese patent, the data acquiring section obtains an application date or an application year covered by the application date from the historical information and the evaluation value calculation section calculates by (Application year + 20 years - The present year). It is preferable that a judgment as to the patent is presently effective be made in advance based on the historical information by the evaluation value calculation section and the judgment result is stored in the storage unit.

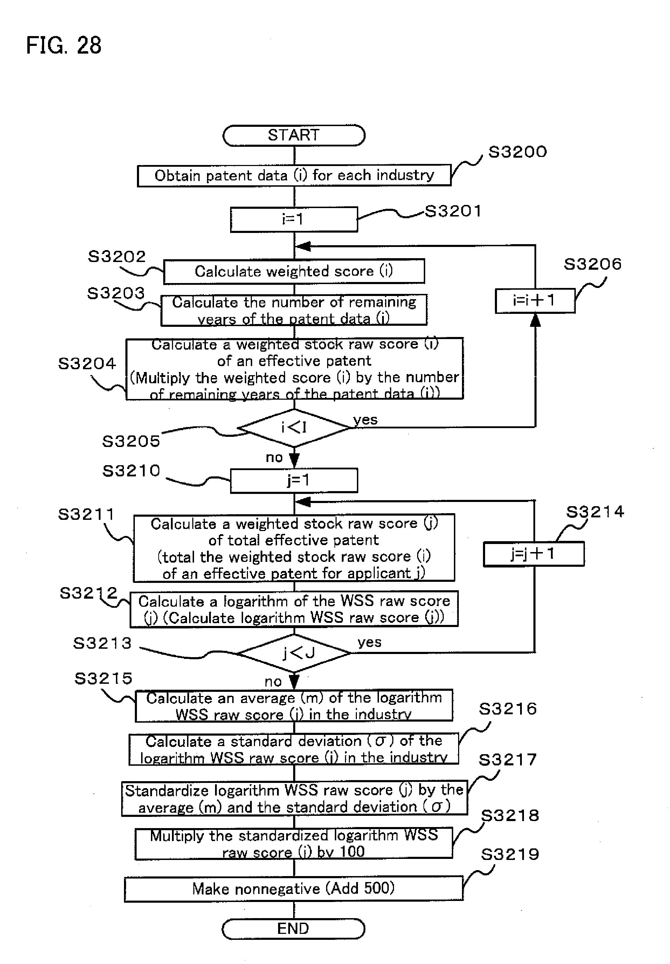

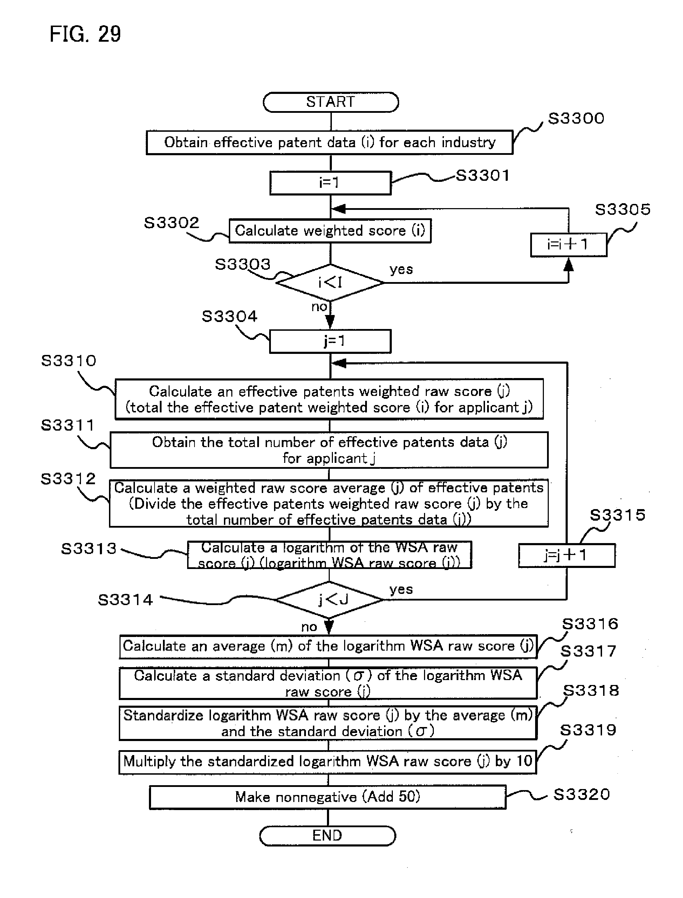

Specifically, the score calculation section 140 executes processing steps shown in FIG. 28 to calculate the WSS of each enterprise belonging to an industry designated by a user. Further, the score calculation section 140 executes processing steps shown in FIG. 29 to calculate the WSA. Incidentally, before the processing of FIG. 28 and FIG. 29, the patent scores of patent data for which the WSS and the WSA are already calculated. Further, the calculated patent scores are stored in the memory or the like of the information processing unit 1b.

First, the processing of calculating the WSS by the seventh modified embodiment is explained in reference to FIG. 28.

As shown in the figure, the score calculation section 140 receives from the user a designation of industry in which the WSS is calculated and, for each designated industry, the patent data (i) (i is an integer which is 1 or more) belonging to the industry is obtained (S3200). Incidentally, to simplify the explanation, it is assumed that a single industry (electric appliances, for example) is designated and the patent data (i) of the industry is obtained.

Further, in the following explanation, it is assumed that the total number of the obtained patent data (i) is I (I is an integer which is 1 or more). Furthermore, it is assumed that an applicant of the obtained patent data (i) is represented by "j" (j is an integer which is 1 or more) and that the total number of applicants is J (J is an integer which is 1 or more).

Next, the score calculation section 140 sets a counter i to "1" (S3201) and, in the procedure shown in FIG. 26, calculates the weighted score (i) (S3202). Incidentally, before the processing of FIG. 28, the weighted score of each patent data (i) may be calculated and stored in the memory or the like. In this situation, at S3202, the score calculation section 140 may simply obtain the weighted score of the corresponding patent data (i) from the memory.

Next, the score calculation section 140 calculates the number of remaining years of the patent data (i) (S3203). The calculation method of the number of remaining years is not particularly limited and it may be calculated by using the "lapsed days from application" among the historical information 210 shown in FIG. 7. For example if the patent data (i) is a patent application in Japan, the number of remaining years can be obtained by subtracting the "lapsed days from application" (5 years for example) from "20" years.

Next, the score calculation section 140 calculates a "weighted stock raw score (i) of an effective patent" (S3204) and proceeds to S3205. Specifically, the score calculation section 140 obtains a value by multiplying the "weighted score (i)" by the "number of remaining years of patent data (i)" calculated at S3203 and the obtained value is set to the "weighted stock raw score (i) of an effective patent." Specifically, the "weighted stock raw score (i) of an effective patent" is obtained by the following [Equation 13].

[Equation 13]

$$\text{Weighted stock raw score (i) of an effective patent}$$
$$= (\text{Weighted score (i)}) \times (\text{The number of remaining years of patent data (i)})$$

At S3205, the score calculation section 140 determines as to whether the counter i is less than "I" (i<I). If the counter i is less than "I," the score calculation section 140 adds "1" to the counter i (S3206) and returns to the processing of S3202. On the other hand, if the counter i is not less than "I," the score calculation section 140 proceeds to S3210.

At S3210, the score calculation section 140 sets the counter j to "1" and proceeds to S3211.

At S3211, the score calculation section 140 calculates a "weighted stock raw score (j) of total effective patent" (WSS raw score (j)) of applicant j. Specifically, the score calculation section 140 obtains the total value of the "weighted stock raw score (i) of an effective patent" for the applicant j and the obtained total value is made to be the "WSS raw score (j)."

Next, the score calculation section 140 calculates a logarithm of the "WSS raw score (j)" obtained at S3211 (S3212) and proceeds to S3213. Incidentally, to simplify the explanation, the logarithm of the "WSS raw score (j)" is called below "logarithm WSS raw score (j)."

At S3213, a judgment is made as to whether a counter j is less than "J" (j<J). If the counter j is less than "J," the score calculation section 140 adds "1" to the counter j (S3214) and returns to the processing of S3211. On the other hand, if the counter j is not less than "J," the score calculation section 140 proceeds to S3215.

As mentioned above, by the processing from S3210 to S3213, the logarithm WSS raw score (j) is obtained for each applicant of the designated industry.

At S3215, the score calculation section 140 calculates an average (m) of the "logarithm WSS raw score (j)" in the designated industry.

At S3216, the score calculation section 140 calculates a standard deviation ($\sigma$) of the "logarithm WSS raw score (j)" in the designated industry.

Next, the score calculation section 140 standardizes each "logarithm WSS raw score (j)" by using the average (m) and the standard deviation (σ) (S3217). Incidentally, to simplify the explanation, the standardized value of the "logarithm WSS raw score (j)" is called "standardized logarithm WSS raw score (j)."

The method of standardization is not particularly limited and the standardization of the "logarithm WSS raw score (j)" may be performed by the [Equation 14] below.

[Equation 14]

$$\left(\text{Standardized logarithm WSS raw score (j)}\right)$$
$$= \frac{\left(\text{Logarithm WSS raw score (j)}\right) - \left(\text{Average (m)}\right)}{\sigma}$$

Next, the score calculation section 140 normalizes the "standardized logarithm WSS raw score (j)" (S3218). Incidentally, to simplify the explanation, the normalized value of the "standardized logarithm WSS raw score (j)" is called "normalized standardized logarithm WSS raw score (j)."

The method of normalization is not particularly limited and the normalization of the "standardized logarithm WSS raw score (j)" may be performed by the [Equation 15] below.

[Equation 15]

$$\text{Normalized standardized logarithm WSS raw score (j)}$$
$$= \left(\text{Standardized logarithm WSS raw score (j)}\right) \times 100$$

Next, the score calculation section 140 makes the "normalized standardized logarithm WSS raw score (j)" nonnegative and the nonnegative value made from the "normalized standardized logarithm WSS raw score (j)" is called "WSS" (S3219). Incidentally, the method of making a value nonnegative is not particularly limited and the "normalized standardized logarithm WSS raw score (j)" may be made nonnegative by the [Equation 16] below to obtain the WSS.

[Equation 16]

$$\text{WSS} = \left(\text{Normalized standardized logarithm WSS raw score (j)}\right) + 500$$

As mentioned above, in the seventh modified embodiment, for each industry, the WSS of an applicant (enterprise) belonging to the industry may be obtained. Reviewing the WSS makes it possible to compare a comprehensive worth of patents of each enterprise and evaluate the power of technology of the enterprise in each industry.

A stock as assets depends on the number of remaining years of each patent. Therefore, by calculating the number of remaining years of patents for each enterprise, it is possible to evaluate the magnitude of patent assets owned by each enterprise.

Next, the processing of calculating the WSA by the score calculating section 140 of the seventh modified embodiment is explained in reference to FIG. 29.

The WSA is an average of the weighted score in each enterprise to measure a quality per one patent of each enterprise and is calculated by the following formula:

Weighted score average of effective patents (WSA)

= [{log ((Σ Effective patents of a specified enterprise Weighted

score) / The number of effective patents a specified enterprise) - Average in the industry} / Standard deviation

in the industry] × 10 + 50

Namely, the weighted score average of effective patents (WSA) is calculated by totaling the weighted score for all effective patents owned by a specified enterprise, dividing the total by the number of effective patents of the specified enterprise to obtain an average, calculating a logarithm (preferably a natural logarithm) of the obtained average, and normalizing the logarithm in the industry. Since it is normalized in each industry, a comparison with a different industry is possible.

First, the score calculation section 140 receives from the user a designation of industry in which the WSA is calculated and, for each designated industry, effective patent data (i) (i is an integer which is 1 or more) belonging to the industry is obtained (S3300). Incidentally, to simplify the explanation, it is assumed that a single industry (electric appliances, for example) is designated and the effective patent data (i) of the industry is obtained.
The effective patent data is data of patent applications for which patent rights is registered (excluding lapsed patents) and data of patent applications which is pending at the Patent Office.

Next, in a procedure similarly to S3201 and S3202 of FIG. 28, the score calculation section 140 sets a counter i to "1" (S3301) and calculates the weighted score (i) (S3302). Incidentally, at S3302, the weighted score of the effective patent data is calculated. In the explanation of this flow chart, the weighted score calculated at S3302 is called effective patent weighted score.
Next, in a procedure similarly to S3205 of FIG. 28, the score calculation section 140 determines as to whether the counter i is less than "I" (i<I). If the counter i is less than "I," the score calculation section 140 adds "1" to the counter i (S3305) and returns to the processing of S3302. On the other hand, if the counter i is not less than "I," the score calculation section 140 proceeds to S3304 (S3303).

At S3304, the score calculation section 140 sets the counter j to "1" and proceeds to S3310.

At S3310, the score calculation section 140 calculates an effective patents weighted raw score (j). Specifically, the score calculation section 140 obtains the total value of the "effective patent weighted score (j)" for the applicant j and the obtained total value is made to be the effective patents weighted raw score (j).

Next, the score calculating section 140 obtains the total number of effective patens data (j) of the applicant j (S3311). Specifically, the score calculating section 140 counts the number of patent data of the applicant j among the effective patent data obtained at S3300 and the counted number is made to be the "total number of effective patens data (j)."

Next, the score calculation section 140 calculates a "weighted raw score average (j) of effective patents." Specifically, the score calculation section 140 obtains a value by dividing the "effective patents weighted raw score (j)" by the "total number of effective patents data (j)" and the obtained value is made to be the "weighted raw score average (j) of effective patents." The "weighted raw score average (j) of effective patents" is called below "WSA raw score (j)."

Next, the score calculation section 140 calculates a logarithm of the "WSA raw score (j)" obtained at S3312 (S3313) and proceeds to S3314. Incidentally, to simplify the explanation, the logarithm of the "WSA raw score (j)" is called below "logarithm WSA raw score (j)."

At S3314, a judgment is made as to whether a counter j is less than "J" (j<J). If the counter j is less than "J," the score calculation section 140 adds "1" to the counter j (S3315) and returns to the processing of S3310. On the other hand, if the counter j is not less than "J," the score calculation section 140 proceeds to S3316.
As mentioned above, by the processing from S3310 to S3314, the logarithm WSA raw score (j) is obtained for each applicant of the designated industry.

At S3316, the score calculation section 140 calculates an average (m) of the "logarithm WSA raw score (j)" in the designated industry.
At S3317, the score calculation section 140 calculates a standard deviation (σ) of the "logarithm WSA raw score (j)" in the designated industry.

Next, the score calculation section 140 standardizes each "logarithm WSA raw score (j)" by using the average (m) and the standard deviation (σ) (S3318). Incidentally, to simplify the explanation, the standardized value of the "logarithm WSA raw score (j)" is called "standardized logarithm WSA raw score (j)."
The method of standardization is not particularly limited and the standardization of the "logarithm WSA raw score (j)" may be performed by the [Equation 17] below.

[Equation 17]

$$\left(\text{Standardized logarithm WSA raw score}\,(j)\right)$$
$$= \frac{\left(\text{Logarithm WSA raw score}\,(j)\right) - \left(\text{Average}\,(m)\right)}{\sigma}$$

Next, the score calculation section 140 normalizes the "standardized logarithm WSA raw score (j)" (S3319). Incidentally, to simplify the explanation, the normalized value of the "standardized logarithm WSA raw score (j)" is called "normalized standardized logarithm WSA raw score (j)."
The method of normalization is not particularly limited and the normalization of the "standardized logarithm WSA raw score (j)" may be performed by the [Equation 18] below.

[Equation 18]

Normalized standardized logarithm WSA raw score (j)

= (Standardized logarithm WSA raw score (j)) × 10

Next, the score calculation section 140 makes the "normalized standardized logarithm WSA raw score (j)" nonnegative and the nonnegative value made from the "normalized standardized logarithm WSA raw score (j)" is called "WSA" (S3320). Incidentally, the method of making a value nonnegative is not particularly limited and the "normalized standardized logarithm WSA raw score (j)" may be made nonnegative by the [Equation 19] below.

[Equation 19]

WSA = (Normalized standardized logarithm WSA raw score (j))

+ 50

As mentioned above, in the seventh modified embodiment, for each industry, the WSA of an applicant (enterprise) belonging to the industry may be obtained. Reviewing the WSA makes it possible to compare a comprehensive worth of patents of each enterprise and evaluate the power of technology of the enterprise in each industry.
Further, reviewing the WSA makes it possible to compare the average worth of patent owned by each enterprise in the industry. Therefore, an appropriate evaluation of an enterprise which has superior technologies can be done even the magnitude is small.

« Eighth Modified Example »

Next, an eighth modified example of the embodiment will be explained.
The eighth modified example adds a part of function of the evaluation value calculation section 120 included in the information processing unit 1 according to the embodiment mentioned above. The configuration except the evaluation value calculation section 120 is the same as the configuration of the above-mentioned embodiment. Therefore, in the following, it will explain focusing on the different part. In addition, although the evaluation value calculation section 120 differs in a part of functions from the function of the above-mentioned embodiment, the same reference numeral is used for convenience of explanation.
More specifically, when evaluating patent data, the eighth modified example obtains information of designating an analysis period (information showing date, month and year, hereinafter called "analysis period information") from an analyst. The evaluation value calculation section 120 obtains the evaluation value of patent data using the patent attribution information on the basis of the analysis period.

In addition, the eighth modified example also stores past historical information 210 in the storage unit 2.

That is, in S221 of FIG. 10, the evaluation value calculation section 120 reads contents information 220 before the date shown by the historical information 210 and the analysis period information given before the date shown by the analysis period information received from the analyst, and renews to the lapsed days in the time of the past concerned by using the read historical information and contents information also about the "lapsed days from application," the "lapsed days from request for examination," and the "lapsed days from registration date," and calculates the evaluation value of the past of each patent data according to the same procedure as the above-mentioned embodiment.

When the past score can be obtained, the relative comparison between the score of the differing time becomes possible. For example, the time shift of value can be checked by calculating the past score at the specification time of the patent data of an evaluation target, respectively.

Moreover, it becomes possible to verify the validity of evaluation by the above-mentioned embodiment, and to tune a parameter finely according to an analysis object population's technical field by analyzing the relation between the evaluation in the time of the past concerned and a subsequent patent right maintenance ratio, the relation between the evaluation in the time of the past concerned and the concrete valuation in a subsequent dealings case, etc.

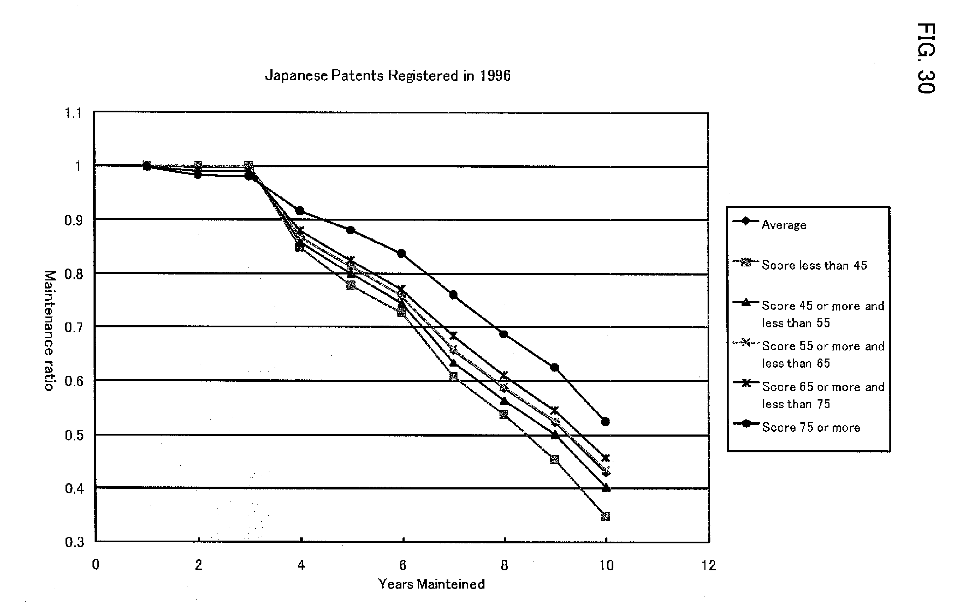

FIG. 30 shows a graphic chart showing the relation between the evaluation value in 1998 and the patent right maintenance ratio by 2005 which became clear after that. The patent right which has been registered for the patent right establishment in Japan in 1996 (for one year) was divided for every field to be assumed as the analysis object population, respectively, and the evaluation value of each patent right was calculated. The average maintenance ratio was calculated for every class of the deviation value, and transition to 2005 was plotted. As a result, it turns out that the higher the evaluation value in 1998, the higher the average of the subsequent maintenance ratio (value is high), and the evaluation based on historical information and contents information was appropriate.

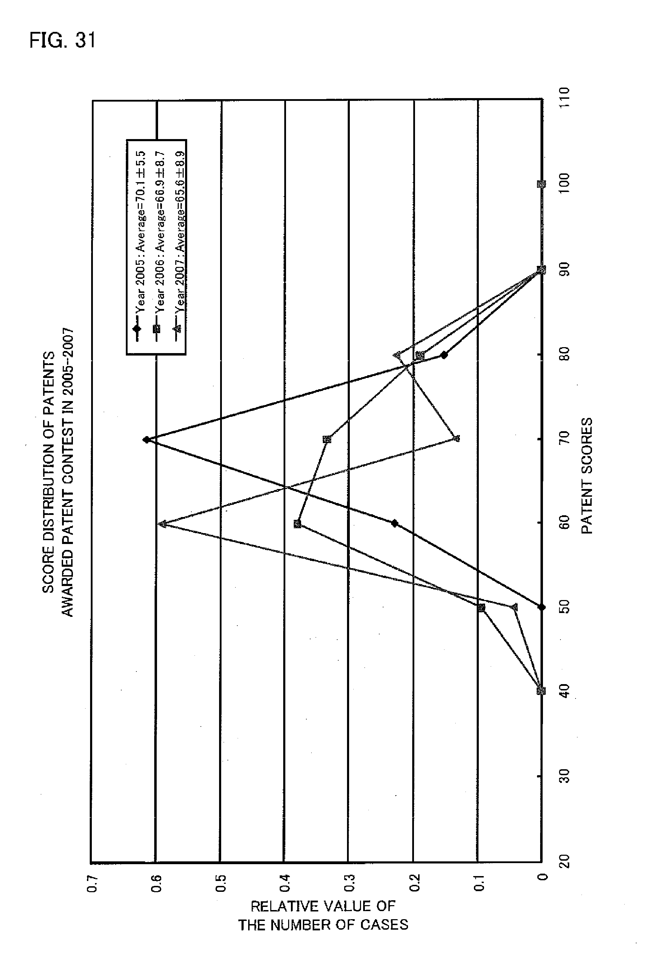

FIG. 31 is a graphic chart showing the distribution of the evaluation value (deviation value) calculated by the above-mentioned embodiment for patents awarded one of patent contests. Specifically, for patents awarded any one of patent contests during three years from 2005 to 2007, analysis object populations each including the awarded patent are extracted based on the IPC code of each awarded patent and the evaluation value (deviation value) of each awarded patent in each population is calculated and the distribution is shown.

As shown in the figure, most of the awarded patents with a few exceptions have the evaluation value over the average (50) in the population and an average evaluation value of the awarded patents is substantially high which ranges from approximately 65 to 70. This evaluation value is simply a calculation result based on the historical information and the contents information of the patent data without considering the record of award. However the evaluation value is high similarly to the evaluation in the patent contests.

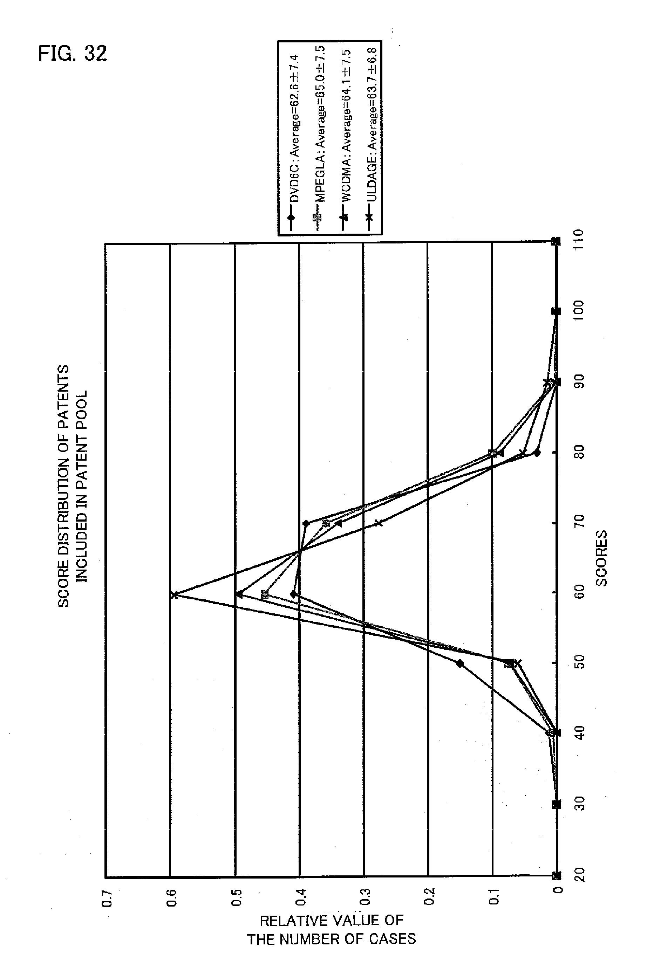

FIG. 32 is a graphic chart showing the distribution of the evaluation value (deviation value) calculated by the above-mentioned embodiment for patents included in one of patent pools. Specifically, for patents included in one of the patent pools for the purpose of cross licensing of essential patents for common standards, analysis object populations each including the patent are extracted based on the IPC code of each patent and the evaluation value (deviation value) of each patent in each population is calculated and the distribution is shown.

As shown in the figure, most of the patents included in a patent pool with a few exceptions have the evaluation value over the average (50) in the population and an average evaluation value of the patents is substantially high which is over 60. This evaluation value is simply a calculation result based on the historical information and the contents information of the patent data without considering such patent pool. However the evaluation value is high which shows the importance of the patent.

The present invention is not limited to the above embodiment and, within the essence of the invention, various modifications are possible.

In the above embodiment, the patent data for the analysis object population is a group of patens designated by the IPC codes. However, the present invention is not limited to this. Not only the patent group designated by the IPC code, but also the patent group of related technologies, such as the patent group of documents that are in a predetermined range of similarity with a patent is possible.

In the above embodiment, the analysis object population is classified to groups of each application year. However, the present invention is not limited to this. For example, classification by year of a priority date is possible. Further, it is not limited to per year, and may be per a half of a year, per month, or per a plurality of years.

In the above embodiment, the evaluation score is calculated by multiplying a value obtained by using the patent attribution information of each of the patent data belonging to the group and a value of a decreasing function of a sum of predetermined values in the group. However, the present invention is not limited to this. For example, weightings such as small weightings to an earlier group and large weightings to a later group are possible.

In the above embodiment, the evaluation raw score is calculated by a root sum square of the evaluation score. However, the present invention is not limited to this. For example, it may be obtained by totaling $\alpha$ power of each evaluation score

and calculating [1/$\alpha$] power ($\alpha$>1) of the total.

In the above embodiment, each functional section (the control section 100, the data acquiring section 105, the initial setting section 110, the data classification section 115, the evaluation value calculation section 120, the deviation value calculation section 125, and the output section 130) of the processing unit 1 is realized by software. However, the present invention is not limited to this. For example, each functional section of the processing unit 1 may be realized by circuits (ASIC (Application Specific Integrated Circuit), etc.) specially designed for realizing each functional section.

In the above embodiment, the evaluation value of the patent data is calculated by using the information showing existence or nonexistence of a specified action, the information showing the number of times being cited and the information relating to a period about the patent data. However, the present invention is not limited to this. For example, it is possible to calculate the evaluation value of the patent data by using at least one of the information showing existence or nonexistence of a specified action, the information showing the number of times being cited and the information relating to a period about the patent data. In this situation, the historical information stored in the storage unit 2 may be at least one of the information showing existence or nonexistence of a specified action, the information showing the number of times being cited and the information relating to a period about the patent data.

In the above embodiment, the information processing unit 1 obtains the evaluation object patent data such as patent publications from the storage unit 2. However, the present invention is not limited to this. For example, the information processing unit 1 may communicate with an external server providing information via network such as the internet to obtain the patent data from the external server.

In the above embodiment, the evaluation of the patent data uses the average number of characters per claim of the patent data, the number of pages of the patent data and the number of claims of the patent data among the contents information 220 shown in FIG. 8. However, the present invention is not limited to this. For example, the evaluation of the patent data may be made by using at least one of the contents data shown in FIG. 8. Further, the contents information shown in FIG. 8 is just an example and other information (for example, the number of applicants, the number of inventors, etc.) may also be used.

In the above embodiment, in the initial setting phase A1, the historical information 210 and the contents information 220 are processed for use in evaluating the patent data and are stored in the storage unit 2. However, the present invention is not limited to this. For example, the information processing unit 1 may obtain the historical information 210 and the contents information 220 from an external device. In this situation, the initial setting phase is not necessary.

**Claims**

1. A patent evaluation device, comprising:

   means for acquiring patent data of a plurality of patents belonging to a predetermined technical field and patent attribution information of each of the patent data from a patent database;
   means for classifying the acquired patent data into groups for each specified period; and
   evaluation value calculating means for calculating an evaluation value of each of the patent data by using a value obtained for each group and by using the patent attribution information of each of the patent data belonging to the group.

2. The patent evaluation device according to claim 1,
   wherein said evaluation value calculating means calculates the evaluation value of each of the patent data by using a product of
   a value obtained by using the patent attribution information of each of the patent data belonging to the group; and
   a value of a decreasing function of a sum in the group of the values obtained by using the patent attribution information of each of the patent data belonging to the group.

3. The patent evaluation device according to claim 1 or 2,
   wherein said patent attribution information includes historical information of the patent data;
   wherein said historical information includes at least one of
   information showing existence or nonexistence of a specified action for the patent data,
   information showing the number of times that the patent data is cited, and
   information relating to a period about the patent data; and
   wherein said evaluation value calculating means calculates the evaluation value of each of the patent data by using at least one of the information showing existence or nonexistence of a specified action, the information showing the number of times being cited and the information relating to a period about the patent data and under a rule given for each kind of the historical information.

**4.** The patent evaluation device according to claim 1 or 2,
wherein said patent attribution information includes historical information of the patent data;
wherein said historical information includes at least one of
information showing existence or nonexistence of a specified action for the patent data,
information showing the number of times that the patent data is cited, and
information relating to a period about the patent data; and
wherein said evaluation value calculating means
calculates a first evaluation score by using the information showing existence or nonexistence of a specified action under a first rule, calculates a second evaluation score by using the information showing the number of times being cited under a second rule, calculates a third evaluation score by using the information relating to a period about the patent data under a third rule, and
calculates the evaluation value by using the first evaluation score, the second evaluation score and the third evaluation score.

**5.** The patent evaluation device according to claim 3 or 4,
wherein said information showing existence or nonexistence of a specified action includes at least one of
existence or nonexistence of a divisional application,
existence or nonexistence of an accelerated examination,
existence or nonexistence of a patent allowance in appeal,
existence or nonexistence of an opposition dismissed,
existence or nonexistence of an invalidation trial dismissed,
existence or nonexistence of a claim of priority,
existence or nonexistence of a PCT application, and
existence or nonexistence of an inspection of file wrapper;
wherein said information showing the number of times that the patent data is cited includes the number of times being cited in rejections; and
wherein said information relating to a period about the patent data includes a date of submission for the patent data.

**6.** The patent evaluation device according to claim 1 or 2,
wherein said patent attribution information includes historical information of the patent data and contents information of the patent data;
wherein said historical information includes at least one of
information showing existence or nonexistence of a specified action for the patent data,
information showing the number of times that the patent data is cited, and
information relating to a period about the patent data; and
wherein said evaluation value calculating means calculates the evaluation value by using the contents information and at least one of the information showing existence or nonexistence of a specified action, the information showing the number of times being cited and the information relating to a period about the patent data.

**7.** The patent evaluation device according to claim 1 or 2,
wherein said patent attribution information includes historical information of the patent data and contents information of the patent data;
wherein said historical information includes at least information relating to a period about the patent data and either one of information showing existence or nonexistence of a specified action for the patent data and information showing the number of times that the patent data is cited;
wherein said contents information includes at least one of the number of claims, the total number of pages, and the average number of characters/words per claim; and
wherein said evaluation value calculating means
calculates a first or second evaluation score by using either one of the information showing existence or nonexistence of a specified action and the information showing the number of times being cited,
calculates a third evaluation score by using both of the information relating to a period about the patent data and the contents information, and
calculates the evaluation value by using the first or second evaluation score and the third evaluation score.

**8.** The patent evaluation device according to any one of claims 1 to 7,
wherein said evaluation value calculating means calculates a logarithm of the evaluation value for each of the patent data and standardizes the calculated logarithm within all of the acquired patent data in the predetermined technical field to calculate a standardized evaluation value.

9. The patent evaluation device according to any one of claims 3 to 8,
wherein said patent attribution information includes historical information of the patent data;
wherein said historical information includes at least
information showing the number of times that the patent data is cited in the examination of patent applications of other companies and
information showing the number of times that the patent data is cited in the examination of other patent applications of one's own company; and
wherein said evaluation value calculating means
calculates an evaluation score by using a value of an increasing function, of the information showing the number of times that the patent data is cited in the examination of patent applications of other companies and the information showing the number of times that the patent data is cited in the examination of other patent applications of one's own company, which is influenced larger from the former than the latter, and
calculates the evaluation value of each of the patent data by using the evaluation score.

10. A patent data evaluation method, wherein an information processing device executes:

> a step of acquiring patent data of a plurality of patents belonging to a predetermined technical field and patent attribution information of each of the patent data from a patent database;
> a step of classifying the acquired patent data into groups for each specified period; and
> a step of calculating an evaluation value of each of the patent data by using a value obtained for each group and by using the patent attribution information of each of the patent data belonging to the group.

11. A patent data evaluation program, wherein said program causes an information processing device to execute:

> a process of acquiring patent data of a plurality of patents belonging to a predetermined technical field and patent attribution information of each of the patent data from a patent database;
> a process of classifying the acquired patent data into groups for each specified period; and
> a process of calculating an evaluation value of each of the patent data by using a value obtained for each group and by using the patent attribution information of each of the patent data belonging to the group.

FIG. 1

**Information Processing Unit** 1

100 **Control Section**

105 **Data Acquiring Section**

110 **Initial Setting Section**

115 **Data Classification Section**

120 **Evaluation Value Calculation Section**

125 **Deviation Value Calculation Section**

130 **Output Section**

2 **Storage Unit**

200 **Patent Data**

205 **Patent Attribution Information**

210 **Historical Information**

220 **Contents Information**

3 **Input Unit**

4 **Output Unit**

FIG. 2

1 **Information Processing Unit**

10 **CPU**

11 **Main Storage Unit**

12 **Auxiliary Storage Unit**

**Patent Evaluation Program**

13 **I/O Interface**

14 **Network Interface**

2 **Storage Unit**

3 **Input Unit**

4 **Output Unit**

# FIG. 3

(Outline Flow)

START

**A1**

Initial Setting Phase

S100
Process for Setting up
Historical Information

S120
Process for Setting up
Contents Information

**A2**

Patent Evaluation Phase

S200
Obtain Patent Data and Patent Attribution
Information of specified IPC

S210
Classify the Patent Data for Every
Prescribed Period

S220
Calculate Evaluation Value of the Each
Patent Data in Every Group

S230
Calculate Deviation Value of the Evaluation
Value in the specified IPC

S240
Classification Process

S250
Process for Outputting Evaluation Results

END

## FIG. 4

```
        S100
       START
         │
         │  ┌─ S101
  ┌──────▼──────────┐
  │ Extract a Sample │
  └──────┬──────────┘
         │  ┌─ S102
  ┌──────▼──────────────┐
  │ Calculate Maintenance│
  │ Ratio of the Sample  │
  └──────┬──────────────┘
         │  ┌─ S103
  ┌──────▼──────────────┐
  │ Extract Patents Having│
  │ Candidate Historical  │
  │ Information           │
  └──────┬──────────────┘
         │  ┌─ S104
  ┌──────▼──────────────┐
  │ Calculate Maintenance│
  │ Ratio for Every Kind │
  │ of Historical Info   │
  └──────┬──────────────┘
         │  ┌─ S105
       ◇ Adopt ? ◇──── NO
         │ YES  ┌─ S106
  ┌──────▼──────────┐
  │ Select Calculation│
  │ Rule             │
  └──────┬──────────┘
         │  ┌─ S107
  ┌──────▼──────────┐
  │ Processing Data  │
  └──────┬──────────┘
         │
        END
```

## FIG. 5

| Years maintained | Average | Accelerated examination | FA passed | Patent allowance in appeal | Opposition dismissed | Invalidation trial dismissed | Citation (one's own company) | Citation (other company) | Inspection of file wrapper | Domestic priority | Foreign priority |
|---|---|---|---|---|---|---|---|---|---|---|---|
| 1 | 0.99757 | 0.98433 | 0.99734 | 0.99718 | 1 | 0.98742 | 0.99661 | 0.99734 | 0.98367 | 0.99729 | 0.99806 |
| 2 | 0.98883 | 0.95925 | 0.98952 | 0.9855 | 0.99861 | 0.97279 | 0.98514 | 0.98394 | 0.94438 | 0.98825 | 0.99212 |
| 3 | 0.98862 | 0.95298 | 0.9894 | 0.98498 | 0.99584 | 0.9708 | 0.98462 | 0.98371 | 0.94205 | 0.98803 | 0.992 |
| 4 | 0.86073 | 0.92163 | 0.85128 | 0.88035 | 0.96065 | 0.95349 | 0.92677 | 0.896619 | 0.88698 | 0.9085 | 0.83327 |
| 5 | 0.80615 | 0.90909 | 0.79385 | 0.83392 | 0.94431 | 0.94444 | 0.89289 | 0.85205 | 0.86096 | 0.87054 | 0.77305 |
| 6 | 0.75203 | 0.89342 | 0.74022 | 0.78281 | 0.91687 | 0.93496 | 0.85249 | 0.81043 | 0.8197 | 0.8319 | 0.71635 |
| 7 | 0.65177 | 0.84953 | 0.63431 | 0.6883 | 0.85841 | 0.89167 | 0.7816 | 0.72123 | 0.75404 | 0.74989 | 0.63528 |
| 8 | 0.58173 | 0.81505 | 0.56918 | 0.60547 | 0.81657 | 0.87179 | 0.72505 | 0.65373 | 0.69609 | 0.68617 | 0.56525 |
| 9 | 0.51874 | 0.7931 | 0.51147 | 0.51836 | 0.76282 | 0.82051 | 0.66771 | 0.59665 | 0.64621 | 0.63511 | 0.50394 |
| 10 | 0.50212 | 0.7837 | 0.50479 | 0.44409 | 0.72846 | 0.76923 | 0.65311 | 0.57983 | 0.6159 | 0.62946 | 0.49461 |

FIG. 6

Change of Maintenance Ratio of Patents Registered in 1996

Legend:
- ◆ Average
- ■ Accelerated examination
- △ FA passed
- ✕ Patent allowance in appeal
- ✳ Opposition dismissed
- ● Invalidation trial dismissed
- + Citation (one's own company)
- | Citation (other company)
- ○ Inspection of file wrapper
- ◇ Domestic priority
- □ Foreign priority

Maintenance ratio

Years maintained

FIG. 7

Historical Information 210

| Patent data ID | Lapsed days from filing applica- tion 2100 | Lapsed days from request for exam- ination 2105 | Lapsed days from registra- tion date 2110 | Divisional applica- tion 2115 | Accel- erated exam- ination 2120 | Patent allow- ance in appeal 2125 | Oppo- sition dis- missed 2130 | Invalida- tion trial dis- missed 2135 | Domestic priority 2140 | PCT applica- tion 2145 | Inspec- tion of file wrapper 2150 | Number of times being cited 2155 | |
|---|---|---|---|---|---|---|---|---|---|---|---|---|---|
| | | | | | | | | | | | | One's own com- pany | Other com- pany 2160 |
| Patent Publication 20XX | 5 years | 2.5 years | NULL | 1 (exist) | 0 (not exist) | 1 (exist) | 0 (not exist) | 0 (not exist) | 1 (exist) | 1 (exist) | 1 (exist) | 6 | 3 |
| Patent Publication 20XY | 5.5 years | 2.5 years | 1 year | 0 (not exist) | 1 (exist) | 0 (not exist) | 1 (exist) | 1 (exist) | 0 (not exist) | 0 (not exist) | 1 (exist) | 1 | 3 |
| Patent Publication 20YY | 3 years | NULL | NULL | 0 (not exist) | 0 (not exist) | 0 (not exist) | 0 (not exist) | 0 (not exist) | 0 (not exist) | 0 (not exist) | 0 (not exist) | 0 | 0 |

EP 2 079 049 A1

FIG. 8

Contents Information 220

| Patent data ID | Number of claims | Number of independent claims | Average number of characters of claim | Number of pages of specification | Number of pages of drawings |
|---|---|---|---|---|---|
| 2200 | 2205 | 2215 | 2220 | 2225 | 2230 |
| Patent Publication 20XX | 20 | 5 | 3200 | 20 | 10 |
| Patent Publication 20XY | 10 | 3 | 2000 | 15 | 5 |
| Patent Publication 20YY | 3 | 1 | 1000 | 10 | 5 |
| | | | | | |

EP 2 079 049 A1

## FIG. 9

| Application No. | Subgroup | Number of cases in the subgroup | Deviation value in the subgroup | Main group | Number of cases in the main group | Deviation value in the main group | Subclass | Number of cases in the subclass | Deviation value in the subclass |
|---|---|---|---|---|---|---|---|---|---|
| H15-161309 | B01J35/02 | 1227 | 77 | B01J35 | 2211 | 80 | B01J | 17852 | 80 |
| H12-181313 | C10L1/00 | 90 | 66 | C10L1 | 1521 | 78 | C10L | 2579 | 79 |
| H12-362089 | C22C27/02 | 62 | 61 | C22C27 | 242 | 66 | C22C | 19129 | 74 |
| H12-266351 | C23C4/00 | 98 | 60 | C23C4 | 1309 | 71 | C23C | 24316 | 73 |
| H14-160809 | G06N3/12 | 13 | 68 | G06N3 | 315 | 74 | G06N | 419 | 77 |

FIG. 10

S220
START

S221
Obtain each patent data belonging to the group
$$(J(j=1\cdots J))$$

S222
$$j=1$$

S223
Evaluation score calculation

S223A
Choose a method for calculating evaluation score according to evaluation item attribution

S223B
Existence or Nonexistence Type

$$\frac{\left(\begin{array}{c}\text{existence or nonexistence}\\ \text{data of evaluation item i}\end{array}\right)}{\sqrt{\sum_i\left(\begin{array}{c}\text{existence or nonexistence}\\ \text{data of evaluation item i}\end{array}\right)}}$$

S223C
Time Attenuation Type

$$\frac{Exp\left(-\dfrac{Min\left(\begin{array}{c}\text{the elapsed time,}\\ \text{maximum period}\end{array}\right)}{\text{maximum period}}\right)}{\sqrt{\sum_j\left(\begin{array}{c}\text{existence or nonexistence}\\ \text{data of evaluation item i}\end{array}\right)}}$$

S223D
Number of Times Type

$$\frac{f(\text{citation})\times log(n_j+1)}{\sqrt{\sum_j f(\text{citation})\times log(n_j+1)}}$$

S224
Evaluation raw score calculation
$$(\text{Patent evaluation raw score})=\sqrt{\sum_i(\text{evaluation score}_i)^2}\ \ or\ \ 0$$

S227
$$j=j+1$$

S225
Calculate logarithm of the evaluation raw score

S226
$$j\ge J$$
No

Yes

END

FIG. 11

Deviation Value Distribution

Number of cases

Deviation value

Deviation value of the evaluation raw score

Deviation value of logarithm

EP 2 079 049 A1

FIG. 12

| Registration No. | Application No. | Rating Score | Rating Class | Population for calculation | Number of population members | Raw score |
|---|---|---|---|---|---|---|
| (Reg. No. 2756474) | H08-528290 | 80.1 | A | C09K | 18981 | 0.313847 |
| (Reg. No. 3217682) | H07-354046 | 57.5 | B+ | F02D | 34639 | 0.045198 |
| (Reg. No. 2669418) | H08-159583 | 70.6 | A- | G02F1/13 | 52348 | 0.166737 |
| (Reg. No. 3469422) | H09-019396 | 54.0 | B | H01L21/02 | 25119 | 0.039228 |
| (Reg. No. 2703281) | S63-228547 | 70.9 | A- | C22C | 30722 | 0.151254 |
| (Reg. No. 2705076) | S63-006292 | 90.2 | A+ | G01S | 18734 | 0.578052 |
| (Reg. No. 2909393) | H06-228044 | 75.4 | A | F23G | 7467 | 0.188482 |
| (Reg. No. 2861104) | H01-236475 | 47.9 | B | C07D | 52692 | 0.02837 |
| (Reg. No. 3313358) | H12-581248 | 73.3 | A- | C12Q | 7700 | 0.14497 |
| (Reg. No. 3523556) | H12-052533 | 57.6 | B+ | C25D | 12835 | 0.052028 |
| (Reg. No. 3240619) | H08-501924 | 78.7 | A | C07C19 | 1354 | 0.160053 |
| (Reg. No. 3436237) | H12-192782 | 60.1 | B+ | B60R | 33266 | 0.053397 |
| (Reg. No. 3052710) | H05-319931 | 80.8 | A | F01N | 12920 | 0.299125 |
| (Reg. No. 3514255) | H14-003945 | 64.9 | B+ | H03L | 5862 | 0.085633 |
| (Reg. No. 3414218) | H09-248177 | 57.3 | B+ | G06F3 | 56005 | 0.050541 |
| (Reg. No. 3432468) | H11-326005 | 75.5 | A | H04N1/38 | 8226 | 0.222457 |
| (Reg. No. 3223723) | H06-224793 | 57.2 | B+ | B23H | 493 | 0.04709 |
| (Reg. No. 2897960) | H02-059991 | 65.0 | B+ | B65H | 6542 | 0.084251 |
| (Reg. No. 3545257) | H11-117227 | 74.6 | A- | C01B | 18610 | 0.188929 |
| (Reg. No. 3556586) | H12-269251 | 87.6 | A+ | C30B | 13842 | 0.539693 |
| (Reg. No. 3574765) | H11-287868 | 59.3 | B+ | G01M | 15906 | 0.052943 |

FIG. 13

Historical Information 250

| Patent data ID | ------- | Number of times being cited | | Number of times being cited in opposition filing | Number of times being cited in opposition decision | Number of times being cited in demand for trial | Number of times being cited in trial decision | Divisional application | Priority | Invalidation trial dismissed |
|---|---|---|---|---|---|---|---|---|---|---|
| | | One's own company | Other company | | | | | | | |
| Patent Publication 20XX | ------- | 6 | 3 | 3 | 3 | 2 | 6 | 6 | 3 | 0 |
| Patent Publication 20XY | ------- | 1 | 3 | 2 | 2 | 4 | 3 | 0 | 0 | 1 |
| Patent Publication 20YY | ------- | 0 | 0 | 1 | 1 | 0 | 0 | 0 | 0 | 0 |
| | ------- | | | | | | | | | |

EP 2 079 049 A1

FIG. 14

( START ADDING POINT TO
RE-CITED APPLICATION )

S2801
Extract patent data (PS) of analysis object population

S2802
Specify application number (PS) / application date (PS) of patent data (PS)

S2803
Extract patent data group A(PS) on or after
application date (PS) from all patent data

S2804
Extract patent data group B(PS) having a cited publication
number from patent data group A(PS)

S2805
Extract J number of patent data (i, j) in which the same
patent data (PS) is cited from patent data group B(PS)

S2806
i = 1

※ [i, j] is an identification
of later filed application of
generation i, in which patent
data (i-1, j) is cited.

S2807
※ [i, j] > 0

S2808
Record (no
adding point)

NO

YES

S2809
Calculate number J in which the same patent data (PS) is cited

S2810
Weighting
(PS)

S2812
j = 1

S2811
Record
adding point
element (PS)

S2813
Specify application number (i, j) /
application date (i, j) of patent data (i, j)

S2814
Extract patent data group A(i, j) on or after
application date (i, j) from all patent data

S2815
Extract patent data group B(i, j) having a cited
publication number from patent data group A(i, j)

S2824
i = i+1

S2816
Extract J number of patent data (i+1, j)
in which the same patent data (i, j) is cited
from patent data group B(i, j)

S2817
[i+1, j] > 0

NO

YES

S2820
j = j+1

S2818
Calculate J in which the same patent data (i, j) is cited

S2819
[i, j] ≧ J

NO

YES

S2821
Weighting
(i)

S2822
Record
adding point
element (i)

S2823
[i+1, j] > 0

YES

NO

S2825
Total adding point element (PS) and adding point element (i)

S2826
Assign adding point on patent data (PS)

( END )

FIG. 15

START ADDING POINT TO
PARENT APPLICATION

S2901
Extract patent data (PS) of analysis object population

S2902
Specify application number (PS) / application date (PS) of patent data (PS)

S2903
Extract patent data group A(PS) on or after
application date (PS) from all patent data

S2904
Extract patent data group B(PS) having a parent application
number from patent data group A(PS)

S2905
Extract J number of patent data (i, j) where the same patent
data (PS) is parent from patent data group B(PS)

S2906
$i = 1$

※ [i, j] is an identification
of later filed application of
generation i, where patent
data (i-1, j) is parent.

S2907
※ $[i, j] > 0$
YES    NO

S2908
Record (no
adding point)

S2909
Calculate number J where the same patent data (PS) is parent

S2910
Weighting
(PS)

S2911
Record
adding point
element (PS)

S2912
$j = 1$

S2913
Specify application number (i, j) /
application date (i, j) of patent data (i, j)

S2914
Extract patent data group A(i, j) on or after
application date (i, j) from all patent data

S2915
Extract patent data group B(i, j) having a parent
application number from patent data group A(i, j)

S2916
Extract J number of patent data (i+1, j)
where the same patent data (i, j) is parent
from patent data group B(i, j)

S2924
$i = i + 1$

S2917
$[i+1, j] > 0$
YES    NO

S2920
$j = j + 1$

S2918
Calculate J where the same patent data (i, j) is parent

S2921
Weighting
(i)

S2919
$[i, j] \geqq J$
NO    YES

S2922
Record
adding point
element (i)

S2923
$[i+1, j] > 0$
YES    NO

S2925
Total adding point element (PS) and adding point element (i)

S2926
Assign adding point on patent data (PS)

END

## FIG. 16

START

S2001
Receive IPC subgroup specification

S2002
Count the number of patent data (Nsg) in the received IPC subgroup

S2003
Nsg≧Ta — No

Yes

S2011
Specify IPC main group of the next upper hierarchy on the received IPC subgroup

S2012
Count the number of patent data (Nmg) in the specified IPC main group

S2013
Nmg≧Ta — No → Go to Ⓐ in Fig. 17

Yes

S2014
$\dfrac{Nmg}{Nsg} > 2$ — No

Yes ← Ⓑ

S2004
Select the received IPC subgroup as a population to be analyzed

S2005
Count the number of cases (Nsg (y)) of the patent data in the selected IPC subgroup for each fiscal year

S2006
Yes — Nsg(y)＞Tb? — No

S2015
Select the specified IPC main group as a population to be analyzed

S2016
Count the number of cases (Nmg (y)) of the patent data in the selected IPC main group for each fiscal year

S2017
Yes — Nmg(y)＞Tb? — No

S2007
Obtain patent data belonging to the number of cases (Nsg (y)) of the fiscal year and patent attribution information as data to be analyzed

S2008
Do not treat patent data belonging to the number of cases (Nsg (y)) of the fiscal year as data to be analyzed

S2018
Obtain patent data belonging to the number of cases (Nmg (y)) of the fiscal year and patent attribution information as data to be analyzed

S2019
Do not treat patent data belonging to the number of cases (Nmg (y)) of the fiscal year as data to be analyzed

END

# FIG. 17

From S2013 Ⓐ in Fig. 16

**S2021** Specify IPC subclass of the next upper hierarchy on the specified IPC main group

**S2022** Count the number of patent data (Nsc) in the specified IPC subclass

**S2023** Nsc≧Ta — No / Yes

Go to Ⓑ in Fig. 16 — No

**S2024** $\frac{Nsc}{Nmg} > 2$ — Yes

**S2025** Select the specified IPC subclass as a population to be analyzed

**S2026** Count the number of cases (Nsc (y)) of the patent data in the selected IPC subclass for each fiscal year

**S2027** Nsc(y) >Tb ? — Yes / No

**S2028** Obtain patent data belonging to the number of cases (Nsc (y)) of the fiscal year and patent attribution information as data to be analyzed

**S2029** Do not treat patent data belonging to the number of cases (Nsc (y)) of the fiscal year as data to be analyzed

**S2031** Specify IPC main class of the next upper hierarchy on the specified IPC subclass

**S2032** Count the number of patent data (Nmc) in the specified IPC main class

**S2033** Nmc≧Ta — No / Yes

**S2034** $\frac{Nmc}{Nsc} > 2$ — No / Yes

**S2035** Select the specified IPC main class as a population to be analyzed

**S2036** Count the number of cases (Nmc (y)) of the patent data in the selected IPC main class for each fiscal year

**S2037** Nmc(y) >Tb ? — Yes / No

**S2038** Obtain patent data belonging to the number of cases (Nmc (y)) of the fiscal year and patent attribution information as data to be analyzed

**S2039** Do not treat patent data belonging to the number of cases (Nmc (y)) of the fiscal year as data to be analyzed

END

FIG. 18

Maintenance Ratio of U.S. Patents Issued in 1996

Legend:
- ◆ Average
- ▦ Priority
- Divisional application
- ✕ Continuation application
- ✳ Continuation-in-part application
- ● Reissue patent
- ┼ Cited as prior art
- — Certificate of correction
- Reexamination

Years Maintained

Maintenance ratio

FIG. 19

EP 2 079 049 A1

Historical Information 230

| Patent data ID | Lapsed days from filing application | Lapsed days from registration date | Provisional application | Re-examination | Divisional application | Continuation application | Continuation-in-part application | Priority | Number of times being cited | |
|---|---|---|---|---|---|---|---|---|---|---|
| | | | | | | | | | One's own company | Other company |
| Patent Publication 20XX | 5 years | NULL | 1 (exist) | 2 | 1 | 3 | 2 | 6 | 6 | 3 |
| Patent Publication 20XY | 5.5 years | 1 year | 0 (not exist) | 0 | 0 | 2 | 4 | 3 | 1 | 3 |
| Patent Publication 20YY | 3 years | NULL | 0 (not exist) | 1 | 2 | 1 | 0 | 0 | 0 | 0 |

## FIG. 20

Contents Information 240

| Patent data ID 2400 | Number of claims 2405 | Average number of words per independent claim (reciprocal) 2410 | Independent claim ratio 2415 | Number of words of title of invention 2420 | Number of words of whole sentence 2425 | Number of inventors 2430 | Number of attorneys 2435 | Number of drawing sheets (number of pages of drawings) 2440 |
|---|---|---|---|---|---|---|---|---|
| Patent Publication 20XX | 10 | 130 | 0.3 | 15 | 5000 | 2 | 6 | 10 |
| Patent Publication 20XY | 20 | 300 | 0.4 | 20 | 8000 | 4 | 3 | 15 |
| Patent Publication 20YY | 3 | 160 | 0.33 | 10 | 4000 | 1 | 1 | 3 |
| -------- | -------- | -------- | -------- | -------- | -------- | -------- | -------- | -------- |

FIG. 21

START —— S3000

Obtain contents information (nj) in the group to be analyzed (obtain contents information of J (j=1, ..., J) number of patent data)

Calculate logarithm ln(nj) of the contents information (nj) —— S3001

Calculate average ($\mu$) and standard deviation ($\sigma$) of ln(nj) in the population —— S3002

j=1 —— S3003

Normalize ln(nj): $sj = \dfrac{\ln(nj) - \mu}{\sigma}$ —— S3004

sj>0 ? —— S3005

S3007

NO

No addition of points

Yes

Calculate evaluation score

$(\text{Evaluation score}) = \dfrac{sj}{\sqrt{\sum(\text{application})}} \times (\text{correction coefficient})$ —— S3006

S3010

j=j+1

j≧J? —— S3008

NO

Yes

END

# FIG. 22

S220
START

S221
Obtain each patent data belonging to the group
$(J(j = 1 \cdots J))$

S222
$j = 1$

S2230
Evaluation score calculation from historical information

S223A
Choose a method for calculating evaluation score according to evaluation item attribution

S223B
Existence or Nonexistence Type

$$\dfrac{\left(\begin{array}{l}\text{existence or nonexistence}\\ \text{data of evaluation item } i\end{array}\right)}{\sqrt{\sum_{j}\left(\begin{array}{l}\text{existence or nonexistence}\\ \text{data of evaluation item } i\end{array}\right)}}$$

S2230C
Time Attenuation Type

$$\dfrac{Exp\left(-\dfrac{Min\left(\begin{array}{l}\text{the elapsed time,}\\ \text{maximum period}\end{array}\right)}{\text{maximum period}}\right)}{\sqrt{\sum_{j}\left(\begin{array}{l}\text{existence or nonexistence}\\ \text{data of evaluation item } i\end{array}\right)}}$$

S223D
Number of Times Type

$$\dfrac{f(\text{citation})\times log(n_j + 1)}{\sqrt{\sum_{j} f(\text{citation})\times log(n_j + 1)}}$$

S2235
Acquire evaluation scores obtained from contents information

S224
Evaluation raw score calculation
$(\text{Patent evaluation raw score}) = \sqrt{\sum_i (\text{evaluation score}_i)^2} \ \ or \ \ 0$

S225
Calculate logarithm of the evaluation raw score

S226
$j \geq J$  No

S227
$j = j + 1$

Yes

END

FIG. 23

Start processing of specifying population — S1801

Extract subclass of the concerned patent — S1802

S1810 — Number of cases ≥X

A

Number of cases ≥X — S1810

Twice or less of the population number before one extension — S1811

Cancel one extension of population — S1812

Form population — S1803

End

The population includes lowest layer subclass — S1804

Add the next lower subclass to the population — S1805

A

The population includes class — S1806

Add all subclasses under the next upper class or subclass to the population — S1807

A

Similar class exists — S1808

Add the similar class to the population — S1809

A

B

B

Number of cases ≥Y — S1813

Form population — S1814

Give up forming population — S1815

FIG. 24

| Class | First Subclass | Second Subclass | Third Subclass | Fourth Subclass | Fifth Subclass |
|---|---|---|---|---|---|

FIG. 25

1b

**Information Processing Unit**

100 Control Section

105 Data Acquiring Section

110 Initial Setting Section

115 Data Classification Section

120 Evaluation Value Calculation Section

125 Deviation Value Calculation Section

130 Output Section

140 Score Calculation Section

2

**Storage Unit**

200 Patent Data

205 Patent Attribution Information

210 Historical Information

220 Contents Information

3 Input Unit

4 Output Unit

## FIG. 26

START

↓

Receive designation of a calculation object population — S3100

↓

Obtain patent scores for patent data in the calculation object population — S3101

↓

Calculate a difference between the patent score of the patent data and an average value of the patent scores within the population (Subtract the patent score by the average patent score) — S3102

↓

Standardize the calculated difference — S3103

↓

Calculate an exponent of the standardized value — S3104

↓

END

FIG. 27

RATIOS OF AVERAGE SCORE PER ENTERPRISE TO AVERAGE SCORE IN ALL ENTERPRISES FOR DIFFERENT NUMBER OF CASES OWNED

## FIG. 28

START

Obtain patent data (i) for each industry — S3200

i=1 — S3201

S3202 — Calculate weighted score (i)

S3203 — Calculate the number of remaining years of the patent data (i)

S3206 — i=i+1

S3204 — Calculate a weighted stock raw score (i) of an effective patent (Multiply the weighted score (i) by the number of remaining years of the patent data (i))

S3205 — i<I — yes

no

S3210 — j=1

S3211 — Calculate a weighted stock raw score (j) of total effective patent (total the weighted stock raw score (i) of an effective patent for applicant j)

S3214 — j=j+1

S3212 — Calculate a logarithm of the WSS raw score (j) (Calculate logarithm WSS raw score (j))

S3213 — j<J — yes

no

S3215 — Calculate an average (m) of the logarithm WSS raw score (j) in the industry

S3216 — Calculate a standard deviation ($\sigma$) of the logarithm WSS raw score (j) in the industry

S3217 — Standardize logarithm WSS raw score (j) by the average (m) and the standard deviation ($\sigma$)

S3218 — Multiply the standardized logarithm WSS raw score (j) by 100

S3219 — Make nonnegative (Add 500)

END

## FIG. 29

START
S3300

Obtain effective patent data (i) for each industry

i=1
S3301

S3302
Calculate weighted score (i)

S3305
i=i+1

S3303
i<I
yes

no

S3304
j=1

S3310
Calculate an effective patents weighted raw score (j)
(total the effective patent weighted score (i) for applicant j)

S3311
Obtain the total number of effective patents data (j)
for applicant j

S3312
Calculate a weighted raw score average (j) of effective patents
(Divide the effective patents weighted raw score (j) by the
total number of effective patents data (j))

S3315
j=j+1

S3313
Calculate a logarithm of the WSA raw
score (j) (logarithm WSA raw score (j))

S3314
j<J
yes

no

S3316
Calculate an average (m) of the logarithm WSA raw score (j)

S3317
Calculate a standard deviation ($\sigma$) of the logarithm WSA
raw score (j)

S3318
Standardize logarithm WSA raw score (j) by the average (m)
and the standard deviation ($\sigma$)

S3319
Multiply the standardized logarithm WSA raw score (j) by 10

Make nonnegative (Add 50)
S3320

END

FIG. 30

Japanese Patents Registered in 1996

Legend:
- ◆ Average
- ▩ Score less than 45
- ▲ Score 45 or more and less than 55
- ✳ Score 55 or more and less than 65
- ✕ Score 65 or more and less than 75
- ● Score 75 or more

Maintenance ratio axis: 1.1, 1, 0.9, 0.8, 0.7, 0.6, 0.5, 0.4, 0.3

Years Maintained axis: 0, 2, 4, 6, 8, 10, 12

FIG. 31

SCORE DISTRIBUTION OF PATENTS
AWARDED PATENT CONTEST IN 2005–2007

Year 2005 : Average=70.1±5.5
Year 2006 : Average=66.9±8.7
Year 2007 : Average=65.6±8.9

RELATIVE VALUE OF
THE NUMBER OF CASES

PATENT SCORES

FIG. 32

SCORE DISTRIBUTION OF PATENTS INCLUDED IN PATENT POOL

DVD6C : Average=62.6±7.4
MPEGLA : Average=65.0±7.5
WCDMA : Average=64.1±7.5
ULDAGE : Average=63.7±6.8

SCORES

RELATIVE VALUE OF
THE NUMBER OF CASES

## INTERNATIONAL SEARCH REPORT

| | International application No. |
| --- | --- |
| | PCT/JP2007/071432 |

**A. CLASSIFICATION OF SUBJECT MATTER**
*G06Q50/00(2006.01)i*

According to International Patent Classification (IPC) or to both national classification and IPC

**B. FIELDS SEARCHED**

Minimum documentation searched (classification system followed by classification symbols)
G06Q50/00

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-28018 A (Kanebo, Ltd.),<br>30 January, 2001 (30.01.01),<br>Full text; Figs. 1 to 7<br>& WO 00/68847 A1          & EP 1215599 A1 | 1-11 |
| A | JP 2005-174313 A (Shinko Research Co., Ltd.),<br>30 June, 2005 (30.06.05),<br>Full text; Figs. 1 to 12<br>(Family: none) | 1-11 |
| A | WO 2004/061714 A1 (Intellectual Property Bank Corp.),<br>22 July, 2004 (22.07.04),<br>Full text; Figs. 1 to 49<br>& EP 1582999 A1          & US 2006/0122849 A1 | 1-11 |

| ☐ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 November, 2007 (14.11.07) | Date of mailing of the international search report<br>27 November, 2007 (27.11.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**EP 2 079 049 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004265305 A